# EUROPEAN PATENT APPLICATION

(11) **EP 3 618 318 A1**
(43) Date of publication of application: **04.03.2020**
(21) Application number: 18790811.6
(22) Date of filing: 08.02.2018
(51) Int. Cl.: H04J 14/02, H04B 10/27

(54) **TRANSMISSION DEVICE AND TRANSMISSION METHOD**

(30) Priority: 28.04.2017 JP 2017090426
(71) Applicant: Fujitsu Limited, Kawasaki-shi, Kanagawa 211-8588 (JP)
(72) Inventor: KATO, Tomoyuki, Kawasaki-shi Kanagawa 211-8588 (JP); HOSHIDA, Takeshi, Kawasaki-shi Kanagawa 211-8588 (JP); TAKEYAMA, Tomoaki, Kawasaki-shi Kanagawa 211-8588 (JP)
(74) Representative: Hoffmann Eitle
(86) International application number: PCT/JP2018/004366
(87) International publication number: WO 2018/198478

(57) **Abstract**

A transmission device transmits wavelength multiplexed light to a transmission line. The transmission device includes a first multiplexing unit, a second multiplexing unit, a wavelength conversion unit, and a third multiplexing unit. The first multiplexing unit multiplexes light of a wavelength of a first wavelength band and outputs first multiplexed light. The second multiplexing unit multiplexes the light of the wavelength of the first wavelength band and outputs second multiplexed light. The wavelength conversion unit converts the second multiplexed light into light of a wavelength of a second wavelength band different from the first wavelength band. The third multiplexing unit multiplexes the second multiplexed light converted to the light of the wavelength of the second wavelength band and the first multiplexed light, and outputs the wavelength multiplexed light.

## Description

### FIELD

The present invention relates to a transmission device and a transmission method.

### BACKGROUND

In recent years, with the expansion of demand for communication, for example, expansion of transmission capacity by an increase in the number of optical fiber cores, an increase in optical signal capacity per wavelength, and an increase in the number of wavelength division multiplexing (WDM) channels has been demanded.

However, since the laying cost or the like of the optical fiber is high, expansion of the transmission capacity by the increase in optical signal capacity and the increase in the number of WDM channels without increasing the number of optical fiber cores has been demanded. In transmission devices, for example, communication using an optical wavelength of a conventional band (C band) of 1530 nm to 1565 nm has been realized. However, there is a limit on expansion of the transmission capacity only using the C band.

Therefore, in the transmission devices, the transmission capacity is further expanded using not only the C band but also a communication band such as a long (L) band in a long wavelength range of 1565 nm to 1625 nm, for example, or a short (S) band of a short wavelength range of 1460 nm to 1530 nm, for example.

### CITATION LIST

### PATENT DOCUMENT

Patent Document 1: Japanese Laid-open Patent Publication No. 2003-188830
Patent Document 2: Japanese Laid-open Patent Publication No. 1-149593

### SUMMARY

### [TECHNICAL PROBLEM]

However, since optical components such as C-band, S-band, and L-band corresponding optical transmission and reception units, wavelength combining and demultiplexing units, and optical amplification units are individually developed, the cost becomes higher than a case where only optical components corresponding to one band are developed. Therefore, in the case of using a plurality of bands in the transmission devices, optical components corresponding to the respective bands are required, so not only the component cost but also the operation cost becomes high.

In one aspect, an object is to provide a transmission device and the like for expanding transmission capacity while reducing component cost.

### [SOLUTION TO PROBLEM]

A transmission device according to one aspect transmits wavelength multiplexed light to a transmission line. The transmission device includes a first multiplexing unit, a second multiplexing unit, a wavelength conversion unit, and a third multiplexing unit. The first multiplexing unit multiplexes light of a wavelength of a first wavelength band and outputs first multiplexed light. The second multiplexing unit multiplexes the light of the wavelength of the first wavelength band and outputs second multiplexed light. The wavelength conversion unit converts the second multiplexed light into light of a wavelength of a second wavelength band different from the first wavelength band. The third multiplexing unit multiplexes the second multiplexed light converted to the light of the wavelength of the second wavelength band and the first multiplexed light, and outputs the wavelength multiplexed light.

### [ADVANTAGEOUS EFFECTS OF INVENTION]

In one aspect, a transmission amount can be expanded while reducing component cost.

### BRIEF DESCRIPTION OF DRAWINGS

FIG. 1 is an explanatory diagram illustrating an example of a transmission system according to a first embodiment.
FIG. 2 is an explanatory diagram illustrating an example of a wavelength conversion unit for single polarized light and an excitation light source.
FIG. 3A is an explanatory diagram illustrating an example of a wavelength conversion operation of a first wavelength conversion unit.
FIG. 3B is an explanatory diagram illustrating an example of a wavelength conversion operation of a third wavelength conversion unit.
FIG. 4A is an explanatory diagram illustrating an example of a wavelength conversion operation of a second wavelength conversion unit.
FIG. 4B is an explanatory diagram illustrating an example of a wavelength conversion operation of a fourth wavelength conversion unit.
FIG. 5 is an explanatory diagram illustrating an example of a transmission system according to a second embodiment.
FIG. 6A is an explanatory diagram illustrating an example of input light without dispersion compensation of an optical reception unit.
FIG. 6B is an explanatory diagram illustrating an example of input light with dispersion compensation of the optical reception unit.
FIG. 7 is an explanatory diagram illustrating an example of a transmission system according to a third embodiment.
FIGs. 8A and 8B are explanatory diagrams illustrating an example of a transmission system according to a fourth embodiment.
FIG. 9 is an explanatory diagram illustrating an example of a connection configuration of a first excitation light source, a first wavelength conversion unit, and a seventh wavelength conversion unit.
FIGs. 10A and 10B are explanatory diagrams illustrating an example of a transmission system according to a fifth embodiment.
FIG. 11 is an explanatory diagram illustrating an example of a connection configuration of a seventh excitation light source, a seventh wavelength conversion unit, and a first wavelength conversion unit.
FIGs. 12A and 12B are explanatory diagrams illustrating an example of a transmission system according to a sixth embodiment.
FIGs. 13A and 13B are explanatory diagrams illustrating an example of a transmission system according to a seventh embodiment.
FIGs. 14A and 14B are explanatory diagrams illustrating an example of a transmission system according to an eighth embodiment.
FIGs. 15A and 15B are explanatory diagrams illustrating an example of a transmission system according to a ninth embodiment.
FIG. 16 is an explanatory diagram illustrating an example of a connection configuration of a second excitation light source for single polarized light, a first wavelength conversion unit, a second wavelength conversion unit, a seventh wavelength conversion unit, and an eighth wavelength conversion unit according to the ninth embodiment.
FIG. 17 is an explanatory diagram illustrating an example of a wavelength conversion unit for polarization multiplexed light and an excitation light source according to a tenth embodiment.
FIG. 18A is an explanatory diagram illustrating an example of a wavelength conversion operation of a first wavelength conversion unit according to the tenth embodiment.
FIG. 18B is an explanatory diagram illustrating an example of a wavelength conversion operation of a third wavelength conversion unit according to the tenth embodiment.
FIG. 19A is an explanatory diagram illustrating an example of a wavelength conversion operation of a second wavelength conversion unit according to the tenth embodiment.
FIG. 19B is an explanatory diagram illustrating an example of a wavelength conversion operation of a fourth wavelength conversion unit according to the tenth embodiment.
FIG. 20 is an explanatory diagram illustrating an example of a connection configuration of a first excitation light source for polarization multiplexed light, a first wavelength conversion unit, and a seventh wavelength conversion unit according to an eleventh embodiment.
FIG. 21 is an explanatory diagram illustrating an example of a connection configuration of a seventh excitation light source for polarization multiplexed light, a first wavelength conversion unit, and a seventh wavelength conversion unit according to a twelfth embodiment.
FIG. 22 is an explanatory diagram illustrating an example of a connection configuration of a second excitation light source for polarization multiplexed light, a first wavelength conversion unit, a second wavelength conversion unit, a seventh wavelength conversion unit, and an eighth wavelength conversion unit according to a thirteenth embodiment.
FIG. 23 is an explanatory diagram illustrating an example of a wavelength conversion unit for polarization multiplexed light and an excitation light source according to a fourteenth embodiment.
FIGs. 24A and 24B are explanatory diagrams illustrating an example of a transmission system according to a fifteenth embodiment.
FIG. 25 is an explanatory diagram illustrating an example of a connection configuration of a first excitation light source, a first wavelength conversion unit, and a fifth optical amplification unit.
FIG. 26 is an explanatory diagram illustrating an example of a connection configuration of a third excitation light source, a third wavelength conversion unit, and a sixth optical amplification unit.
FIGs. 27A and 27B are explanatory diagrams illustrating an example of a transmission system according to a sixteenth embodiment.
FIG. 28 is an explanatory diagram illustrating an example of a connection configuration of a first excitation light source, a first wavelength conversion unit, and a seventh optical amplification unit.
FIG. 29 is an explanatory diagram illustrating an example of a connection configuration of a third excitation light source, a third wavelength conversion unit, and an eighth optical amplification unit.
FIGs. 30A and 30B are explanatory diagrams illustrating an example of a transmission system according to a seventeenth embodiment.
FIG. 31 is an explanatory diagram illustrating an example of a connection configuration of a first excitation light source, a first wavelength conversion unit, and a ninth optical amplification unit.
FIG.32 is an explanatory diagram illustrating an example of a connection configuration of a third excitation light source, a third wavelength conversion unit, and a tenth optical amplification unit.
FIGs. 33A and 33B are explanatory diagrams illustrating an example of a transmission system according to an eighteenth embodiment.
FIGs. 34A and 34B are explanatory diagrams illustrating an example of a transmission system according to a nineteenth embodiment.
FIGs. 35A and 35B are explanatory diagrams illustrating an example of a transmission system according to a twentieth embodiment.
FIGs. 36A and 36B are explanatory diagrams illustrating an example of a transmission system according to a twenty-first embodiment.
FIGs. 37A and 37B are explanatory diagrams illustrating an example of a transmission system according to a twenty-second embodiment.
FIGs. 38A and 38B are explanatory diagrams illustrating an example of a transmission system according to a twenty-third embodiment.
FIGs. 39A and 39B are explanatory diagrams illustrating an example of a transmission system according to a twenty-fourth embodiment.
FIG. 40 is an explanatory diagram illustrating an example of an output of excitation light.

### DESCRIPTION OF EMBODIMENTS

Hereinafter, embodiments of a transmission device and a transmission method disclosed in the present application will be described in detail on the basis of the drawings. Note that the disclosed technology is not limited by the embodiments. Further, the embodiments described below may be appropriately combined as long as no contradiction occurs.

### [First Embodiment]

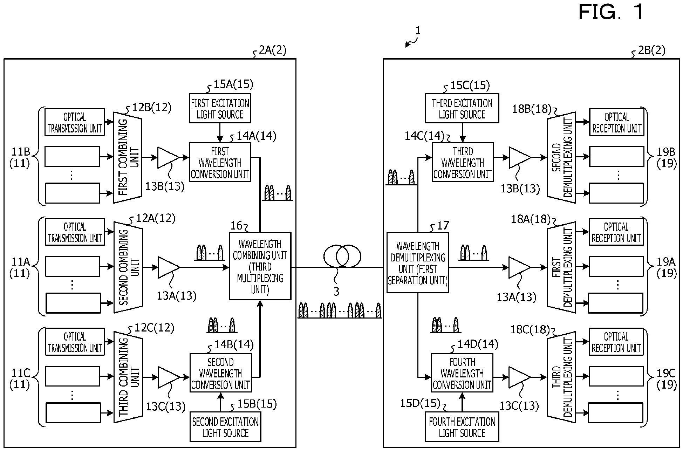

FIG. 1 is an explanatory diagram illustrating an example of a transmission system 1 according to a first embodiment. The transmission system 1 illustrated in FIG. 1 includes a first transmission device 2A, a second transmission device 2B, and a transmission line 3 such as optical fiber for transmitting wavelength multiplexed light between the first transmission device 2A and the second transmission device 2B. The first transmission device 2A includes a plurality of optical transmission units 11, a plurality of combining units 12, a plurality of optical amplification units 13, a plurality of wavelength conversion units 14, a plurality of excitation light sources 15, and a wavelength combining unit 16.

The plurality of optical transmission units 11 includes a plurality of optical transmission units 11A corresponding to a first group, a plurality of optical transmission units 11B corresponding to a second group, and a plurality of optical transmission units 11C corresponding to a third group. The number of the optical transmission units 11A of the first group is, for example, N, and the optical transmission units 11A respectively transmit first light of different wavelengths within a C-band wavelength range (for example, 1530 nm to 1565 nm). The number of the optical transmission units 11B of the second group is, for example, X, and the optical transmission units 11B respectively transmit second light of different wavelengths within the C-band wavelength range. Furthermore, the number of the optical transmission units 11C of the third group is, for example, Y, and the optical transmission units 11C respectively transmit third light of different wavelengths within the C-band wavelength range. Note that the optical transmission unit 11A, the optical transmission unit 11B, and the optical transmission unit 11C are C-band corresponding optical transmission units 11.

The plurality of combining units 12 includes, for example, a first combining unit 12A corresponding to the first group, a second combining unit 12B corresponding to the second group, and a third combining unit 12C corresponding to the third group. The plurality of optical amplification units 13 includes a first optical amplification unit 13A corresponding to the first group, a second optical amplification unit 13B corresponding to the second group, and a third optical amplification unit 13C corresponding to the third group. The wavelength conversion unit 14 causes a nonlinear optical medium to propagate multiplexed light and excitation light to convert the multiplexed light into multiplexed light of an arbitrary wavelength band. The plurality of wavelength conversion units 14 includes a first wavelength conversion unit 14A corresponding to the second group and a second wavelength conversion unit 14B corresponding to the third group. The plurality of excitation light sources 15 includes a first excitation light source 15A that supplies excitation light to the first wavelength conversion unit 14A corresponding to the second group, and a second excitation light source 15B that supplies excitation light to the second wavelength conversion unit 14B corresponding to the third group.

The first combining unit 12A is a first multiplexing unit that multiplexes first light from the optical transmission units 11A in the first group and outputs first multiplexed light in which the first light is multiplexed to the first optical amplification unit 13A. The transmission wavelength of each port of the first combining unit 11A is designed in accordance with the band of the first light output from the optical transmission units 11A. In the present embodiment, the transmission band of each port is designed in accordance with the C band. The first optical amplification unit 13A optically amplifies the first multiplexed light from the first combining unit 12A, and outputs the first multiplexed light after optical amplification to the wavelength combining unit 16. Note that the first multiplexed light is multiplexed light of the C band that is a first wavelength band.

The second combining unit 12B is a second multiplexing unit that multiplexes second light from the optical transmission units 11B in the second group and outputs second multiplexed light in which the second light is multiplexed to the second optical amplification unit 13B. The transmission wavelength of each port of the second combining unit 12B is designed in accordance with the band of the second light output from the optical transmission units 11B. In the present embodiment, the transmission band of each port is designed in accordance with the C band. The second optical amplification unit 13B optically amplifies the second multiplexed light from the second combining unit 12B, and outputs the second multiplexed light after optical amplification to the first wavelength conversion unit 14A. Note that the second multiplexed light is C-band multiplexed light. The first wavelength conversion unit 14A converts the C-band second multiplexed light from the second optical amplification unit 13B into L-band second multiplexed light, and outputs the second multiplexed light after wavelength conversion to the wavelength combining unit 16. Note that the L-band wavelength range that is a second wavelength band is, for example, a long wavelength range of 1565 nm to 1625 nm.

The third combining unit 12C is the second multiplexing unit that multiplexes third light from the optical transmission units 11C in the third group and outputs third multiplexed light in which the third light is multiplexed to the third optical amplification unit 13C. The transmission wavelength of each port of the third combining unit 12C is designed in accordance with the band of the third light output from the optical transmission units 11C. In the present embodiment, the transmission band of each port is designed in accordance with the C band. The third optical amplification unit 13C optically amplifies the third multiplexed light from the third combining unit 12C, and outputs the third multiplexed light after optical amplification to the second wavelength conversion unit 14B. Note that the third multiplexed light is C-band multiplexed light. The second wavelength conversion unit 14B converts the C-band third multiplexed light from the third optical amplification unit 13C into S-band third multiplexed light, and outputs the third multiplexed light after wavelength conversion to the wavelength combining unit 16. Note that the S-band wavelength range that is the second wavelength band, is, for example, a short wavelength range of 1460 nm to 1530 nm. The wavelength combining unit 16 is a third multiplexing unit that outputs multiplexed light in which the C-band first multiplexed light, the L-band second multiplexed light, and the S-band third multiplexed light are combined to the transmission line 3.

As described above, since all the designs of the transmission bands of the ports of the combining unit 12 can be matched with the C band, common components can be used in the combining unit 12.

The second transmission device 2B includes a wavelength demultiplexing unit 17, a plurality of wavelength conversion units 14, a plurality of excitation light sources 15, a plurality of optical amplification units 13, a plurality of demultiplexing units 18, and a plurality of optical reception units 19. The plurality of wavelength conversion units 14 includes a third wavelength conversion unit 14C corresponding to the second group and a fourth wavelength conversion unit 14D corresponding to the third group. The plurality of excitation light sources 15 includes a third excitation light source 15C that supplies excitation light to the third wavelength conversion unit 14C corresponding to the second group, and a fourth excitation light source 15D that supplies excitation light to the fourth wavelength conversion unit 14D corresponding to the third group.

The plurality of optical amplification units 13 includes a first optical amplification unit 13A corresponding to the first group, a second optical amplification unit 13B corresponding to the second group, and a third optical amplification unit 13C corresponding to the third group. The first multiplexed light, the second multiplexed light, and the third multiplexed light of the C band are respectively input to the optical amplification units 13. Therefore, an erbium doped optical fiber amplifier (EDFA) capable of efficiently amplifying light of the C-band wavelength is applied. The plurality of demultiplexing units 18 includes a first demultiplexing unit 18A corresponding to the first group, a second demultiplexing unit 18B corresponding to the second group, and a third demultiplexing unit 18C corresponding to the third group. The plurality of optical reception units 19 includes a plurality of optical reception units 19A corresponding to the first group, a plurality of optical reception units 19B corresponding to the second group, and a plurality of optical reception units 19C corresponding to the third group. Note that the optical reception unit 19A, the optical reception unit 19B, and the optical reception unit 19C are optical reception units corresponding to the C band.

The wavelength demultiplexing unit 17 is a first separation unit that demultiplexes the multiplexed light from the transmission line 3 into the C-band first multiplexed light, the L-band second multiplexed light, and the S-band third multiplexed light. The wavelength demultiplexing unit 17 outputs the demultiplexed C-band first multiplexed light to the first optical amplification unit 13A. The first optical amplification unit 13A optically amplifies the C-band first multiplexed light from the wavelength demultiplexing unit 17, and outputs the optically amplified C-band first multiplexed light to the first demultiplexing unit 18A. The first demultiplexing unit 18A is a second separation unit that demultiplexes the C-band first multiplexed light from the first optical amplification unit 13A into the first light, and outputs the first light to the optical reception units 19A. The transmission band of each output port of the first demultiplexing unit 18A is designed in accordance with the band of the wavelength received by the connected optical reception unit 19A. Since the band of the wavelength received by the optical reception unit 19A is the C band, the transmission band is designed in accordance with the wavelength of the C band.

The wavelength demultiplexing unit 17 outputs the demultiplexed L-band second multiplexed light to the third wavelength conversion unit 14C. The third wavelength conversion unit 14C causes a nonlinear optical medium 33 to propagate the excitation light from the third excitation light source 15C and the L-band second multiplexed light to convert the L-band second multiplexed light into the C-band second multiplexed light, and outputs the C-band second multiplexed light after wavelength conversion to the second optical amplification unit 13B. The second optical amplification unit 13B optically amplifies the C-band second multiplexed light from the third wavelength conversion unit 14C, and outputs the C-band second multiplexed light after optical amplification to the second demultiplexing unit 18B. The second demultiplexing unit 18B is a third separation unit that demultiplexes the C-band second multiplexed light from the second optical amplification unit 13B into the second light, and outputs the second light to the optical reception units 19B. The transmission band of each output port of the second demultiplexing unit 18B is designed in accordance with the band of the wavelength received by the connected optical reception unit 19B. Since the band of the wavelength received by the optical reception unit 19B is the C band, the transmission band is designed in accordance with the wavelength of the C band.

The wavelength demultiplexing unit 17 outputs the demultiplexed S-band third multiplexed light to the fourth wavelength conversion unit 14D. The fourth wavelength conversion unit 14D causes the nonlinear optical medium 33 to propagate the excitation light from the fourth excitation light source 15D and the S-band fourth multiplexed light to convert the S-band third multiplexed light into C-band third multiplexed light, and outputs the C-band third multiplexed light after wavelength conversion to the third optical amplification unit 13C. The third optical amplification unit 13C optically amplifies the C-band third multiplexed light from the fourth wavelength conversion unit 14D, and outputs the C-band third multiplexed light after optical amplification to the third demultiplexing unit 18C. The third demultiplexing unit 18C is a third separation unit that demultiplexes the C-band third multiplexed light from the third optical amplification unit 13C into the third light, and outputs the third light to the optical reception units 19C. The transmission band of each output port of the third demultiplexing unit 18C is designed in accordance with the band of the wavelength received by the connected optical reception unit 19C. Since the band of the wavelength received by the optical reception unit 19C is the C band, the transmission band is designed in accordance with the wavelength of the C band.

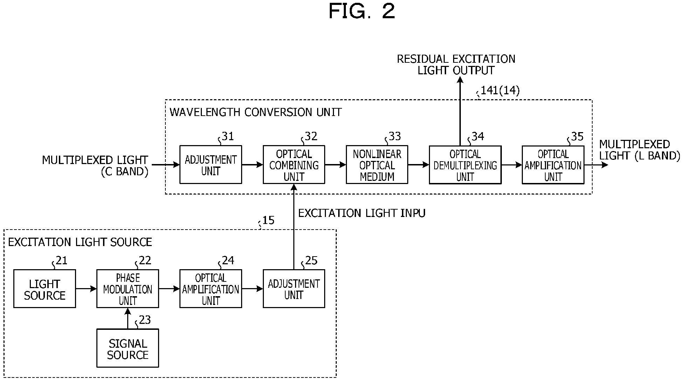

FIG. 2 is an explanatory diagram illustrating an example of the wavelength conversion unit 14 for single polarized light and the excitation light source 15. The excitation light source 15 illustrated in FIG. 2 includes a light source 21, a phase modulation unit 22, a signal source 23, an optical amplification unit 24, and an adjustment unit 25. The light source 21 is a laser diode (LD) that outputs excitation light. The signal source 23 outputs an electrical signal of a predetermined frequency. The phase modulation unit 22 modulates the phase of the excitation light from the light source 21 with the electrical signal from the signal source 23, and outputs the excitation light after phase modulation to the optical amplification unit 24. The optical amplification unit 24 optically amplifies the excitation light after phase modulation, and outputs the excitation light after optical amplification to the adjustment unit 25. The adjustment unit 25 adjusts light intensity of the excitation light after optical amplification, and outputs the excitation light after adjustment to the wavelength conversion unit 14.

The wavelength conversion unit 14 is a wavelength conversion unit 141 for single polarized light. The wavelength conversion unit 141 includes an adjustment unit 31, an optical combining unit 32, the nonlinear optical medium 33, an optical demultiplexing unit 34, and an optical amplification unit 35. The adjustment unit 31 adjusts the light intensity of light, and outputs the light after adjustment to the optical combining unit 32. The optical combining unit 32 combines the excitation light from the excitation light source 15 and the light after adjustment, and outputs the excitation light and the light after combining to the nonlinear optical medium 33. The nonlinear optical medium 33 propagates the excitation light and the light from the optical combining unit 32 to convert the light into light of a desired wavelength band. Then, the optical demultiplexing unit 34 demultiplexes and outputs residual excitation light that is transmitted light of the excitation light used for wavelength conversion and the light from the light after wavelength conversion in the nonlinear optical medium 33. Note that the residual excitation light includes the excitation light of the excitation light source 15. Furthermore, the optical amplification unit 35 optically amplifies the light demultiplexed by the optical demultiplexing unit 34 in units of wavelength and outputs the light after optical amplification. The optical amplification unit 35 amplifies the multiplexed light with optical power reduced after wavelength conversion. In the case of the present embodiment, since the L-band multiplexed light is amplified, not a C-band EDFA but an L-band EDFA or a lumped Raman amplifier having the wavelength of the excitation light of 1465 nm to 1525 nm is used.

Among the wavelengths of L band, S band, and C band, the C band has the smallest power loss, and the L band and the S band have a larger power loss than the C band. Therefore, by amplifying the light after converted into the L band and S band, the influence of the power loss larger than the C-band power loss can be reduced.

In the present embodiment, the wavelength conversion unit 14 converts the C-band multiplexed light into the L-band multiplexed light, but in the case where the wavelength conversion unit 14 converts the C-band multiplexed light into the S-band multiplexed light, the optical amplification unit 35 uses a lumped Raman amplifier having the wavelength of the excitation light of 1360 nm to 1430 nm is used.

In addition, as a problem of the S band, there is a phenomenon called stimulated Raman scattering (SRS). In SRS, the power of short wavelength light shifts to long wavelength light, the S-band light sometimes shifts to the L-band. As a result, the loss of the S band becomes large in the case where the S band, C band, and L band are simultaneously transmitted. Therefore, in the case of amplifying the light converted into the light of S-band wavelength by the optical amplification unit 35, amplification with a higher amplification factor than amplification factors of the L-band and C-band wavelengths is required. Therefore, the influence of the power loss due to SRS can be reduced by increasing the excitation light power.

Note that the optical amplification unit 35 does not necessarily need to be located in the wavelength conversion unit 14, and may be provided between the wavelength conversion unit 14 and the wavelength combining unit 16.

Note that, since wavelength conversion unit 14 has the same configuration as the first wavelength conversion unit 14A, the second wavelength conversion unit 14B, the third wavelength conversion unit 14C, and the fourth wavelength conversion unit 14D, description of overlapping configurations and operations is omitted by providing the same reference numerals for the sake of convenience of description. Further, since the excitation light source 15 has the same configuration as the first excitation light source 15A, the second excitation light source 15B, the third excitation light source 15C, and the fourth excitation light source 15D, description of overlapping configurations and operations is omitted by providing the same reference numerals for the sake of convenience of description.

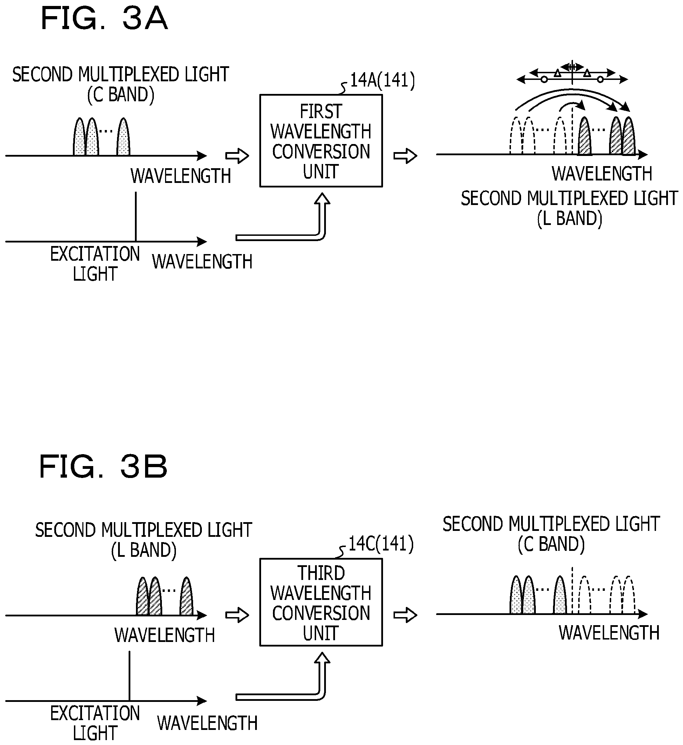

FIG. 3A is an explanatory diagram illustrating an example of an operation of the first wavelength conversion unit 14A. The first wavelength conversion unit 14A causes the nonlinear optical medium 33 to propagate the C-band second multiplexed light from the second optical amplification unit 13B and the excitation light from the first excitation light source 15A to convert the C-band second multiplexed light into the L-band second multiplexed light. As a result, the first wavelength conversion unit 14A is in the relationship of degenerate four-wave mixing of converting the C-band second multiplexed light symmetrically to the L-band second multiplexed light, centering on the light wavelength of the excitation light.

Furthermore, FIG. 3B is an explanatory diagram illustrating an example of an operation of the third wavelength conversion unit 14C. The third wavelength conversion unit 14C causes the nonlinear optical medium 33 to propagate the L-band second multiplexed light from the wavelength demultiplexing unit 17 and the excitation light from the third excitation light source 15C to convert the L-band second multiplexed light into the C-band second multiplexed light. As a result, the third wavelength conversion unit 14C is in the relationship of degenerate four-wave mixing of converting the L-band second multiplexed light symmetrically to the C-band second multiplexed light, centering on the light wavelength of the excitation light.

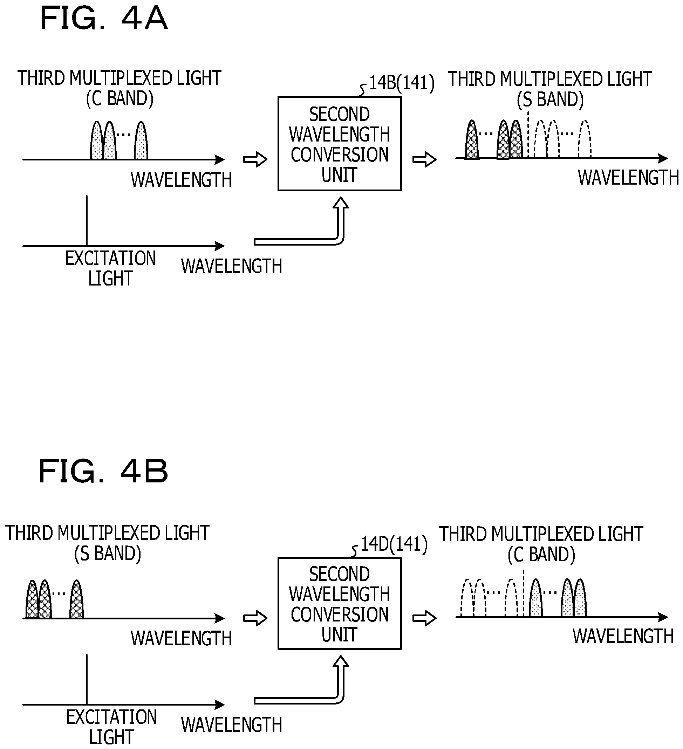

FIG. 4A is an explanatory diagram illustrating an example of an operation of the second wavelength conversion unit 14B. The second wavelength conversion unit 14B causes the nonlinear optical medium 33 to propagate the C-band third multiplexed light from the third optical amplification unit 13C and the excitation light from the third excitation light source 15C to convert the C-band third multiplexed light into the S-band third multiplexed light.

As a result, the second wavelength conversion unit 14B is in the relationship of degenerate four-wave mixing of converting the C-band third multiplexed light symmetrically to the S-band third multiplexed light, centering on the light wavelength of the excitation light.

Furthermore, FIG. 4B is an explanatory diagram illustrating an example of an operation of the fourth wavelength conversion unit 14D. The fourth wavelength conversion unit 14D causes the nonlinear optical medium 33 to propagate the S-band third multiplexed light from the wavelength demultiplexing unit 17 and the excitation light from the fourth excitation light source 15D to convert the S-band third multiplexed light into the C-band third multiplexed light. As a result, the fourth wavelength conversion unit 14D is in the relationship of degenerate four-wave mixing of converting the S-band third multiplexed light symmetrically to the C-band third multiplexed light, centering on the light wavelength of the excitation light.

The first combining unit 12A in the first transmission device 2A multiplexes the first light from the optical transmission unit 11A corresponding to the first group, and outputs the C-band first multiplexed light to the wavelength combining unit 16. Furthermore, the second combining unit 12B multiplexes the second light from the optical transmission unit 11B corresponding to the second group, and outputs the C-band second multiplexed light to the first wavelength conversion unit 14A. The first wavelength conversion unit 14A converts the C-band second multiplexed light into the L-band second multiplexed light, and outputs the L-band second multiplexed light after wavelength conversion to the wavelength combining unit 16. Furthermore, the third combining unit 12C multiplexes the third light from the optical transmission unit 11C corresponding to the third group, and outputs the C-band third multiplexed light to the second wavelength conversion unit 14B. The second wavelength conversion unit 14A converts the C-band third multiplexed light into the S-band third multiplexed light, and outputs the S-band third multiplexed light after wavelength conversion to the wavelength combining unit 16.

The wavelength combining unit 16 outputs the multiplexed light in which the C-band first multiplexed light, the L-band second multiplexed light, and the S-band third multiplexed light are combined to the transmission line 3. As a result, the first transmission device 2A converts the C-band multiplexed light from the optical transmission units 11 of the second and third groups into the L-band and S-band multiplexed light and transmits the L-band and S-band multiplexed light to the transmission line 3. As a result, since bands such as the L band and the S band different from the C band are used at the time of transmission, the transmission capacity can be greatly expanded compared to the C band alone. Furthermore, since the optical transmission units 11 of the first to third groups can be configured by the same C-band optical transmission units 11 and optical components, the product cost and operation cost can be decreased.

Furthermore, the wavelength demultiplexing unit 17 in the second transmission device 2B demultiplexes the multiplexed light from the transmission line 3 into the C-band first multiplexed light, the L-band second multiplexed light, and the S-band third multiplexed light. The wavelength demultiplexing unit 17 demultiplexes and outputs the C-band first multiplexed light to the first demultiplexing unit 18A, the L-band second multiplexed light to the third wavelength conversion unit 14C, and the S-band third multiplexed light to the fourth wavelength conversion unit 14D. The third wavelength conversion unit 14C converts the L-band second multiplexed light into the C-band second multiplexed light, and outputs the C-band second multiplexed light after wavelength conversion to the second demultiplexing unit 18B. The fourth wavelength conversion unit 14D converts the S-band third multiplexed light into the C-band third multiplexed light, and outputs the C-band third multiplexed light after wavelength conversion to the third demultiplexing unit 18C. The first demultiplexing unit 18A demultiplexes and outputs the C-band first multiplexed light to the optical reception units 19A. The second demultiplexing unit 18B demultiplexes and outputs the C-band second multiplexed light to the optical reception units 19B. The third demultiplexing unit 18C demultiplexes and outputs the C-band third multiplexed light to the optical reception units 19C. As a result, since the optical reception units 19 and optical components of the first to third groups can be configured by C-band optical components in the second transmission device 2B, the product cost and operation cost can be decreased.

That is, in the transmission system 1 according to the first embodiment, to realize wavelength multiplex communication in different bands from the first transmission device 2A to the second transmission device 2B, the optical components such as the common optical transmission units 11, optical reception units 19, and optical amplification units 13 are used without using optical components of individual bands. As a result, the transmission devices 2 can be configured by cheaper optical components.

Note that, in the transmission system 1 of the above first embodiment, for example, a wavelength dispersion amount on the transmission line 3 of the L-band second multiplexed light is larger than that of the C-band second multiplexed light, and in the case of adopting a standard C-band optical reception unit for the optical reception unit 19B, dispersion tolerance may become insufficient. Therefore, an embodiment of a transmission system 1 for coping with such a situation will be described below as a second embodiment.

### [Second Embodiment]

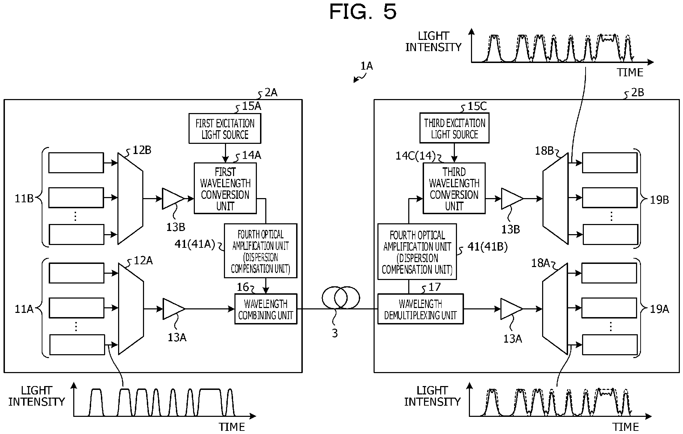

FIG. 5 is an explanatory diagram illustrating an example of a transmission system 1A according to a second embodiment. Note that, for the sake of convenience of description, description of overlapping configurations and operations is omitted by providing the same reference numerals to the same configurations as those of the transmission system 1 of the first embodiment. Further, since flows of third multiplexed light from an optical transmission unit 11C to a second wavelength conversion unit 14B and third multiplexed light from a wavelength demultiplexing unit 17 to an optical reception unit 19C are S-band multiplexed light, description of the third multiplexed light is omitted for the sake of convenience of description.

A first transmission device 2A illustrated in FIG. 5 has a fourth optical amplification unit 41A (41) arranged between a first wavelength conversion unit 14A and a wavelength combining unit 16. The fourth optical amplification unit 41A includes a dispersion compensation unit that compensates a wavelength dispersion amount of L-band second multiplexed light from the first wavelength conversion unit 14A. Furthermore, the second transmission device 2B has a fourth optical amplification unit 41B (41) arranged between the wavelength demultiplexing unit 17 and a third wavelength conversion unit 14C. The fourth optical amplification unit 41B includes a dispersion compensation unit that compensates the wavelength dispersion amount of the L-band second multiplexed light from the wavelength demultiplexing unit 17.

The fourth optical amplification unit 41A compensates the wavelength dispersion amount of the L-band second multiplexed light from the first wavelength conversion unit 14A, and outputs the second multiplexed light after dispersion compensation to the wavelength combining unit 16. Note that the fourth optical amplification unit 41A compensates the wavelength dispersion amount in the L-band second multiplexed light to make an insufficient amount of the dispersion tolerance on an optical reception unit 19B side small. The wavelength combining unit 16 outputs multiplexed light in which the L-band second multiplexed light after wavelength dispersion amount compensation and C-band first multiplexed light are multiplexed to a transmission line 3.

The fourth optical amplification unit 41B compensates the wavelength dispersion amount of the L-band second multiplexed light from the wavelength demultiplexing unit 17, and outputs the L-band second multiplexed light after compensation to the third wavelength conversion unit 14C. Note that the fourth optical amplification unit 41B compensates the wavelength dispersion amount in the L-band second multiplexed light to make the insufficient amount of the dispersion tolerance on the optical reception unit 19B side smaller. The third wavelength conversion unit 14C converts the L-band second multiplexed light into C-band second multiplexed light, and outputs the C-band second multiplexed light to a second optical amplification unit 13B. The second optical amplification unit 13B optically amplifies the C-band second multiplexed light, and outputs the second multiplexed light after optical amplification to a second demultiplexing unit 18B. The second demultiplexing unit 18B demultiplexes and outputs the second multiplexed light after optical amplification to the optical reception unit 19B.

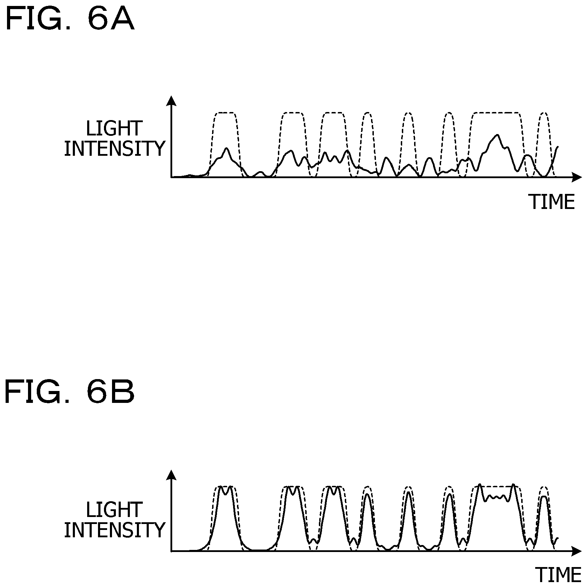

FIG. 6A is an explanatory diagram illustrating an example of input light without dispersion compensation of the optical reception unit 19B. FIG. 6B is an explanatory diagram illustrating an example of input light with dispersion compensation of the optical reception unit 19B. The input light illustrated in FIG. 6A is second light in the case of demultiplexing the C-band second multiplexed light after wavelength conversion in the third wavelength conversion unit 14C, in a state without dispersion compensation of the fourth optical amplification units 41A and 41B. Since the amount of dispersion tolerance is insufficient for the input light, an optical level is lowered and the input light is in an unreceivable state by the optical reception unit 19B.

In contrast, the input light illustrated in FIG. 6B is second light in the case of demultiplexing the C-band second multiplexed light after wavelength conversion in the third wavelength conversion unit 14C, in a state with dispersion compensation of the fourth optical amplification units 41A and 41B. Since the insufficient amount of dispersion tolerance is compensated, the optical level is in a range of reception acceptable level and thus the input light is in a receivable state by the optical reception unit 19B.

In the transmission system 1A according to the second embodiment, the dispersion amount of the L-band second multiplexed light is compensated between the first wavelength conversion unit 14 and the third wavelength conversion unit 14C. Therefore, the situation where the dispersion tolerance becomes insufficient in the L band can be avoided. For example, the wavelength conversion unit 14 or a medium for amplification immediately after the wavelength conversion unit 14 can be made to have dispersion of a reverse code of the transmission line 3 to partially compensate the wavelength dispersion.

The L band has larger wavelength dispersion than C band and S band. Therefore, the present embodiment provided with the wavelength dispersion unit is particularly effective in the case of converting a predetermined wavelength into the L-band wavelength.

Note that the examples in FIG. 6 are expressed by an on-off keying (OOK) signal, but the examples do not depend on a modulation system. In the examples in FIGS. 5 and 6, for the sake of convenience of description, the waveform of the second multiplexed light receivable by the optical reception unit 19B is made to a waveform close to an output of the optical transmission unit 11B, and the waveform of the second multiplexed light unreceivable by the optical reception unit 19B is made to a waveform largely different from the output of the optical transmission unit 11B. However, in actual digital coherent reception, even waveforms that are seemingly indistinguishable can be received.

Although the fourth optical amplification unit 41A is arranged between the first wavelength conversion unit 14A and the wavelength combining unit 16 in the transmission system 1A according to the second embodiment, the dispersion compensation unit may be arranged between the second optical amplification unit 13B and the first wavelength conversion unit 14A in the first transmission device 2A. Further, the dispersion compensation unit may be provided inside the first wavelength conversion unit 14A or at a preceding stage of the first wavelength conversion unit 14A.

Further, the fourth optical amplification unit 41B is arranged between the wavelength demultiplexing unit 17 and the third wavelength conversion unit 14C in the second transmission device 2B. However, the fourth optical amplification unit 41B may be eliminated. In this case, the fourth optical amplification unit 41A compensates the dispersion amount to make the insufficient amount of dispersion tolerance of the L-band second multiplexed light on the optical reception unit 19B side small.

The wavelength conversion unit 14 causes a nonlinear optical medium 33 to propagate multiplexed light and excitation light to convert the multiplexed light into light of an arbitrary wavelength band. Excitation light of FM modulation (or PM modulation) may be used. In this case, the excitation light of FM modulation can suppress stimulated Brillouin scattering (SBS). However, in the case where the excitation light of the wavelength conversion unit 14 is FM-modulated, the multiplexed light after wavelength conversion also varies in wavelength in the wavelength conversion unit 14. As a result, there is a possibility of exceeding wavelength variation tolerance of the optical reception unit 19. Therefore, an embodiment of a transmission system 1B for coping with such a situation will be described below as a third embodiment.

### [Third Embodiment]

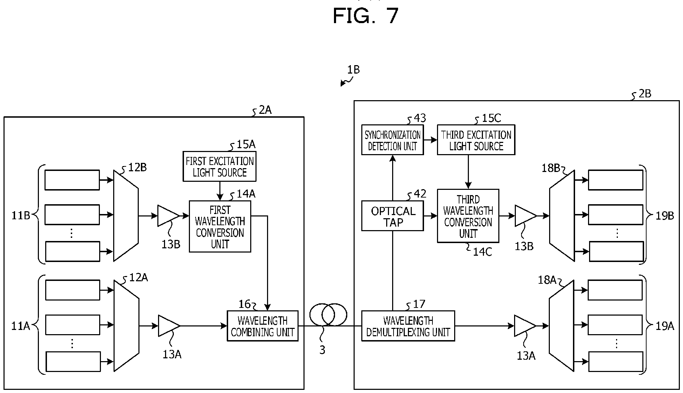

FIG. 7 is an explanatory diagram illustrating an example of the transmission system 1B according to the third embodiment. Note that, for the sake of convenience of description, description of overlapping configurations and operations is omitted by providing the same reference numerals to the same configurations as those of the transmission system 1A of the first embodiment. Further, since flows of third multiplexed light from an optical transmission unit 11C to a second wavelength conversion unit 14B and third multiplexed light from a wavelength demultiplexing unit 17 to an optical reception unit 19C are S-band multiplexed light, and have the same operation as L-band multiplexed light, description of the third multiplexed light is omitted for the sake of convenience of description.

A first wavelength conversion unit 14A FM-modulates excitation light from a first excitation light source 15A and causes a nonlinear optical medium 33 to propagate the excitation light after FM modulation and second multiplexed light to convert C-band second multiplexed light into L-band second multiplexed light. Then, the first wavelength conversion unit 14A outputs the L-band second multiplexed light after wavelength conversion to a wavelength combining unit 16.

The second transmission device 2B includes an optical tap 42 and a synchronization detection unit 43. The optical tap 42 is arranged between the wavelength demultiplexing unit 17 and a third wavelength conversion unit 14C. The optical tap 42 optically branches the L-band second multiplexed light demultiplexed by the wavelength demultiplexing unit 17 to the synchronization detection unit 43 and the third wavelength conversion unit 14C. The synchronization detection unit 43 extracts an FM component included in the L-band second multiplexed light or an FM component included in residual excitation light. The synchronization detection unit 43 synchronizes the FM component extracted from the L-band second multiplexed light or the residual excitation light with a signal source 23 of a third excitation light source 15C, thereby outputting the excitation light after FM conversion to the third wavelength conversion unit 14C. Note that the excitation light after FM conversion from the third excitation light source 15C is an optical signal canceling wavelength variation (frequency variation) of the excitation light after FM conversion from the first excitation light source 15A. The synchronization detection unit 43 detects a phase of the L-band second multiplexed light or the residual excitation light from the optical tap 42, and outputs a timing signal to the signal source 23 of the third excitation light source 15C according to the phase-detected FM component.

The third wavelength conversion unit 14C causes the nonlinear optical medium 33 to propagate the L-band second multiplexed light from the optical tap 42 and the excitation light after FM modulation from the third excitation light source 15C to convert the L-band second multiplexed light into the C-band second multiplexed light. At this time, in the nonlinear optical medium 33, the wavelength variation of the FM modulation from the first excitation light source 15A in the second multiplexed light is canceled with the FM modulation of the third excitation light source 15C. Then, the third wavelength conversion unit 14C outputs the C-band second multiplexed light after wavelength conversion to a second optical amplification unit 13B.

In the transmission system 1B according to the third embodiment, although SBS of the excitation light to be used for the first wavelength conversion unit 14A can be suppressed with the excitation light after FM modulation from the first excitation light source 15A, the wavelength of the L-band second multiplexed light after conversion also varies in the first wavelength conversion unit 14A. Therefore, in the transmission system 1B, the wavelength variation of the second multiplexed light is canceled with the excitation light after FM modulation from the third excitation light source 15C, in the third wavelength conversion unit 14C for converting the L-band second multiplexed light into the C-band second multiplexed light. As a result, the situation of exceeding wavelength variation tolerance of the optical reception unit 19B can be avoided.

Since the residual excitation light of the first excitation light source 15A is caused to flow into the transmission line 3 as it is, the synchronization detection unit 43 detects the FM component included in the residual excitation light, and the excitation light after FM modulation is output from the third excitation light source 15C synchronized with the detected FM component to the third wavelength conversion unit 14C.

However, for example, the synchronization timing is not limited to the synchronization timing detected from the second multiplexed light or the residual excitation light. The synchronization timing may be provided in notification to the synchronization detection unit 43 using another channel such as an optical supervisor channel (OSC) between the first transmission device 2A and the second transmission device 2B.

Further, SBS suppression modulation of the excitation light of the third excitation light source 15C may be reversely modulated at phase timing to substantially cancel the influence of SBS suppression modulation between the first transmission device 2A and the second transmission device 2B, in consideration of a group delay between a wavelength of transferring a synchronization signal and a wavelength of signal light.

Each wavelength conversion unit 14 in the transmission system 1 of the first embodiment includes the excitation light source 15, and causes the nonlinear optical medium 33 to propagate the excitation light and the multiplexed light to convert the wavelength of the multiplexed light. However, in the case of providing the excitation light source 15 for each wavelength conversion unit 14, not only the number of components and the amount of power but also component sizes and component cost increase. Therefore, to solve the situation, an embodiment will be described below as a fourth embodiment.

### [Fourth Example]

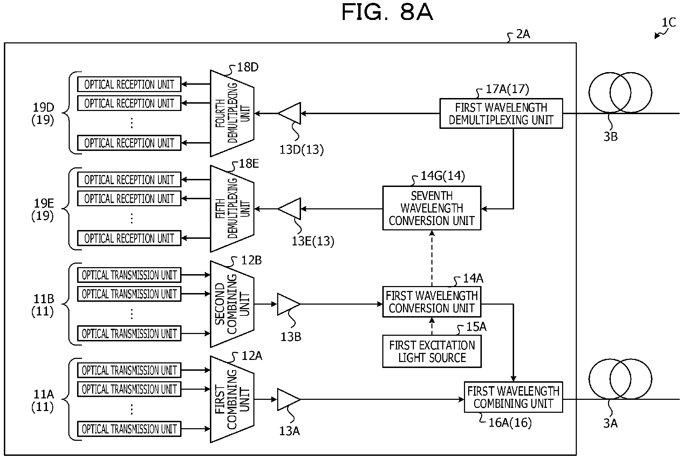

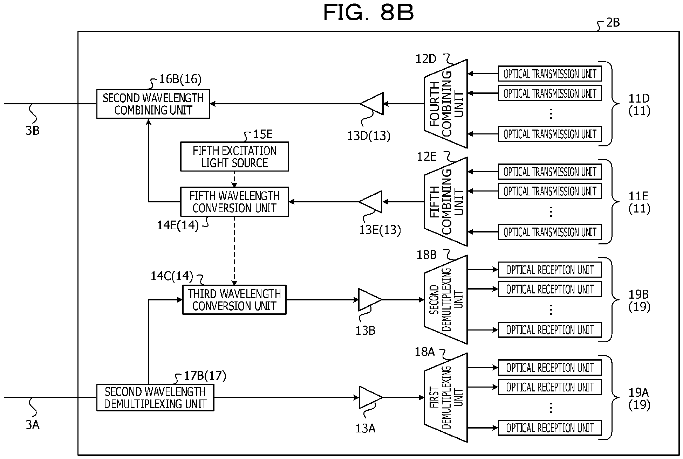

FIGs. 8A and 8B are explanatory diagrams illustrating an example of the transmission system 1C according to the fourth embodiment. Note that, for the sake of convenience of description, description of overlapping configurations and operations is omitted by providing the same reference numerals to the same configurations as those of the transmission system 1 of the first embodiment. Further, since flows of third multiplexed light from an optical transmission unit 11C to a second wavelength conversion unit 14B and third multiplexed light from a wavelength demultiplexing unit 17 to an optical reception unit 19C are S-band multiplexed light, and have the same operation as L-band multiplexed light, description of the third multiplexed light is omitted for the sake of convenience of description.

A first transmission device 2A includes a plurality of optical transmission units 11A, a plurality of optical transmission units 11B, a first combining unit 12A, a second combining unit 12B, a first optical amplification unit 13A, a second optical amplification unit 13B, and a first wavelength conversion unit 14A. The first transmission device 2A includes a first excitation light source 15A and a first wavelength combining unit 16A. The first transmission device 2A includes a first wavelength demultiplexing unit 17A, a seventh wavelength conversion unit 14G, a fourth optical amplification unit 13D, a fifth optical amplification unit 13E, a fourth demultiplexing unit 18D, a fifth demultiplexing unit 18E, a plurality of optical reception units 19D, and a plurality of optical reception units 19E. The first excitation light source 15A supplies excitation light to the first wavelength conversion unit 14A. Further, the first wavelength conversion unit 14A supplies residual excitation light that is transmitted light used for wavelength conversion to the seventh wavelength conversion unit 14G. The seventh wavelength conversion unit 14G executes wavelength conversion using the residual excitation light from the first wavelength conversion unit 14A.

A second transmission device 2B includes a second wavelength demultiplexing unit 17B, a third wavelength conversion unit 14C, a first optical amplification unit 13A, a second optical amplification unit 13B, a first demultiplexing unit 18A, a second demultiplexing unit 18B, a plurality of optical reception units 19A, and a plurality of optical reception units 19B. The second transmission device 2B includes a plurality of optical transmission units 11D, a plurality optical transmission units 11E, a fourth combining unit 12D, and a fifth combining unit 12E. Furthermore, the second transmission device 2B includes a fourth optical amplification unit 13D, a fifth optical amplification unit 13E, a fifth wavelength conversion unit 14E, a fifth excitation light source 15E, and a second wavelength combining unit 16B. The fifth excitation light source 15E supplies excitation light to the fifth wavelength conversion unit 14E. Further, the fifth wavelength conversion unit 14E supplies residual excitation light that is transmitted light used for wavelength conversion to the third wavelength conversion unit 14C. The third wavelength conversion unit 14C executes wavelength conversion using the excitation light from the fifth wavelength conversion unit 14E.

The first combining unit 12A in the first transmission device 2A outputs first multiplexed light in which C-band first light from the plurality of optical transmission units 11A is multiplexed to the first optical amplification unit 13A. The first optical amplification unit 13A optically amplifies the first multiplexed light, and outputs the first multiplexed light after optical amplification to the first wavelength combining unit 16A.

The second combining unit 12B outputs second multiplexed light in which C-band second light from the plurality of optical transmission units 11B is multiplexed to the second optical amplification unit 13B. The second optical amplification unit 13B optically amplifies the second multiplexed light, and outputs the second multiplexed light after optical amplification to the first wavelength conversion unit 14A. The first wavelength conversion unit 14A causes a nonlinear optical medium 33 to propagate the second multiplexed light and the excitation light of the first excitation light source 15A to convert the C-band second multiplexed light into L-band second multiplexed light, and outputs the L-band second multiplexed light after wavelength conversion to the first wavelength combining unit 16A. The first wavelength combining unit 16A combines the C-band first multiplexed light and the L-band second multiplexed light, and outputs the multiplexed light after combining to an upstream transmission line 3A.

The second wavelength demultiplexing unit 17B in the second transmission device 2B demultiplexes the multiplexed light from the first transmission device 2A via the upstream transmission line 3A into the C-band first multiplexed light and the L-band second multiplexed light. The second wavelength demultiplexing unit 17B outputs the demultiplexed C-band first multiplexed light to the first optical amplification unit 13A. The first optical amplification unit 13A optically amplifies the C-band first multiplexed light, and outputs the C-band first multiplexed light after optical amplification to the first demultiplexing unit 18A. The first demultiplexing unit 18A demultiplexes the C-band first multiplexed light to the first light and outputs the first light to the optical reception units 19A.

The second wavelength demultiplexing unit 17B outputs the demultiplexed L-band second multiplexed light to the third wavelength conversion unit 14C. The third wavelength conversion unit 14C causes the nonlinear optical medium 33 to propagate the L-band second multiplexed light and the excitation light to convert the L-band second multiplexed light into the C-band second multiplexed light, and outputs the C-band second multiplexed light to the second optical amplification unit 13B. The second optical amplification unit 13B optically amplifies the C-band second multiplexed light, and outputs the C-band second multiplexed light after optical amplification to the second demultiplexing unit 18B. The second demultiplexing unit 18B demultiplexes the C-band second multiplexed light after optical amplification to second light, and outputs the second light to the optical reception units 19B.

The fourth combining unit 12D in the second transmission device 2B outputs fourth multiplexed light in which C-band fourth light from the plurality of optical transmission units 11D corresponding to a fourth group is multiplexed to the fourth optical amplification unit 13D. The fourth optical amplification unit 13D optically amplifies the fourth multiplexed light, and outputs the fourth multiplexed light after optical amplification to the second wavelength combining unit 16B.

The fifth combining unit 12E outputs fifth multiplexed light in which C-band fifth light from the plurality of optical transmission units 11E corresponding to a fifth group is multiplexed to the fifth optical amplification unit 13E. The fifth optical amplification unit 13E optically amplifies the fifth multiplexed light, and outputs the fifth multiplexed light after optical amplification to the fifth wavelength conversion unit 14E. The fifth wavelength conversion unit 14E causes the nonlinear optical medium 33 to propagate the C-band fifth multiplexed light and the excitation light from the fifth excitation light source 15E to convert the C-band fifth multiplexed light into L-band fifth multiplexed light, and outputs the L-band fifth multiplexed light after wavelength conversion to the second wavelength combining unit 16B. The second wavelength combining unit 16B combines the C-band fourth multiplexed light and the L-band fifth multiplexed light, and outputs the multiplexed light after combining to a downstream transmission line 3B.

The first wavelength demultiplexing unit 17A in the first transmission device 2A demultiplexes the multiplexed light from the second transmission device 2B via the downstream transmission line 3B into the C-band fourth multiplexed light and the L-band fifth multiplexed light. The first wavelength demultiplexing unit 17A outputs the demultiplexed C-band fourth multiplexed light to the fourth optical amplification unit 13D. The fourth optical amplification unit 13D optically amplifies the C-band fourth multiplexed light, and outputs the C-band fourth multiplexed light after optical amplification to the fourth demultiplexing unit 18D. The fourth demultiplexing unit 18D demultiplexes the C-band fourth multiplexed light to the fourth light, and outputs the fourth light to the optical reception units 19D.

The first wavelength demultiplexing unit 17A outputs the demultiplexed L-band fifth multiplexed light to the seventh wavelength conversion unit 14G. The seventh wavelength conversion unit 14G causes the nonlinear optical medium 33 to propagate the L-band fifth multiplexed light and the excitation light to convert the L-band fifth multiplexed light into the C-band fifth multiplexed light, and outputs the C-band fifth multiplexed light to the fifth optical amplification unit 13E. The fifth optical amplification unit 13E optically amplifies the C-band fifth multiplexed light, and outputs the C-band fifth multiplexed light after optical amplification to the fifth demultiplexing unit 18E. The fifth demultiplexing unit 18E demultiplexes the C-band fifth multiplexed light after optical amplification to the fifth light, and outputs the fifth light to the optical reception units 19E.

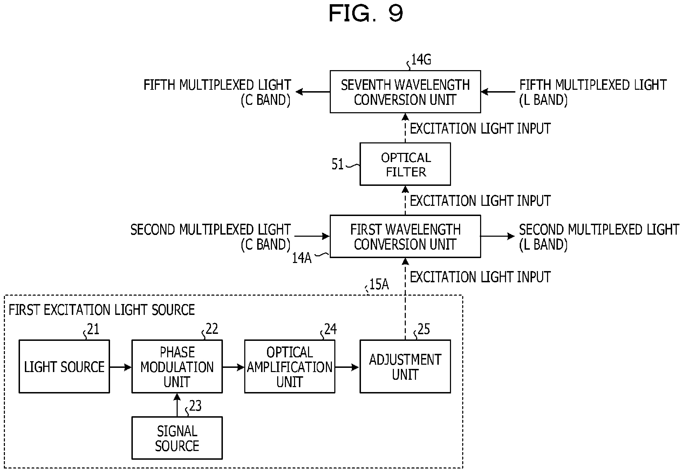

FIG. 9 is an explanatory diagram illustrating an example of a connection configuration of the first excitation light source 15A, the first wavelength conversion unit 14A, and the seventh wavelength conversion unit 14G. An adjustment unit 25 in the first excitation light source 15A supplies the excitation light to the first wavelength conversion unit 14A. The first wavelength conversion unit 14A causes the nonlinear optical medium 33 to propagate the C-band second multiplexed light and the excitation light from the first excitation light source 15A to convert the C-band second multiplexed light into the L-band second multiplexed light. Further, the first wavelength conversion unit 14A outputs the residual excitation light that is transmitted light used for wavelength conversion to an optical filter 51. The optical filter 51 extracts only the excitation light from the residual excitation light transmitted through the first wavelength conversion unit 14A from the first excitation light source 15A. The seventh wavelength conversion unit 14G causes the nonlinear optical medium 33 to propagate the excitation light extracted through the optical filter 51 and the L-band fifth multiplexed light to convert the L-band fifth multiplexed light into the C-band fifth multiplexed light.

The first transmission device 2A reuses, for wavelength conversion of the seventh wavelength conversion unit 14G on the reception side, the excitation light of the first excitation light source 15A used for the first wavelength conversion unit 14A on the transmission side. Therefore, a seventh excitation light source 15G to be used for the seventh wavelength conversion unit 14G can be eliminated.

Further, the second transmission device 2B also reuses, for wavelength conversion of the third wavelength conversion unit 14C on the reception side, the excitation light of the fifth excitation light source 15E used for the fifth wavelength conversion unit 14E on the transmission side. Therefore, a third excitation light source 15C to be used for the third wavelength conversion unit 14C can be eliminated.

The transmission device 2 of the transmission system 1C according to the fourth embodiment reuses the excitation light used for wavelength conversion on the transmission side as the excitation light for wavelength conversion on the reception side in the same device. As a result, improvement of use efficiency of the excitation light, reduction of a power amount with reduction of the excitation light source 15, compact component sizes, and a decrease in component cost can be achieved.

Note that, in the transmission device 2, the first wavelength conversion unit 14A for converting the wavelength between the C band and the L band has been described as an example. However, for example, the present embodiment can be applied to a wavelength conversion unit 14 for converting wavelength between S band and the C band. In the transmission device 2, the excitation light used for the wavelength conversion unit 14 has been reused for the wavelength conversion unit 14 in the same device. However, the excitation light used for optical components such as an optical amplification unit may be used for the wavelength conversion unit 14 or another optical component in the same device, and appropriate change can be made.

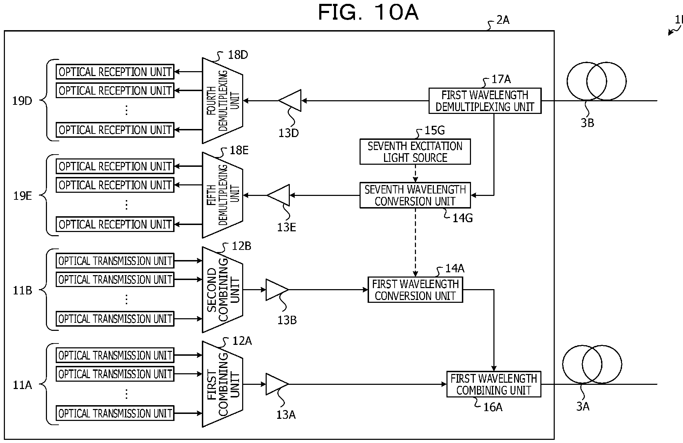

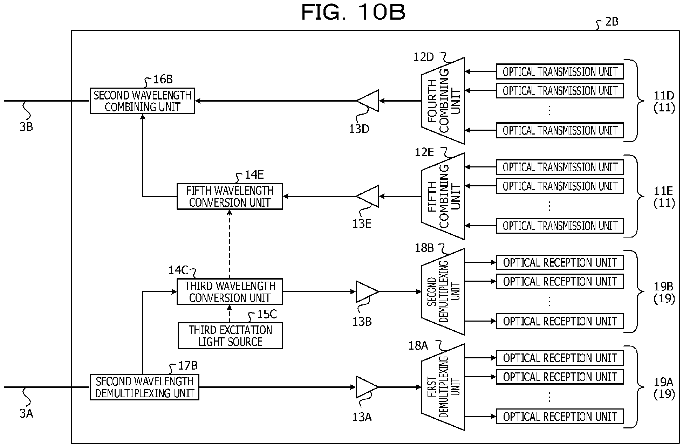

In the transmission system 1C according to the fourth embodiment, for example, the residual excitation light of the first excitation light source 15A used for the first wavelength conversion unit 14A has been reused for the seventh wavelength conversion unit 14G. However, the excitation light for reuse is not limited to the excitation light from the first excitation light source 15A, and appropriate change can be made. An embodiment of the appropriate change will be described as a fifth embodiment. FIGs. 10A and 10B are explanatory diagrams illustrating an example of a transmission system 1D according to the fifth embodiment. Note that, for the sake of convenience of description, description of overlapping configurations and operations is omitted by providing the same reference numerals to the same configurations as those of the transmission system 1C of the fourth embodiment.

### [Fifth Embodiment]

A difference of the transmission system 1D according to the fifth embodiment from the transmission system 1C according to the fourth embodiment is in using, for a first wavelength conversion unit 14A, residual excitation light as transmitted light of a seventh excitation light source 15G used in a seventh wavelength conversion unit 14G. Further, a difference is in using, for a fifth wavelength conversion unit 14E, residual excitation light as transmitted light of a third excitation light source 15C used in a third wavelength conversion unit 14C.

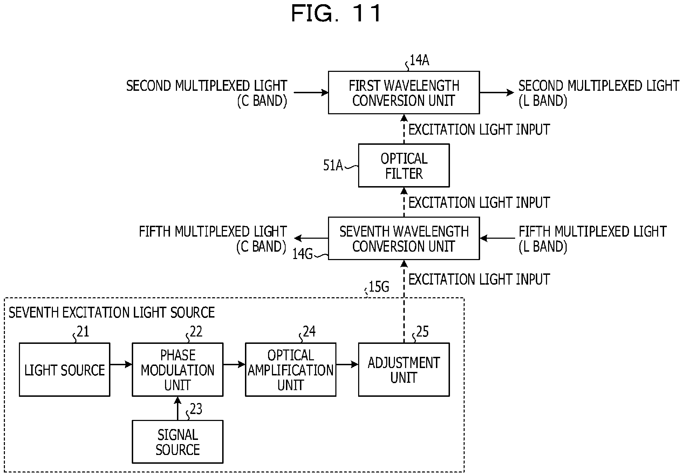

FIG. 11 is an explanatory diagram illustrating an example of a connection configuration of the seventh excitation light source 15G, the first wavelength conversion unit 14A, and the seventh wavelength conversion unit 14G. An adjustment unit 25 in the seventh excitation light source 15G supplies the excitation light to the seventh wavelength conversion unit 14G. The seventh wavelength conversion unit 14G causes a nonlinear optical medium 33 to propagate L-band fifth multiplexed light and the excitation light from the seventh excitation light source 15G to convert the L-band fifth multiplexed light into C-band fifth multiplexed light. Furthermore, the seventh wavelength conversion unit 14G outputs the residual excitation light that is transmitted light used for wavelength conversion to the first wavelength conversion unit 14A through an optical filter 51A. The optical filter 51A extracts only the excitation light from the residual excitation light. The first wavelength conversion unit 14A causes the nonlinear optical medium 33 to propagate the excitation light extracted through the optical filter 51A and C-band second multiplexed light to convert the C-band second multiplexed light into L-band second multiplexed light.

A first transmission device 2A can reuse, for the first wavelength conversion unit 14A on the transmission side, the residual excitation light of the seventh excitation light source 15G used for the seventh wavelength conversion unit 14G on the reception side. Therefore, a first excitation light source 15A to be used for the first wavelength conversion unit 14A can be eliminated.

Further, a second transmission device 2B can also reuse, for the fifth wavelength conversion unit 14E on the transmission side, the residual excitation light of the third excitation light source 15C used for the third wavelength conversion unit 14C on the reception side. Therefore, a fifth excitation light source 15E to be used for the fifth wavelength conversion unit 14E can be eliminated.

The transmission device 2 of the transmission system 1D according to the fifth embodiment reuses the excitation light used for wavelength conversion on the reception side as the excitation light for wavelength conversion on the transmission side in the same device. As a result, improvement of use efficiency of the excitation light, reduction of a power amount with reduction of the excitation light source 15, compact component sizes, and a decrease in component cost can be achieved.

Note that, in the transmission device 2, the seventh wavelength conversion unit 14G for converting the wavelength between the C band and the L band has been described as an example. However, for example, the present embodiment can be applied to a wavelength conversion unit 14 for converting wavelength between S band and the C band.

### [Sixth Embodiment]

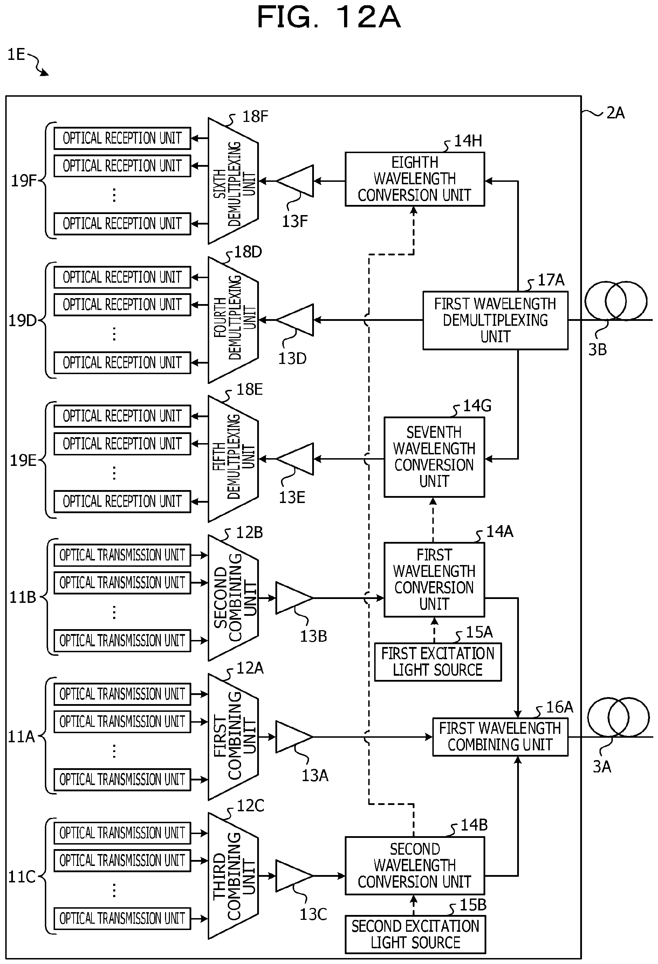

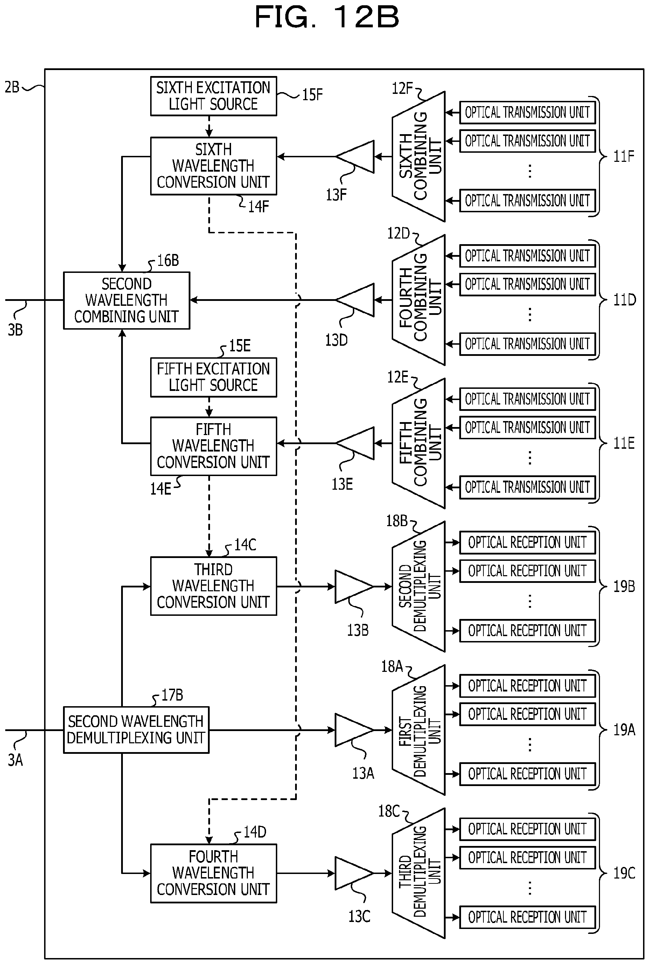

FIGs. 12A and 12B are explanatory diagrams illustrating an example of a transmission system 1E according to a sixth embodiment. A first transmission device 2A includes a plurality of optical transmission units 11A, a plurality optical transmission units 11B, a plurality of optical transmission units 11C, a first combining unit 12A, a second combining unit 12B, a third combining unit 12C, a first optical amplification unit 13A, a second optical amplification unit 13B, and a third optical amplification unit 13C. Furthermore, the first transmission device 2A includes a first wavelength conversion unit 14A, a second wavelength conversion unit 14B, a first excitation light source 15A, a second excitation light source 15B, and a first wavelength combining unit 16A.

The first transmission device 2A includes a first wavelength demultiplexing unit 17A, a seventh wavelength conversion unit 14G, an eighth wavelength conversion unit 14H, a fourth optical amplification unit 13D, a fifth optical amplification unit 13E, and a sixth optical amplification unit 13F. Furthermore, the first transmission device 2A includes a fourth demultiplexing unit 18D, a fifth demultiplexing unit 18E, a sixth demultiplexing unit 18F, a plurality of optical reception units 19D, a plurality of optical reception units 19E, and a plurality of optical reception units 19F. The first excitation light source 15A supplies excitation light to the first wavelength conversion unit 14A. Furthermore, the first wavelength conversion unit 14A supplies residual excitation light that is transmitted light used for wavelength conversion from the first excitation light source 15A to the seventh wavelength conversion unit 14G. The second excitation light source 15B supplies the excitation light to the second wavelength conversion unit 14B. Furthermore, the second wavelength conversion unit 14B supplies residual excitation light that is transmitted light used for wavelength conversion from the second excitation light source 15B to the eighth wavelength conversion unit 14H.

A second transmission device 2B includes a plurality of optical transmission units 11D, a plurality of optical transmission units 11E, a plurality of optical transmission units 11F, a fourth combining unit 12D, a fifth combining unit 12E, a sixth combining unit 12F, a fourth optical amplification unit 13D, a fifth optical amplification unit 13E, and a sixth optical amplification unit 13F. Furthermore, the second transmission device 2B includes a fifth wavelength conversion unit 14E, a sixth wavelength conversion unit 14F, a fifth excitation light source 15E, a sixth excitation light source 15F, and a second wavelength combining unit 16B.

The second transmission device 2B includes a second wavelength demultiplexing unit 17B, a third wavelength conversion unit 14C, a fourth wavelength conversion unit 14D, a first optical amplification unit 13A, a second optical amplification unit 13B, and a third optical amplification unit 13C. Furthermore, the second transmission device 2B includes a first demultiplexing unit 18A, a second demultiplexing unit 18B, a third demultiplexing unit 18C, a plurality of optical reception units 19A, a plurality of optical reception units 19B, and a plurality of optical reception units 19C. The fifth excitation light source 15E supplies excitation light to the fifth wavelength conversion unit 14E. Furthermore, the fifth wavelength conversion unit 14E supplies residual excitation light that is transmitted light used for wavelength conversion from the fifth excitation light source 15E to the third wavelength conversion unit 14C. The sixth excitation light source 15F supplies the excitation light to the sixth wavelength conversion unit 14F. Furthermore, the sixth wavelength conversion unit 14F supplies residual excitation light that is transmitted light used for wavelength conversion from the sixth excitation light source 15F to the fourth wavelength conversion unit 14D.

The first combining unit 12A in the first transmission device 2A outputs first multiplexed light in which C-band first light from the plurality of optical transmission units 11A is multiplexed to the first optical amplification unit 13A. The first optical amplification unit 13A optically amplifies the first multiplexed light, and outputs the C-band first multiplexed light after optical amplification to the first wavelength combining unit 16A.

The second combining unit 12B outputs second multiplexed light in which C-band second light from the plurality of optical transmission units 11B is multiplexed to the second optical amplification unit 13B. The second optical amplification unit 13B optically amplifies the second multiplexed light, and outputs the second multiplexed light after optical amplification to the first wavelength conversion unit 14A. The first wavelength conversion unit 14A causes a nonlinear optical medium 33 to propagate the C-band second multiplexed light and the excitation light from the first excitation light source 15A to convert the C-band second multiplexed light into L-band second multiplexed light, and outputs the L-band second multiplexed light after wavelength conversion to the first wavelength combining unit 16A.

The third combining unit 12C outputs third multiplexed light in which C-band third light from the plurality of optical transmission units 11C is multiplexed to the third optical amplification unit 13C. The third optical amplification unit 13C optically amplifies the third multiplexed light, and outputs the third multiplexed light after optical amplification to the second wavelength conversion unit 14B. The second wavelength conversion unit 14B causes the nonlinear optical medium 33 to propagate the C-band third multiplexed light and the excitation light from the second excitation light source 15B to convert the C-band third multiplexed light into S-band third multiplexed light, and outputs the S-band third multiplexed light after wavelength conversion to the first wavelength combining unit 16A. The first wavelength combining unit 16A combines the C-band first multiplexed light, the L-band second multiplexed light, and the S-band third multiplexed light, and outputs the multiplexed light after combining to an upstream transmission line 3A.

The second wavelength demultiplexing unit 17B in the second transmission device 2B demultiplexes the multiplexed light from the first transmission device 2A via the upstream transmission line 3A into the C-band first multiplexed light, the L-band second multiplexed light, and the S-band third multiplexed light. The second wavelength demultiplexing unit 17B outputs the demultiplexed C-band first multiplexed light to the first optical amplification unit 13A. The first optical amplification unit 13A optically amplifies the C-band first multiplexed light, and outputs the C-band first multiplexed light after optical amplification to the first demultiplexing unit 18A. The first demultiplexing unit 18A demultiplexes and outputs the C-band first multiplexed light to the optical reception units 19A.

The second wavelength demultiplexing unit 17B outputs the demultiplexed L-band second multiplexed light to the third wavelength conversion unit 14C. The third wavelength conversion unit 14C causes the nonlinear optical medium 33 to propagate the L-band second multiplexed light and the excitation light to convert the L-band second multiplexed light into the C-band second multiplexed light, and outputs the C-band second multiplexed light to the second optical amplification unit 13B. The second optical amplification unit 13B optically amplifies the C-band second multiplexed light, and outputs the C-band second multiplexed light after optical amplification to the second demultiplexing unit 18B. The second demultiplexing unit 18B demultiplexes and outputs the C-band second multiplexed light after optical amplification to the optical reception units 19B.

The second wavelength demultiplexing unit 17B outputs the demultiplexed S-band third multiplexed light to the fourth wavelength conversion unit 14D. The fourth wavelength conversion unit 14D causes the nonlinear optical medium 33 to propagate the S-band third multiplexed light and the excitation light to convert the S-band third multiplexed light into the C-band third multiplexed light, and outputs the C-band third multiplexed light to the third optical amplification unit 13C. The third optical amplification unit 13C optically amplifies the C-band third multiplexed light, and outputs the C-band third multiplexed light after optical amplification to the third demultiplexing unit 18C. The third demultiplexing unit 18C demultiplexes and outputs the C-band third multiplexed light after optical amplification to the optical reception units 19C.

The fourth combining unit 12D in the second transmission device 2B outputs fourth multiplexed light in which C-band fourth light from the plurality of optical transmission units 11D is multiplexed to the fourth optical amplification unit 13D. The fourth optical amplification unit 13D optically amplifies the fourth multiplexed light, and outputs the fourth multiplexed light after optical amplification to the second wavelength combining unit 16B.

The fifth combining unit 12E outputs C-band fifth multiplexed light in which C-band fifth light from the plurality of optical transmission units 11E is multiplexed to the fifth optical amplification unit 13E. The fifth optical amplification unit 13E optically amplifies the C-band fifth multiplexed light, and outputs the fifth multiplexed light after optical amplification to the fifth wavelength conversion unit 14E. The fifth wavelength conversion unit 14E causes the nonlinear optical medium 33 to propagate the C-band fifth multiplexed light and the excitation light from the fifth excitation light source 15E to convert the C-band fifth multiplexed light into L-band fifth multiplexed light, and outputs the L-band fifth multiplexed light after wavelength conversion to the second wavelength combining unit 16B.

The sixth combining unit 12F outputs C-band sixth multiplexed light in which C-band sixth light from the plurality of optical transmission units 11F is multiplexed to the sixth optical amplification unit 13F. The sixth optical amplification unit 13F optically amplifies the C-band sixth multiplexed light, and outputs the sixth multiplexed light after optical amplification to the sixth wavelength conversion unit 14F. The sixth wavelength conversion unit 14F causes the nonlinear optical medium 33 to propagate the C-band sixth multiplexed light and the excitation light from the sixth excitation light source 15F to convert the C-band sixth multiplexed light into S-band sixth multiplexed light, and outputs the S-band sixth multiplexed light after wavelength conversion to the second wavelength combining unit 16B. The second wavelength combining unit 16B combines the C-band fourth multiplexed light, the L-band fifth multiplexed light, and the S-band sixth multiplexed light, and outputs the multiplexed light after combining to a downstream transmission line 3B.

The first wavelength demultiplexing unit 17A in the first transmission device 2A demultiplexes the multiplexed light from the second transmission device 2B via the downstream transmission line 3B into the C-band fourth multiplexed light, the L-band fifth multiplexed light, and the S-band sixth multiplexed light. The first wavelength demultiplexing unit 17A outputs the demultiplexed C-band fourth multiplexed light to the fourth optical amplification unit 13D. The fourth optical amplification unit 13D optically amplifies the C-band fourth multiplexed light, and outputs the C-band fourth multiplexed light after optical amplification to the fourth demultiplexing unit 18D. The fourth demultiplexing unit 18D demultiplexes the C-band fourth multiplexed light to the fourth light, and outputs the fourth light to the optical reception units 19D.

The first wavelength demultiplexing unit 17A outputs the demultiplexed L-band fifth multiplexed light to the seventh wavelength conversion unit 14G. The seventh wavelength conversion unit 14G causes the nonlinear optical medium 33 to propagate the L-band fifth multiplexed light and the excitation light to convert the L-band fifth multiplexed light into the C-band fifth multiplexed light, and outputs the C-band fifth multiplexed light to the fifth optical amplification unit 13E. The fifth optical amplification unit 13E optically amplifies the C-band fifth multiplexed light, and outputs the C-band fifth multiplexed light after optical amplification to the fifth demultiplexing unit 18E. The fifth demultiplexing unit 18E demultiplexes the C-band fifth multiplexed light after optical amplification to the fifth light, and outputs the fifth light to the optical reception units 19E.

The first wavelength demultiplexing unit 17A outputs the demultiplexed S-band sixth multiplexed light to the eighth wavelength conversion unit 14H. The eighth wavelength conversion unit 14H causes the nonlinear optical medium 33 to propagate the S-band sixth multiplexed light and the excitation light to convert the S-band sixth multiplexed light into the C-band sixth multiplexed light, and outputs the C-band sixth multiplexed light to the sixth optical amplification unit 13F. The sixth optical amplification unit 13F optically amplifies the C-band sixth multiplexed light, and outputs the C-band sixth multiplexed light after optical amplification to the sixth demultiplexing unit 18F. The sixth demultiplexing unit 18F demultiplexes the C-band sixth multiplexed light after optical amplification to the sixth light, and outputs the sixth light to the optical reception units 19F.

The first transmission device 2A reuses, for the seventh wavelength conversion unit 14G on the reception side in the same device, the excitation light of the first excitation light source 15A used for the first wavelength conversion unit 14A on the transmission side. Therefore, the seventh excitation light source 15G to be used for the seventh wavelength conversion unit 14G can be eliminated.

The first transmission device 2A reuses, for the eighth wavelength conversion unit 14H on the reception side in the same device, the excitation light of the second excitation light source 15B used for the second wavelength conversion unit 14B on the transmission side. Therefore, an eighth excitation light source 15H to be used for the eighth wavelength conversion unit 14H can be eliminated.

Further, the second transmission device 2B also reuses, for the third wavelength conversion unit 14C on the reception side in the same device, the excitation light of the fifth excitation light source 15E used for the fifth wavelength conversion unit 14E on the transmission side. Therefore, a third excitation light source 15C to be used for the third wavelength conversion unit 14C can be eliminated.

The second transmission device 2B also reuses, for the fourth wavelength conversion unit 14D on the reception side in the same device, the excitation light of the sixth excitation light source 15F used for the sixth wavelength conversion unit 14F on the transmission side. Therefore, a fourth excitation light source 15D to be used for the fourth wavelength conversion unit 14D can be eliminated.

The transmission device 2 of the transmission system 1E according to the sixth embodiment reuses a residual component of the excitation light used for wavelength conversion on the transmission side as the excitation light for wavelength conversion on the reception side in the same device. As a result, improvement of use efficiency of the excitation light, reduction of a power amount with reduction of the excitation light source 15, compact component sizes, and a decrease in component cost can be achieved.

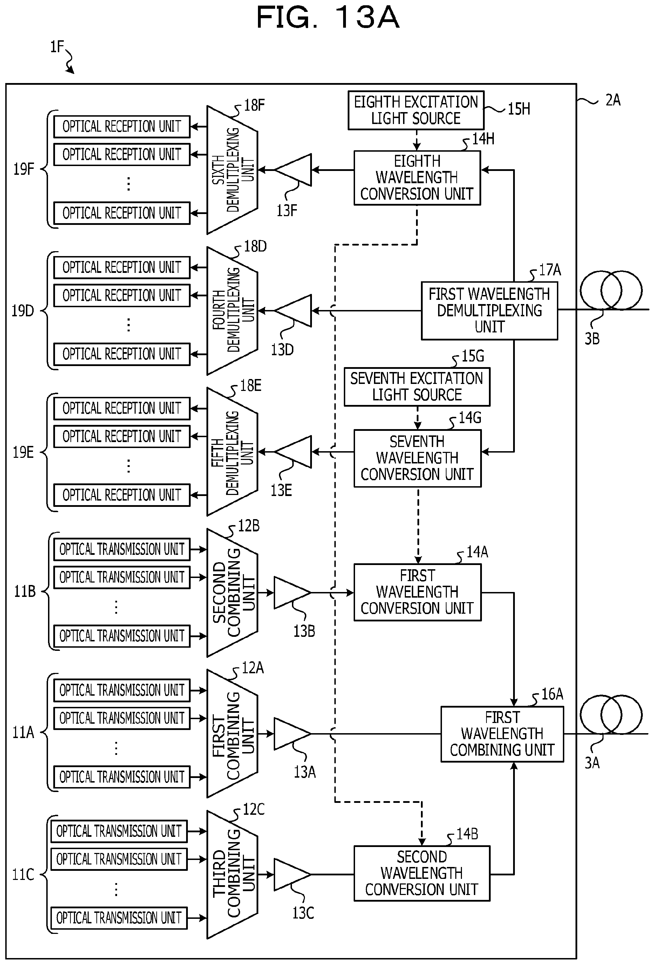

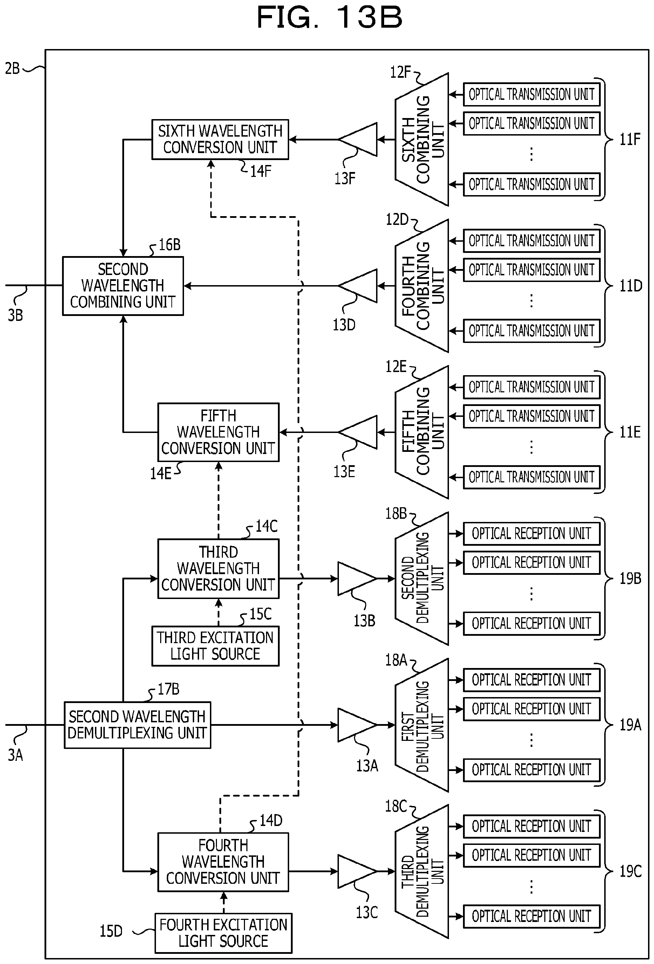

Note that the transmission device 2 according to the sixth embodiment has reused the residual component of the excitation light used for wavelength conversion on the transmission side as the excitation light for wavelength conversion on the reception side in the same device. However, an embodiment is not limited to the case, and the embodiment will be described below as a seventh embodiment. FIGs. 13A and 13B are explanatory diagrams illustrating an example of a transmission system 1F according to a seventh embodiment. Note that, for the sake of convenience of description, description of overlapping configurations and operations is omitted by providing the same reference numerals to the same configurations as those of the transmission system 1E of the sixth embodiment.

### [Seventh Embodiment]

A difference of the transmission system 1F according to the seventh embodiment from the transmission system 1E according to the sixth embodiment is that a transmission device 2 reuses a residual component of excitation light used for wavelength conversion on a reception side as excitation light for wavelength conversion on a transmission side in the same device.

A first transmission device 2A can reuse, for a first wavelength conversion unit 14A on the transmission side in the same device, excitation light of a seventh excitation light source 15G used for a seventh wavelength conversion unit 14G on the reception side. Therefore, a first excitation light source 15A to be used for the first wavelength conversion unit 14A can be eliminated.

The first transmission device 2A can reuse, for a second wavelength conversion unit 14B on the transmission side in the same device, excitation light of an eighth excitation light source 15H used for an eighth wavelength conversion unit 14H on the reception side. Therefore, a second excitation light source 15B to be used for the second wavelength conversion unit 14B can be eliminated.

Further, a second transmission device 2B can also reuse, for a fifth wavelength conversion unit 14E on the transmission side in the same device, excitation light of a third excitation light source 15C used for a third wavelength conversion unit 14C on the reception side. Therefore, a fifth excitation light source 15E to be used for the fifth wavelength conversion unit 14E can be eliminated.

The second transmission device 2B can also reuse, for a sixth wavelength conversion unit 14F on the transmission side in the same device, excitation light of a fourth excitation light source 15D used for a fourth wavelength conversion unit 14D on the reception side. Therefore, a sixth excitation light source 15F to be used for the sixth wavelength conversion unit 14F can be eliminated.

The transmission device 2 of the transmission system 1F according to the seventh embodiment reuses the residual component of the excitation light used for wavelength conversion on the reception side as the excitation light for wavelength conversion on the transmission side in the same device. As a result, improvement of use efficiency of the excitation light, reduction of a power amount with reduction of the excitation light source 15, compact component sizes, and a decrease in component cost can be achieved.

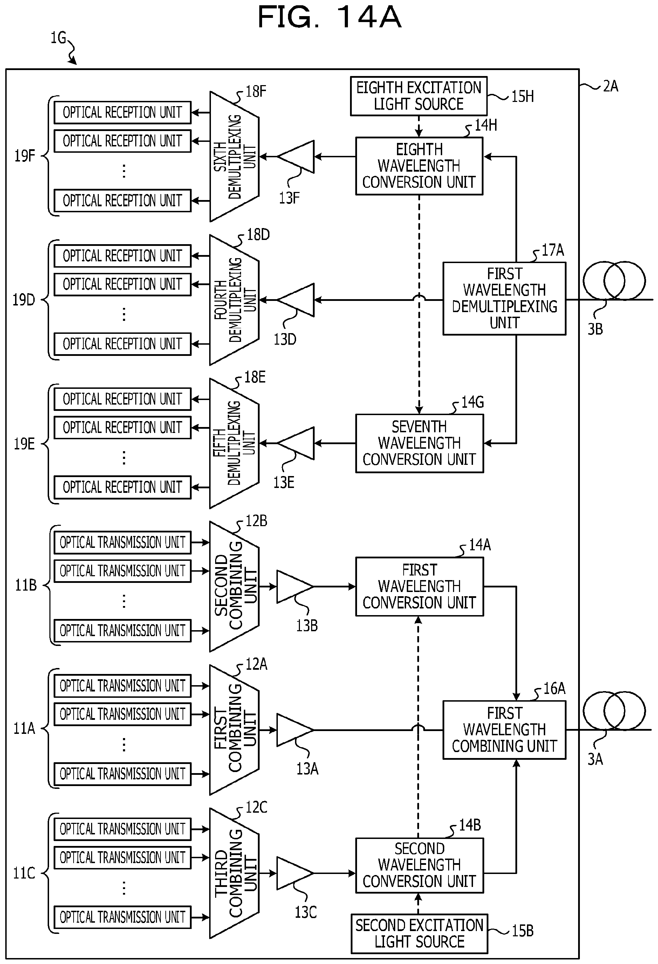

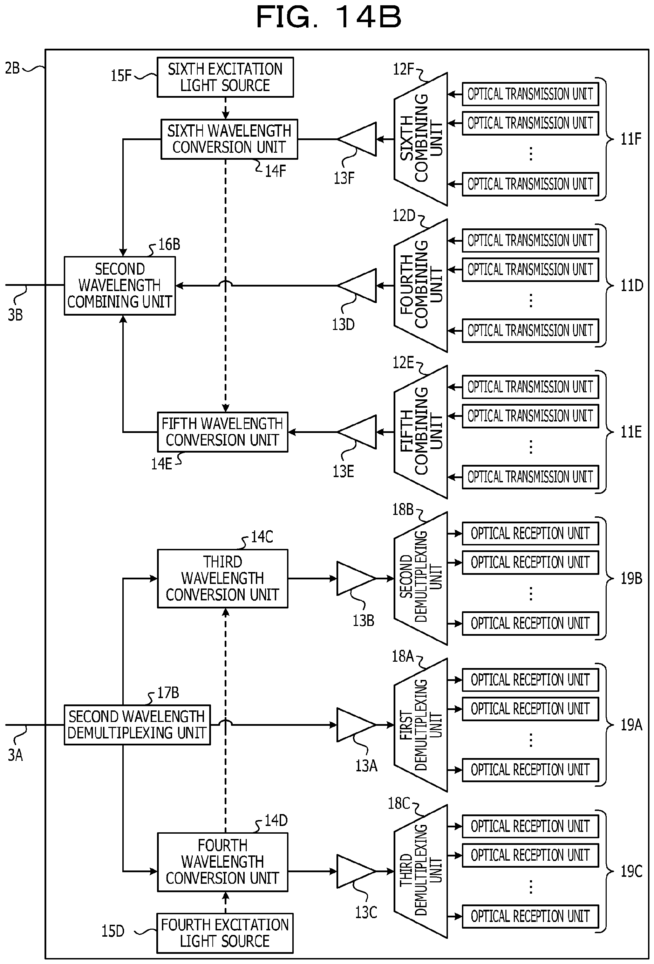

Note that the transmission device 2 according to the sixth embodiment has reused the residual component of the excitation light used for wavelength conversion on the transmission side as the excitation light for wavelength conversion on the reception side in the same device. However, an embodiment is not limited to the case, and the embodiment will be described below as an eighth embodiment. FIGs. 14A and 14B are explanatory diagrams illustrating an example of a transmission system 1G according to the eighth embodiment. Note that, for the sake of convenience of description, description of overlapping configurations and operations is omitted by providing the same reference numerals to the same configurations as those of the transmission system 1E of the sixth embodiment.

### [Eighth Embodiment]

A difference of the transmission system 1G according to the eighth embodiment from the transmission system 1E according to the sixth embodiment is that a transmission device 2 reuses a residual component of excitation light used for wavelength conversion on a reception side as excitation light for another wavelength conversion on the reception side in the same device. Furthermore, a difference is that the transmission device 2 reuses a residual component of excitation light used for wavelength conversion on the transmission side as excitation light for wavelength conversion on the transmission side in the same device.

A first transmission device 2A can reuse, for a seventh wavelength conversion unit 14G on the reception side in the same device, excitation light of an eighth excitation light source 15H used for an eighth wavelength conversion unit 14H on the reception side. Therefore, a seventh excitation light source 15G to be used for the seventh wavelength conversion unit 14G can be eliminated.

The first transmission device 2A can reuse, for a first wavelength conversion unit 14A on the transmission side in the same device, excitation light of a second excitation light source 15B used for a second wavelength conversion unit 14B on the transmission side. Therefore, a first excitation light source 15A to be used for the first wavelength conversion unit 14A can be eliminated.

Further, a second transmission device 2B can also reuse, for a fifth wavelength conversion unit 14E on the transmission side in the same device, excitation light of a sixth excitation light source 15F used for a sixth wavelength conversion unit 14F on the reception side. Therefore, a fifth excitation light source 15E to be used for the fifth wavelength conversion unit 14E can be eliminated.

A second transmission device 2B can also reuse, for a third wavelength conversion unit 14C on the reception side in the same device, excitation light of a fourth excitation light source 15D used for a fourth wavelength conversion unit 14D on the reception side. Therefore, a third excitation light source 15C to be used for the third wavelength conversion unit 14C can be eliminated.

The transmission device 2 of the transmission system 1G according to the eighth embodiment reuses the residual component of the excitation light used for wavelength conversion on the reception side as the excitation light for wavelength conversion on the reception side in the same device. As a result, improvement of use efficiency of the excitation light, reduction of a power amount with reduction of the excitation light source 15, compact component sizes, and a decrease in component cost can be achieved.

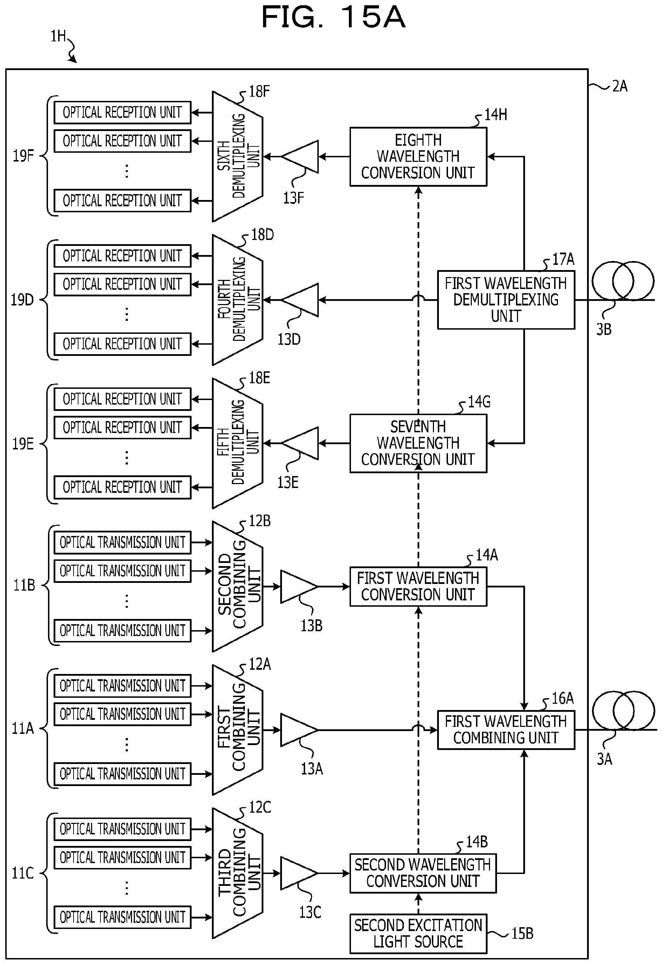

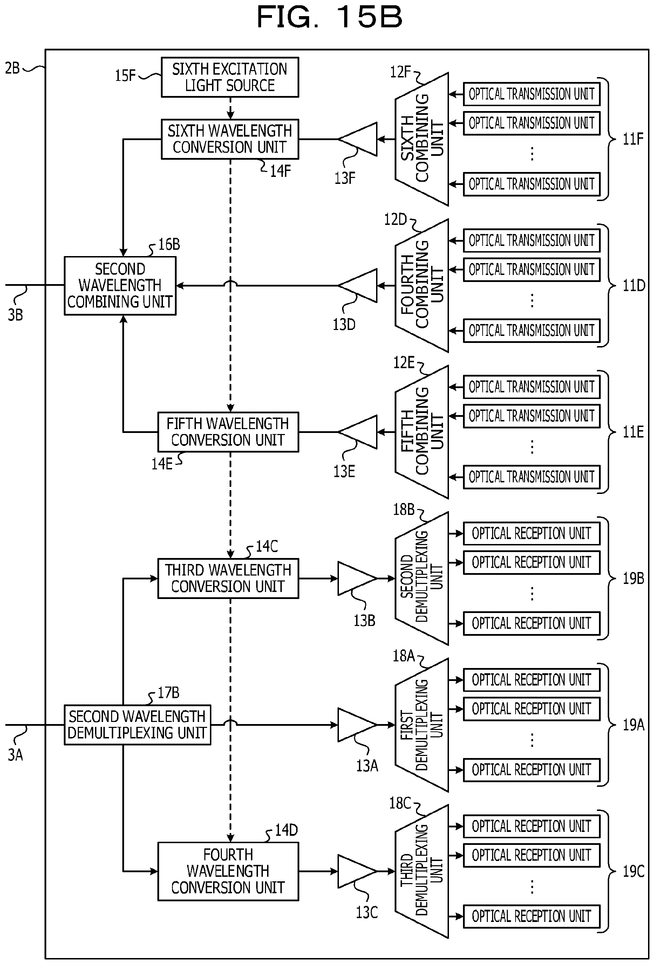

Note that the transmission system 1E according to the sixth embodiment has reused the residual component of the excitation light used for wavelength conversion on the transmission side as the excitation light for wavelength conversion on the reception side. However, an embodiment is not limited to the case, and the embodiment will be described below as a ninth embodiment. FIGs. 15A and 15B are explanatory diagrams illustrating an example of a transmission system 1H according to the ninth embodiment. Note that, for the sake of convenience of description, description of overlapping configurations and operations is omitted by providing the same reference numerals to the same configurations as those of the transmission system 1E of the sixth embodiment.

### [Ninth Embodiment]

A difference of the transmission system 1H according to the ninth embodiment from the transmission system 1E according to the sixth embodiment is in reusing a residual component of excitation light used for wavelength conversion in a transmission device 2 as excitation light for all wavelength conversion in the same transmission device 2.

A first transmission device 2A reuses, for a first wavelength conversion unit 14A, a seventh wavelength conversion unit 14G, and an eighth wavelength conversion unit 14H, excitation light of a second excitation light source 15B used for a second wavelength conversion unit 14B. As a result, a first excitation light source 15A, a seventh excitation light source 15G, and an eighth excitation light source 15H can be eliminated.

A second transmission device 2B reuses, for a fifth wavelength conversion unit 14E, a third wavelength conversion unit 14C, and a fourth wavelength conversion unit 14D, excitation light of a sixth excitation light source 15F used for a sixth wavelength conversion unit 14F. As a result, a fifth excitation light source 15E, a third excitation light source 15C, and a fourth excitation light source 15D can be eliminated.

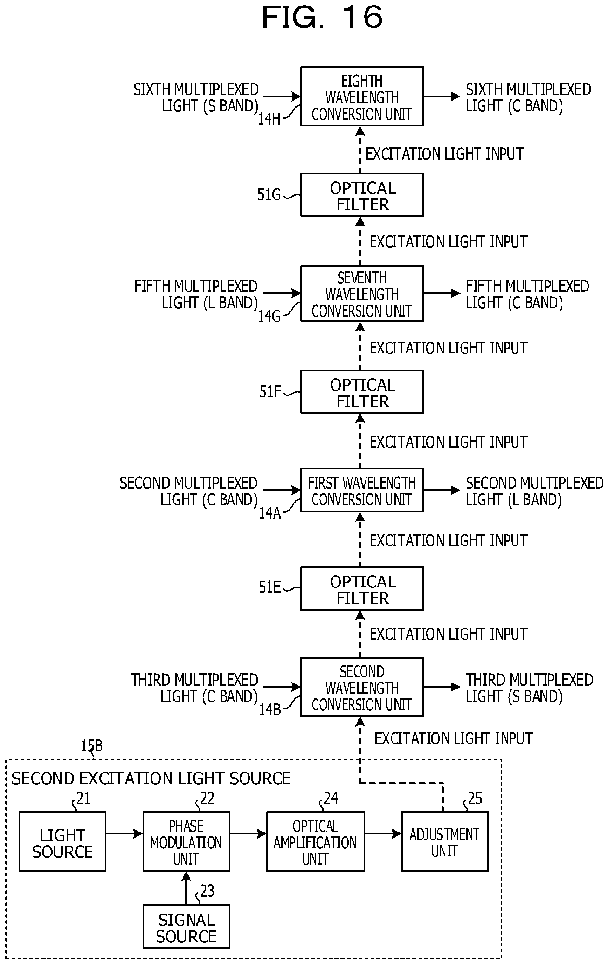

FIG. 16 is an explanatory diagram illustrating an example of the second excitation light source 15B, the first wavelength conversion unit 14A, the second wavelength conversion unit 14B, the seventh wavelength conversion unit 14G, and the eighth wavelength conversion unit 14H. An adjustment unit 25 in the second excitation light source 15B supplies the excitation light to the second wavelength conversion unit 14B. The second wavelength conversion unit 14B causes a nonlinear optical medium 33 to propagate C-band third multiplexed light and the excitation light from the second excitation light source 15B to convert the C-band third multiplexed light into S-band third multiplexed light. Furthermore, the second wavelength conversion unit 14B outputs residual excitation light that is transmitted light used for wavelength conversion to the first wavelength conversion unit 14A through an optical filter 51E. The optical filter 51E extracts only the excitation light from the residual excitation light. The first wavelength conversion unit 14A causes the nonlinear optical medium 33 to propagate the excitation light extracted through the optical filter 51E and C-band second multiplexed light to convert the C-band second multiplexed light into L-band second multiplexed light.

Furthermore, the first wavelength conversion unit 14A outputs the residual excitation light that is transmitted light used for wavelength conversion to the seventh wavelength conversion unit 14G through an optical filter 51F. The optical filter 51F extracts only the excitation light from the residual excitation light. The seventh wavelength conversion unit 14G causes the nonlinear optical medium 33 to propagate the excitation light extracted through the optical filter 51F and L-band fifth multiplexed light to convert the L-band fifth multiplexed light into C-band fifth multiplexed light.

Furthermore, the seventh wavelength conversion unit 14G outputs the residual excitation light that is transmitted light used for wavelength conversion to the eighth wavelength conversion unit 14H through an optical filter 51G. The optical filter 51G extracts only the excitation light from the residual excitation light. The eighth wavelength conversion unit 14H causes the nonlinear optical medium 33 to propagate the excitation light extracted through the optical filter 51G and S-band sixth multiplexed light to convert the S-band sixth multiplexed light into C-band sixth multiplexed light.

The transmission device 2 of the transmission system 1H according to the ninth embodiment reuses the residual component of the excitation light used for one wavelength conversion as the excitation light for another wavelength conversion in the same transmission device. As a result, improvement of use efficiency of the excitation light, reduction of a power amount with reduction of the excitation light source 15, compact component sizes, and a decrease in component cost can be achieved.

Although the wavelength conversion units 14 according to the first to ninth embodiments have been wavelength conversion units 141 for single polarized light illustrated in FIG. 2. However, a wavelength conversion unit 142 for polarization multiplexed light may be adopted instead of the wavelength conversion unit 141. An embodiment of the wavelength conversion unit 142 will be described below as a tenth embodiment.

### [Tenth Embodiment]

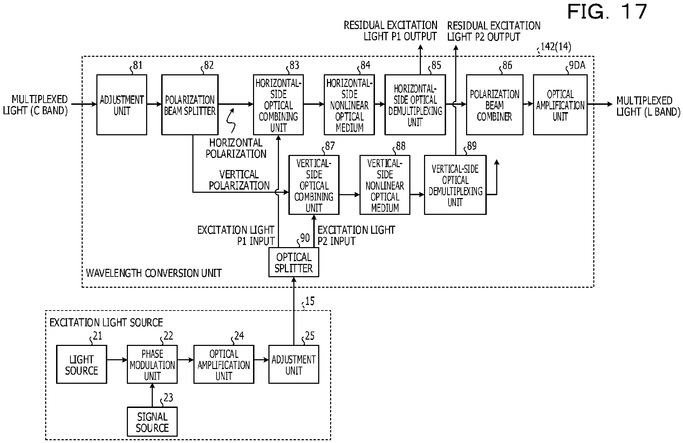

FIG. 17 is an explanatory diagram illustrating an example of a wavelength conversion unit 14 for polarization multiplexed light and an excitation light source 15 according to the tenth embodiment. The excitation light source 15 supplies excitation light of a single wavelength or excitation light of two wavelengths to the wavelength conversion unit 14. In this case, an optical transmission unit 11A outputs vertically polarized and horizontally polarized first light to a first combining unit 12A. The first combining unit 12A outputs first multiplexed light in which the vertically polarized and horizontally polarized first light is multiplexed to a wavelength combining unit 16. An optical transmission unit 11B outputs vertically polarized and horizontally polarized second light to a second combining unit 12B. The second combining unit 12B outputs second multiplexed light in which the vertically polarized and horizontally polarized second light is multiplexed to a first wavelength conversion unit 14A. Furthermore, an optical transmission unit 11C outputs vertically polarized and horizontally polarized third light to a third combining unit 12C. The third combining unit 12C outputs third multiplexed light in which the vertically polarized and horizontally polarized third light is multiplexed to a second wavelength conversion unit 14B.

The wavelength conversion unit 14 is a wavelength conversion unit 142 for polarization multiplexed light. The wavelength conversion unit 142 includes an adjustment unit 81, a polarization beam splitter 82, a horizontal-side optical combining unit 83, a horizontal-side nonlinear optical medium 84, a horizontal-side optical demultiplexing unit 85, and a polarization beam combiner 86. The wavelength conversion unit 142 includes a vertical-side optical combining unit 87, a vertical-side nonlinear optical medium 88, a vertical-side optical demultiplexing unit 89, an optical splitter 90, and an optical amplification unit 90A.

The adjustment unit 81 adjusts light intensity of vertically polarized and horizontally polarized C-band multiplexed light, and outputs the multiplexed light after adjustment to the polarization beam splitter 82. The polarization beam splitter 82 splits the multiplexed light into horizontally polarized multiplexed light and vertically polarized multiplexed light, and outputs the horizontally polarized multiplexed light to the horizontal-side optical combining unit 83 and the vertically polarized multiplexed light to the vertical-side optical combining unit 87.

The optical splitter 90 optically splits the excitation light from the excitation light source 15 into two lines of excitation light P1 and P2, and supplies the excitation light P1 to the horizontal-side optical combining unit 83 and the excitation light P2 to the vertical-side optical combining unit 87. The horizontal-side optical combining unit 83 causes the horizontal-side nonlinear optical medium 84 to propagate C-band horizontally polarized multiplexed light and the excitation light P1 to convert the C-band horizontally polarized multiplexed light into L-band horizontally polarized multiplexed light, and outputs the L-band horizontally polarized multiplexed light to the horizontal-side optical demultiplexing unit 85. The horizontal-side optical demultiplexing unit 85 demultiplexes the L-band horizontally polarized multiplexed light into the residual excitation light P1 and the multiplexed light, and outputs the residual excitation light P1 and the multiplexed light. The horizontal-side optical demultiplexing unit 85 outputs the L-band horizontally polarized multiplexed light to the polarization beam combiner 86.

The vertical-side optical combining unit 87 causes the vertical-side nonlinear optical medium 88 to propagate C-band vertically polarized multiplexed light and the excitation light P2 to convert the C-band vertically polarized multiplexed light into L-band vertically polarized multiplexed light. Then, the vertical-side optical combining unit 87 outputs the L-band vertically polarized multiplexed light to the vertical polarization-side optical demultiplexing unit 89. The vertical-side optical demultiplexing unit 89 demultiplexes the L-band vertically polarized multiplexed light into a residual component of the excitation light P2 and the multiplexed light, and outputs the residual component and the multiplexed light. The vertical-side optical demultiplexing unit 89 outputs the L-band vertically polarized multiplexed light to the polarization beam combiner 86.

The polarization beam combiner 86 combines the L-band horizontally polarized multiplexed light from the horizontal-side optical demultiplexing unit 85 and the L-band vertically polarized multiplexed light from the vertical-side optical demultiplexing unit 89, and outputs the multiplexed light to the optical amplification unit 90A. The optical amplification unit 90A optically amplifies the multiplexed light from the polarization beam combiner 86 in units of wavelengths, and outputs the multiplexed light after optical amplification to the wavelength combining unit 16. Note that the wavelength conversion units 142 is applicable to, for example, the first wavelength conversion unit 14A, the second wavelength conversion unit 14B, the third wavelength conversion unit 14C, the fourth wavelength conversion unit 14D, and the like.

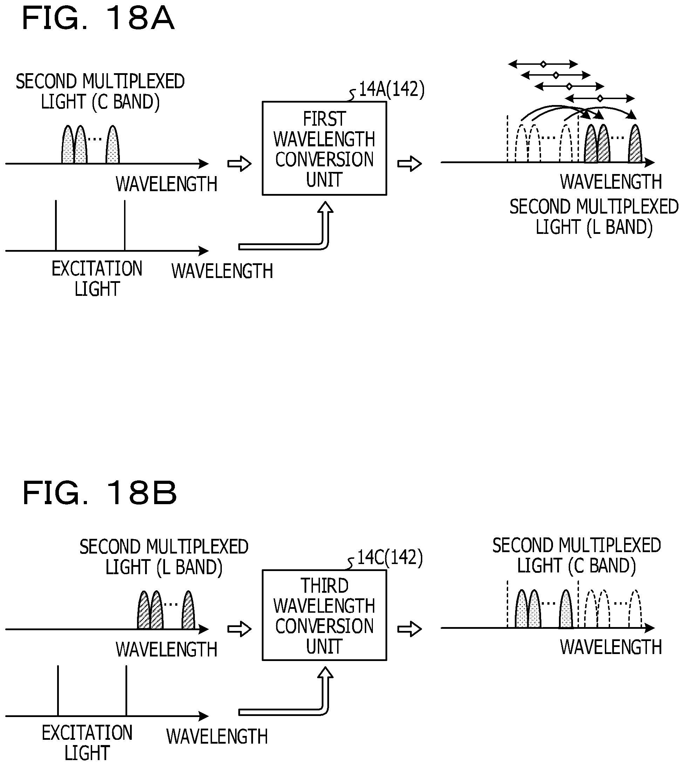

FIG. 18A is an explanatory diagram illustrating an example of a wavelength conversion operation of the first wavelength conversion unit 14A according to the tenth embodiment. The first wavelength conversion unit 14A causes a nonlinear optical medium 33 to propagate C-band second multiplexed light from the second optical amplification unit 13B and the excitation light of two wavelengths from the first excitation light source 15A to convert the C-band second multiplexed light into L-band second multiplexed light. As a result, the first wavelength conversion unit 14A is in the relationship of non-degenerate four-wave mixing of converting the wavelength of the C-band second multiplexed light into the L-band second multiplexed light at wavelength intervals of two lines of excitation light.

Furthermore, FIG. 18B is an explanatory diagram illustrating an example of an operation of the third wavelength conversion unit 14C. The third wavelength conversion unit 14C causes the nonlinear optical medium 33 to propagate the L-band second multiplexed light from the second optical amplification unit 13B and the excitation light of two wavelengths from the third excitation light source 15C to convert the L-band second multiplexed light into the C-band second multiplexed light. As a result, the third wavelength conversion unit 14C is in the relationship of non-degenerate four-wave mixing of converting the wavelength of the L-band second multiplexed light into the C-band second multiplexed light at wavelength intervals of the excitation light of two wavelengths.

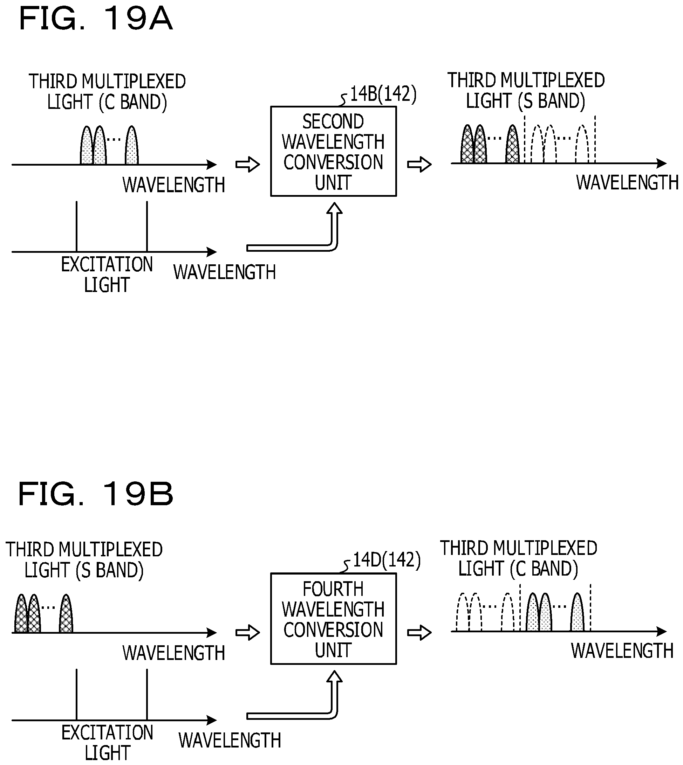

FIG. 19A is an explanatory diagram illustrating an example of an operation of the second wavelength conversion unit 14B. The second wavelength conversion unit 14B causes the nonlinear optical medium 33 to propagate C-band third multiplexed light from the third optical amplification unit 13C and the excitation light of two wavelengths from the third excitation light source 15C to convert the C-band third multiplexed light into S-band third multiplexed light. As a result, the second wavelength conversion unit 14B is in the relationship of non-degenerate four-wave mixing of converting the C-band third multiplexed light into the S-band third multiplexed light at wavelength intervals of the excitation light of two wavelengths.

Furthermore, FIG. 19B is an explanatory diagram illustrating an example of an operation of the fourth wavelength conversion unit 14D. The fourth wavelength conversion unit 14D causes the nonlinear optical medium 33 to propagate the S-band third multiplexed light from the third optical amplification unit 13B and the excitation light of two wavelengths from the fourth excitation light source 15D to convert the S-band third multiplexed light into the C-band third multiplexed light. As a result, the fourth wavelength conversion unit 14D is in the relationship of non-degenerate four-wave mixing of converting the S-band third multiplexed light into the C-band third multiplexed light at wavelength intervals of the excitation light of two wavelengths.

Note that the wavelengths of the excitation light are different from the light before and after wavelength conversion, and a wavelength interval of the excitation light of two wavelengths is broader than a band width of the C band, for example, between the C band and S band or between the C band and L band. However, the wavelength interval of the light before and after wavelength conversion and the wavelength interval of the excitation light are only required to satisfy the same condition.

An embodiment of a case of adopting the wavelength conversion units 142 of the polarization multiplexed light as the first wavelength conversion unit 14A and the seventh wavelength conversion unit 14G illustrated in FIGs. 8A and 8B will be described below as an eleventh embodiment.

### [Eleventh Embodiment]

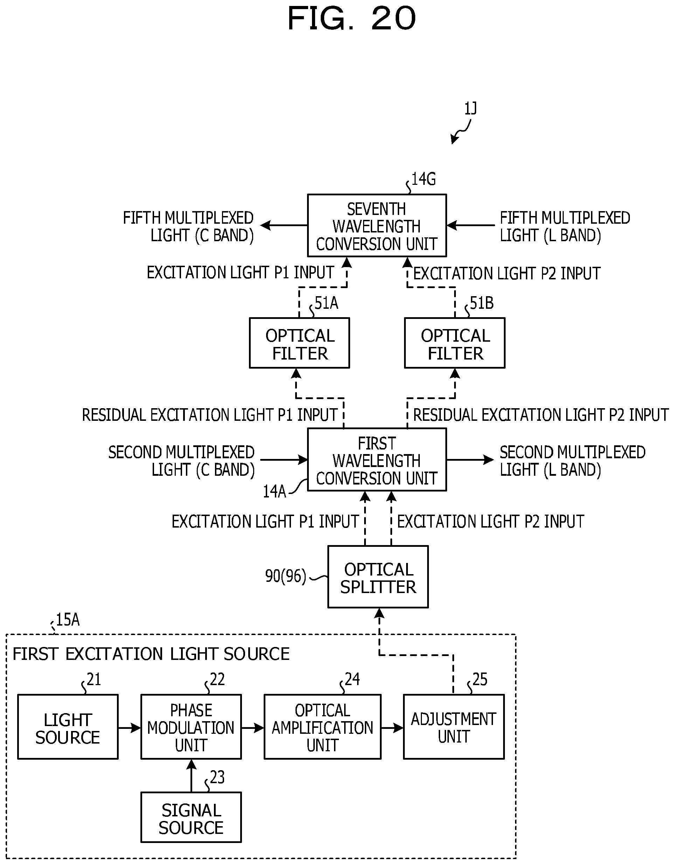

FIG. 20 is an explanatory diagram illustrating an example of a connection configuration of a first excitation light source 15A for polarization multiplexed light, a first wavelength conversion unit 14A, and a seventh wavelength conversion unit 14G according to the eleventh embodiment. An adjustment unit 25 in the first excitation light source 15A outputs excitation light to an optical splitter 90 (96). The optical splitter 90 (96) supplies optically split excitation light P1 and excitation light P2 to the first wavelength conversion unit 14A. The first wavelength conversion unit 14A causes a nonlinear optical medium 33 to propagate C-band second multiplexed light, the excitation light P1, and the excitation light P2 to convert the C-band second multiplexed light into L-band second multiplexed light. Furthermore, the first wavelength conversion unit 14A outputs residual excitation light P1 that is transmitted light used for wavelength conversion to an optical filter 51A, and outputs residual excitation light P2 to an optical filter 51B.

The optical filter 51A extracts the excitation light P1 from the residual excitation light P1 and outputs the extracted excitation light P1 to the seventh wavelength conversion unit 14G. Further, the optical filter 51B extracts the excitation light P2 from the residual excitation light P2 and outputs the extracted excitation light P2 to the seventh wavelength conversion unit 14G. The seventh wavelength conversion unit 14G causes the nonlinear optical medium 33 to propagate the excitation light P1 from the optical filter 51A and the excitation light P2 from the optical filter 51B, and L-band fifth multiplexed light to convert the L-band fifth multiplexed light into C-band fifth multiplexed light.

A first transmission device 2A reuses, for the seventh wavelength conversion unit 14G on the reception side in the same device, the excitation light P1 and P2 of the first excitation light source 15A used for the first wavelength conversion unit 14A on the transmission side. Therefore, a seventh excitation light source 15G to be used for the seventh wavelength conversion unit 14G can be eliminated.

In a transmission system 1J according to the eleventh embodiment, a transmission device 2 has reused residual components of the excitation light P1 and P2 used for wavelength conversion on the transmission side as the excitation light for wavelength conversion on the reception side in the same device. As a result, even in the wavelength conversion unit 142 for polarization multiplexed light, improvement of use efficiency of the excitation light, reduction of a power amount with reduction of the excitation light source 15, compact component sizes, and a decrease in component cost can be achieved.

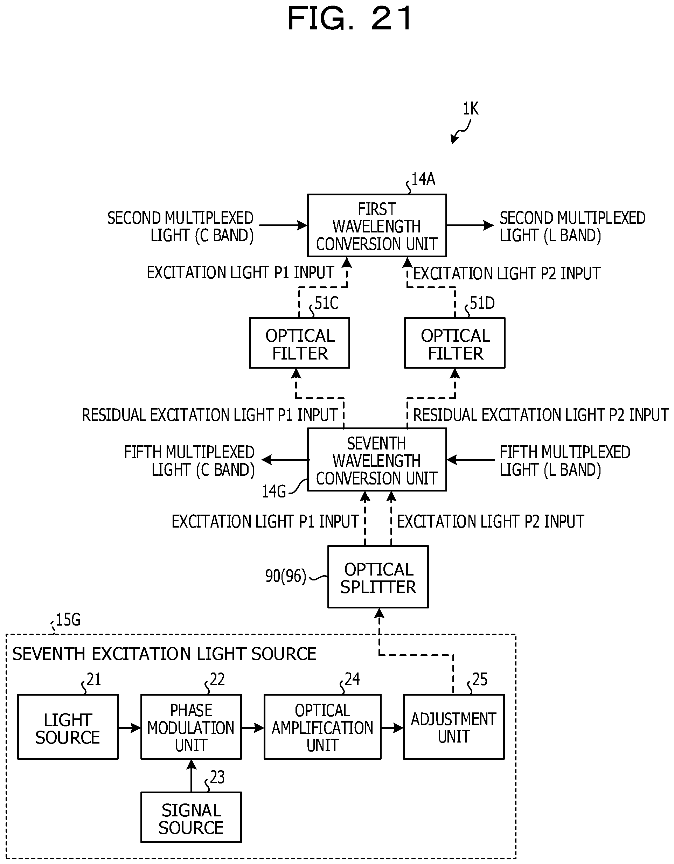

Note that, in the above eleventh embodiment, for example, the residual components of the excitation light P1 and P2 of the first excitation light source 15A used in the first wavelength conversion unit 14A has been reused for the seventh wavelength conversion unit 14G. However, an embodiment is not limited to the case, and the embodiment will be described below as a twelfth embodiment. FIG. 21 is an explanatory diagram illustrating an example of a connection configuration of a seventh excitation light source 15G for polarization multiplexed light, a first wavelength conversion unit 14A, and a seventh wavelength conversion unit 14G according to the twelfth embodiment. Note that, for the sake of convenience of description, description of overlapping configurations and operations is omitted by providing the same reference numerals to the same configurations as those of the transmission system 1J of the eleventh embodiment.

### [Twelfth Embodiment]

An adjustment unit 25 in the seventh excitation light source 15G outputs excitation light to an optical splitter 90 (96). The optical splitter 90 (96) splits and outputs excitation light P1 and excitation light P2 to the seventh wavelength conversion unit 14G. The seventh wavelength conversion unit 14G causes a nonlinear optical medium 33 to propagate L-band fifth multiplexed light, and the excitation light P1 and the excitation light P2 to convert the L-band fifth multiplexed light into C-band fifth multiplexed light. Furthermore, the seventh wavelength conversion unit 14G outputs residual excitation light P1 that is transmitted light used for wavelength conversion to an optical filter 51C, and outputs residual excitation light P2 to an optical filter 51D.

The optical filter 51C extracts the excitation light P1 from the residual excitation light P1 and outputs the extracted excitation light P1 to the first wavelength conversion unit 14A. Further, the optical filter 51D extracts the excitation light P2 from the residual excitation light P2 and outputs the extracted excitation light P2 to the first wavelength conversion unit 14A. The first wavelength conversion unit 14A causes the nonlinear optical medium 33 to propagate the excitation light P1 from the optical filter 51C and the excitation light P2 from the optical filter 51D, and C-band second multiplexed light to convert the C-band second multiplexed light into L-band second multiplexed light.

A first transmission device 2A has reused, for the first wavelength conversion unit 14A on the transmission side in the same device, the excitation light P1 and P2 of the seventh excitation light source 15G used for the seventh wavelength conversion unit 14G on the reception side. As a result, a first excitation light source 15A used for the first wavelength conversion unit 14A can be eliminated.

A transmission device 2 according to the twelfth embodiment has reused residual components of the excitation light P1 and P2 used for wavelength conversion on the reception side as the excitation light for wavelength conversion on the transmission side in the same device. As a result, even in a wavelength conversion unit 142 for polarization multiplexed light, improvement of use efficiency of the excitation light, reduction of a power amount with reduction of the excitation light source 15, compact component sizes, and a decrease in component cost can be achieved.

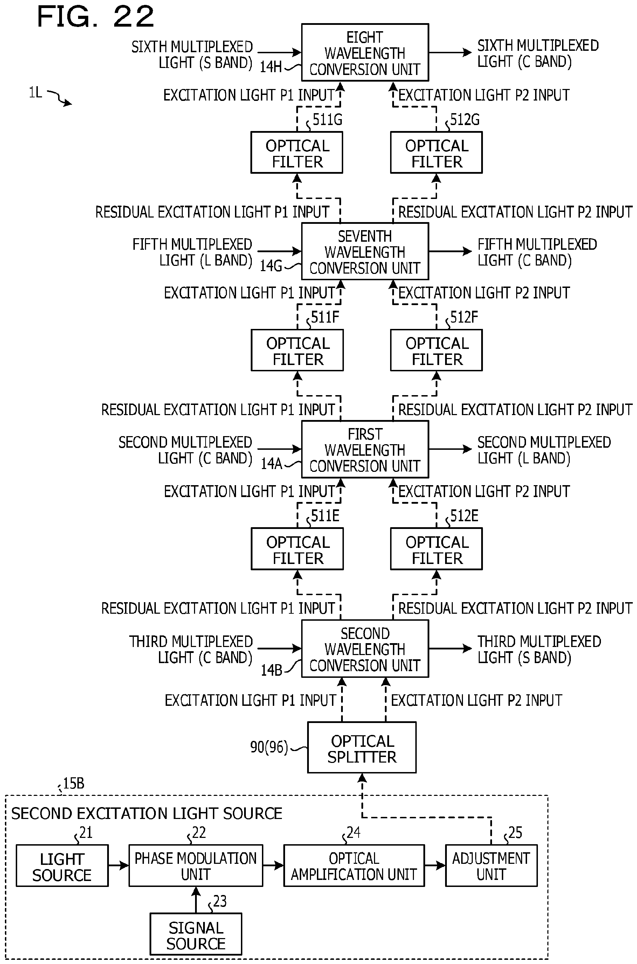

An embodiment of a case of adopting a wavelength conversion unit 142 for polarization multiplexed light as a wavelength conversion unit 14 in the transmission system 1H illustrated in FIGs. 15A and 15B will be described below as a thirteenth embodiment. FIG. 22 is an explanatory diagram illustrating an example of a connection configuration of a second excitation light source 15B for polarization multiplexed light, a first wavelength conversion unit 14A, a second wavelength conversion unit 14B, a seventh wavelength conversion unit 14G, and an eighth wavelength conversion unit 14H according to the thirteenth embodiment.

### [Thirteenth Embodiment]

An adjustment unit 25 in the second excitation light source 15B outputs excitation light to an optical splitter 90 (96). The optical splitter 90 (96) splits and outputs excitation light P1 and excitation light P2 to the second wavelength conversion unit 14B. The second wavelength conversion unit 14B causes a nonlinear optical medium 33 to propagate C-band third multiplexed light and the excitation light P1 and P2 from the second excitation light source 15B to convert the C-band third multiplexed light into S-band third multiplexed light. Furthermore, the second wavelength conversion unit 14B outputs residual excitation light P1 that is transmitted light used for wavelength conversion to an optical filter 511E, and outputs residual excitation light P2 that is transmitted light to an optical filter 512E. The optical filter 511E extracts only the excitation light P1 from the residual excitation light P1. The optical filter 512E extracts only the excitation light P2 from the residual excitation light P2.

The first wavelength conversion unit 14A causes the nonlinear optical medium 33 to propagate the excitation light P1 extracted through the optical filter 511E and the excitation light P2 extracted through the optical filter 512E, and C-band second multiplexed light to convert the C-band second multiplexed light into L-band second multiplexed light. Furthermore, the first wavelength conversion unit 14A outputs residual excitation light P1 that is transmitted light used for wavelength conversion to an optical filter 511F, and outputs residual excitation light P2 that is transmitted light to an optical filter 512F. The optical filter 511F extracts only the excitation light P1 from the residual excitation light P1. The optical filter 512F extracts only the excitation light P2 from the residual excitation light P2.

The seventh wavelength conversion unit 14G causes the nonlinear optical medium 33 to propagate the excitation light P1 extracted through the optical filter 511F and the excitation light P2 extracted through the optical filter 512F, and L-band fifth multiplexed light to convert the L-band fifth multiplexed light into the C-band fifth multiplexed light. Furthermore, the seventh wavelength conversion unit 14G outputs residual excitation light P1 that is transmitted light used for wavelength conversion to an optical filter 511G, and outputs residual excitation light P2 that is transmitted light to an optical filter 512G. The optical filter 511G extracts only the excitation light P1 from the residual excitation light P1. The optical filter 512G extracts only the excitation light P2 from the residual excitation light P2.

The eighth wavelength conversion unit 14H causes the nonlinear optical medium 33 to propagate the excitation light P1 extracted through the optical filter 511G and the excitation light P2 extracted through the optical filter 512G, and S-band sixth multiplexed light to convert the S-band sixth multiplexed light into C-band sixth multiplexed light.

A transmission device 2 of a transmission system 1L according to the thirteenth embodiment reuses residual components of the excitation light P1 and P2 used for one wavelength conversion as the excitation light for another wavelength conversion in the same device. As a result, even in the wavelength conversion unit 142 for polarization multiplexed light, improvement of use efficiency of the excitation light, reduction of a power amount with reduction of the excitation light source 15, compact component sizes, and a decrease in component cost can be achieved.

FIG. 17 has illustrated the wavelength conversion unit 142 for polarization multiplexed light. However, a wavelength conversion unit for polarization multiplexed light is not limited to the case, and an embodiment of the wavelength conversion unit will be described below as a fourteenth embodiment.

### [Fourteenth Embodiment]

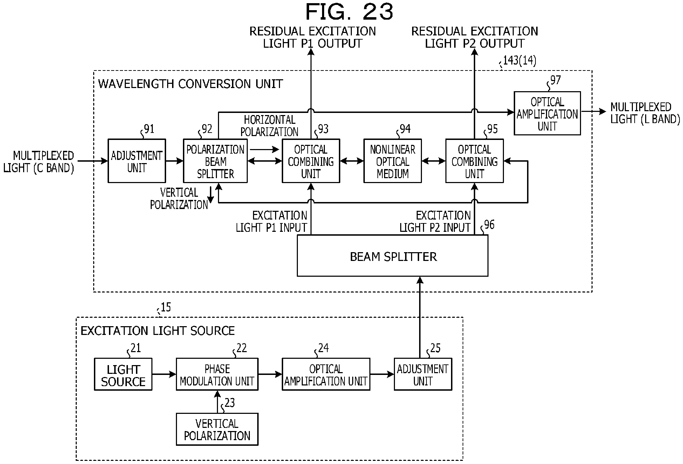

FIG. 23 is an explanatory diagram illustrating an example of a wavelength conversion unit 14 according to the fourteenth embodiment. The wavelength conversion unit 14 illustrated in FIG. 23 is a wavelength conversion unit 143 for polarization multiplexed light. The wavelength conversion unit 143 includes an adjustment unit 91, a polarization beam splitter 92, an optical combining unit 93, a nonlinear optical medium 94, an optical combining unit 95, an optical splitter 96, and an optical amplification unit 97. The optical splitter 96 splits excitation light P1 and P2 from an adjustment unit 25 in an excitation light source 15, and outputs the excitation light P1 to the optical combining unit 93 and the excitation light P2 to the optical demultiplexing unit 95.

The adjustment unit 91 adjusts light intensity of C-band vertically polarized and horizontally polarized multiplexed light, and outputs the multiplexed light after adjustment to the polarization beam splitter 92. The polarization beam splitter 92 splits the multiplexed light into the horizontally polarized multiplexed light and the vertically polarized multiplexed light, and outputs the horizontally polarized multiplexed light to the clockwise optical combining unit 93 and the vertically polarized multiplexed light to the counterclockwise optical combining unit 95. Note that the clockwise direction is a path from the polarization beam splitter 92 to the optical combining unit 93 → the nonlinear optical medium 94 → the optical combining unit 95 → the polarization beam splitter 92. Further, the counterclockwise direction is a path from the polarization beam splitter 92 to the optical combining unit 95 → the nonlinear optical medium 94 → the optical combining unit 93 → the polarization beam splitter 92.

In the case of the clockwise direction, the optical combining unit 93 combines the C-band horizontally polarized multiplexed light and the excitation light P1, and outputs the combined horizontally polarized multiplexed light to the nonlinear optical medium 94. The nonlinear optical medium 94 propagates the horizontally polarized multiplexed light and the excitation light P1 to convert the C-band horizontally polarized multiplexed light into L-band horizontally polarized multiplexed light, and outputs the L-band horizontally polarized multiplexed light to the optical combining unit 95. Because of the clockwise direction, the optical combining unit 95 outputs the L-band horizontally polarized multiplexed light to the polarization beam splitter 92, and outputs the excitation light P1 transmitted through the nonlinear optical medium 94 as residual excitation light P1.

In the case of the counterclockwise direction, the optical combining unit 95 combines the C-band vertically polarized multiplexed light and the excitation light P2, and outputs the combined vertically polarized multiplexed light to the nonlinear optical medium 94. The nonlinear optical medium 94 propagates the combined vertically polarized multiplexed light and excitation light P2 to convert the C-band vertically polarized multiplexed light into L-band vertically polarized multiplexed light, and outputs the L-band vertically polarized multiplexed light to the optical combining unit 93. Because of the counterclockwise direction, the optical combining unit 93 outputs the L-band vertically polarized multiplexed light to the polarization beam splitter 92, and outputs the excitation light P2 transmitted through the nonlinear optical medium 94 as residual excitation light P2. Then, the polarization beam splitter 92 combines the L-band horizontally polarized multiplexed light from the optical combining unit 95 and the L-band vertically polarized multiplexed light from the optical combining unit 93, and outputs L-band horizontally polarized multiplexed light and vertically polarized multiplexed light to the optical amplification unit 97. The optical amplification unit 97 optically amplifies the L-band horizontally polarized and vertically polarized multiplexed light from the polarization beam splitter 92, and outputs the horizontally polarized and vertically polarized multiplexed light after optical amplification.

The wavelength conversion unit 143 has a smaller number of components than the wavelength conversion units 142, and can convert the C-band vertically polarized and horizontally polarized multiplexed light into the L-band vertically polarized and horizontally polarized multiplexed light using the excitation light P1 and P2.

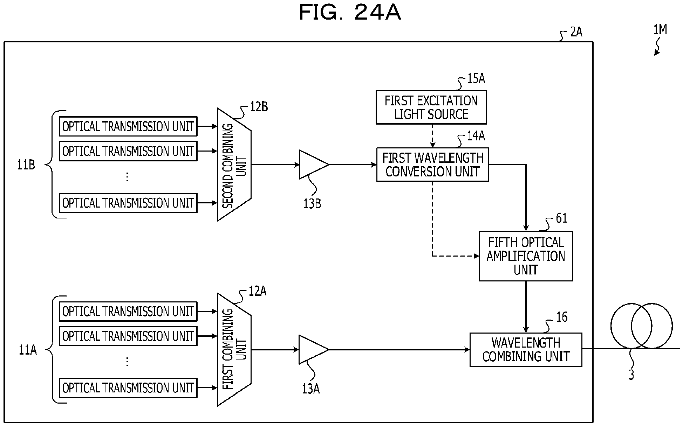

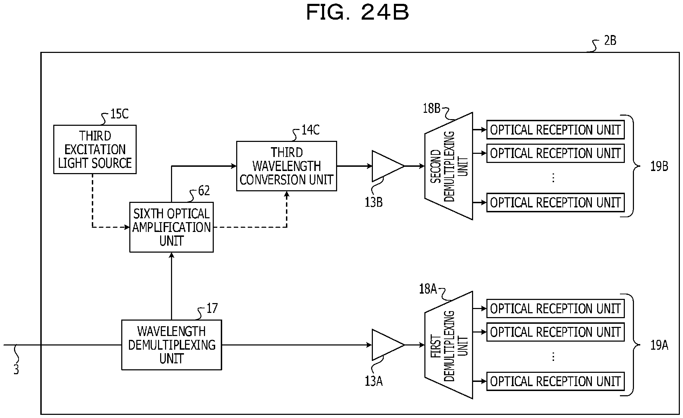

The transmission device 2 of the transmission system 1C according to the fourth embodiment has reused, for the wavelength conversion unit 14 on the reception side in the same device, the residual excitation light used for wavelength conversion of the wavelength conversion unit 14 on the transmission side. However, the reuse unit of the residual excitation light is not limited to the wavelength conversion unit 14 and can be changed as appropriate. An embodiment thereof will be described below as a fifteenth embodiment. FIGs. 24A and 24B are explanatory diagrams illustrating an example of a transmission system 1M according to the fifteenth embodiment. Note that, for the sake of convenience of description, description of overlapping configurations and operations is omitted by providing the same reference numerals to the same configurations as those of the transmission system 1A illustrated in FIG. 5.

### [Fifteenth Embodiment]

A fifth optical amplification unit 61 is arranged instead of a fourth optical amplification unit 41A between a first wavelength conversion unit 14A and a wavelength combining unit 16 in a first transmission device 2A illustrated in FIGs. 24A and 24B. The first excitation light source 15A supplies excitation light to the first wavelength conversion unit 14A. The first wavelength conversion unit 14A supplies residual excitation light that is transmitted light used for wavelength conversion from the first excitation light source 15A to the fifth optical amplification unit 61.

Furthermore, a sixth optical amplification unit 62 is arranged instead of a fourth optical amplification unit 41B between a wavelength demultiplexing unit 17 and a third wavelength conversion unit 14C in a second transmission device 2B. A third excitation light source 15C supplies excitation light to the sixth optical amplification unit 62 instead of to the third wavelength conversion unit 14C. The sixth optical amplification unit 62 supplies residual excitation light that is transmitted light used for optical amplification from the third excitation light source 15C to the third wavelength conversion unit 14C.

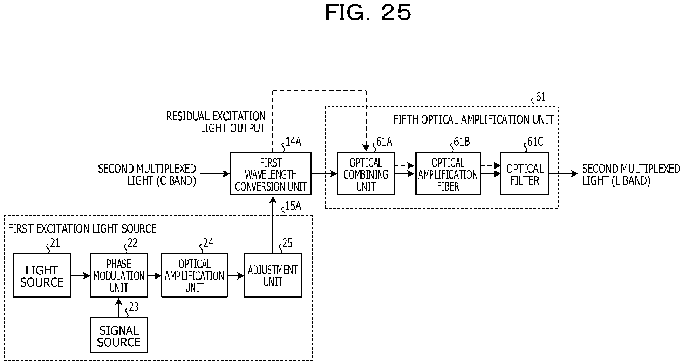

FIG. 25 is an explanatory diagram illustrating an example of the fifth optical amplification unit 61. The fifth optical amplification unit 61 illustrated in FIG. 25 includes an optical combining unit 61A, an optical amplification fiber 61B, and an optical filter 61C. The optical combining unit 61A combines the residual excitation light from the first wavelength conversion unit 14A and L-band second multiplexed light from the first wavelength conversion unit 14A, and outputs the residual excitation light and second multiplexed light to the optical amplification fiber 61B. The optical amplification fiber 61B propagates the L-band second multiplexed light and the residual excitation light to optically amplify the L-band second multiplexed light. The optical filter 61C removes the component of the residual excitation light from the L-band second multiplexed light after optical amplification by the optical amplification fiber 61B, and outputs the L-band second multiplexed light.

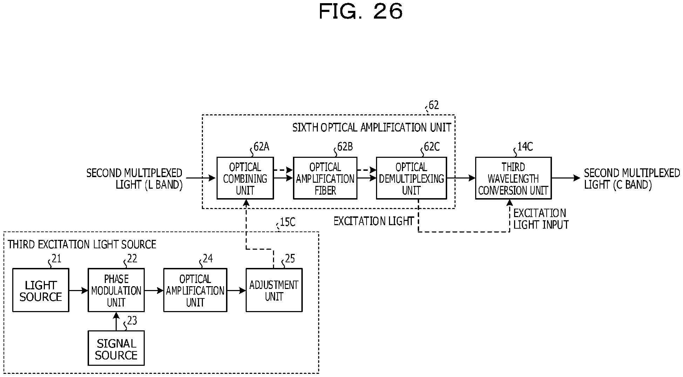

FIG. 26 is an explanatory diagram illustrating an example of the sixth optical amplification unit 62. The sixth optical amplification unit 62 illustrated in FIG. 26 includes an optical combining unit 62A, an optical amplification fiber 62B, and an optical demultiplexing unit 62C. The optical combining unit 62A combines the excitation light from the third excitation light source 15C and the L-band second multiplexed light, and outputs the excitation light and the second multiplexed light to the optical amplification fiber 62B. The optical amplification fiber 62B propagates the L-band second multiplexed light and the excitation light to optically amplify the L-band second multiplexed light The optical demultiplexing unit 62C demultiplexes the L-band second multiplexed light after optical amplification by the optical amplification fiber 62B and the residual excitation light, and outputs the L-band second multiplexed light to the third wavelength conversion unit 14C. Further, the optical demultiplexing unit 62C outputs the residual excitation light to the third wavelength conversion unit 14C. The third wavelength conversion unit 14C causes a nonlinear optical medium 33 to propagate the L-band second multiplexed light and the residual excitation light to convert the L-band second multiplexed light into C-band second multiplexed light.

The first transmission device 2A reuses, for the fifth optical amplification unit 61 at the subsequent stage of the first wavelength conversion unit 14A, the excitation light of the first excitation light source 15A used for wavelength conversion of the first wavelength conversion unit 14. Therefore, an excitation light source to be used for the fifth optical amplification unit 61 can be eliminated. Furthermore, since the fifth optical amplification unit 61 is forwardly excited from the optical combining unit 61A to the optical filter 61C with the residual excitation light, optical amplification such as erbium doped optical fiber amplifier (EDFA) amplification, lumped Raman amplification, and parametric amplification can be realized for a signal on a path between the optical combining unit 61A and the optical filter 61C, for example.

The second transmission device 2B reuses, for the third wavelength conversion unit 14C in the subsequent stage of the sixth optical amplification unit 62, the excitation light of the third excitation light source 15C used for the sixth optical amplification unit 62. Therefore, an excitation light source to be used for the third wavelength conversion unit 14C can be eliminated. Furthermore, in the sixth optical amplification unit 62, the excitation light from the third excitation light source 15C is forwardly excited from the optical combining unit 62A to the optical demultiplexing unit 62C. Therefore, optical amplification such as EDFA amplification, lumped Raman amplification, and parametric amplification can be realized for a signal on a path between the optical combining unit 62A and the optical demultiplexing unit 62C, for example.

The transmission device 2 of the transmission system 1M has reused the excitation light used for wavelength conversion of the wavelength conversion unit 14 as the excitation light of optical components in the same device. As a result, improvement of use efficiency of the excitation light, reduction of a power amount with reduction of the excitation light source, compact component sizes, and a decrease in component cost can be achieved.

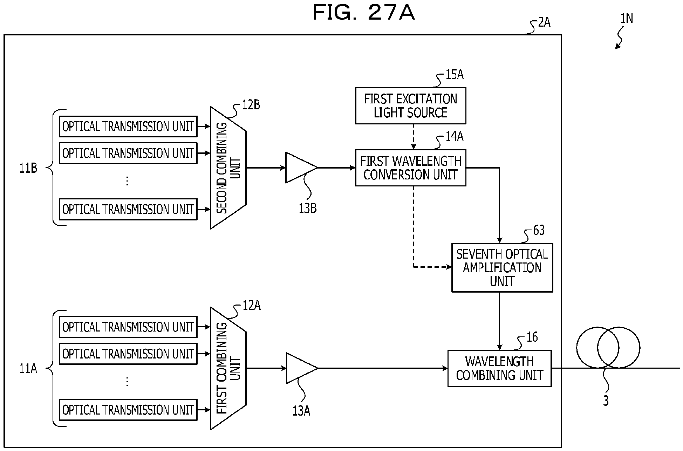

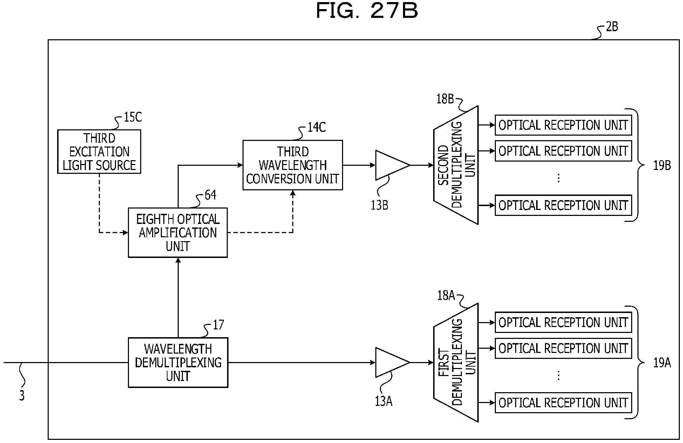

Furthermore, the transmission device 2 has reused the excitation light used for optical amplification of the optical amplification unit as the excitation light of the wavelength conversion unit 14 in the same device. As a result, improvement of use efficiency of the excitation light, reduction of a power amount with reduction of the excitation light source, compact component sizes, and a decrease in component cost can be achieved. FIGs. 27A and 27B are explanatory diagrams illustrating an example of a transmission system 1N according to a sixteenth embodiment. Note that, for the sake of convenience of description, description of overlapping configurations and operations is omitted by providing the same reference numerals to the same configurations as those of the transmission system 1M illustrated in FIGs. 24A and 24B.

### [Sixteenth Embodiment]

A seventh optical amplification unit 63 is arranged instead of a fifth optical amplification unit 61 between a first wavelength conversion unit 14A and a wavelength combining unit 16 in a first transmission device 2A illustrated in FIGs. 27A and 27B. The first excitation light source 15A supplies excitation light to the first wavelength conversion unit 14A. The first wavelength conversion unit 14A supplies residual excitation light that is transmitted light used for wavelength conversion from the first excitation light source 15A to the seventh optical amplification unit 63.

Furthermore, an eighth optical amplification unit 64 is arranged instead of a sixth optical amplification unit 62 between a wavelength demultiplexing unit 17 and a third wavelength conversion unit 14C in a second transmission device 2B. The third excitation light source 15C supplies excitation light to the eighth optical amplification unit 64. The eighth optical amplification unit 64 supplies residual excitation light that is transmitted light used for optical amplification from the third excitation light source 15C to the third wavelength conversion unit 14C.

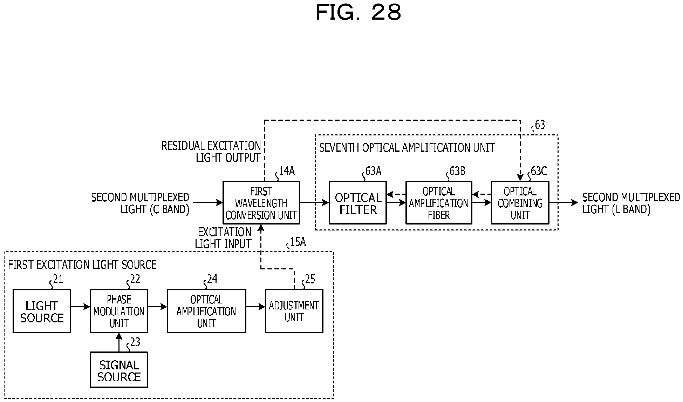

FIG. 28 is an explanatory diagram illustrating an example of the seventh optical amplification unit 63. The seventh optical amplification unit 63 illustrated in FIG. 28 includes an optical filter 63A, an optical amplification fiber 63B, and an optical combining unit 63C. The first wavelength conversion unit 14A outputs L-band second multiplexed light to the optical filter 63A, and outputs the residual excitation light that is transmitted light used for wavelength conversion to the optical combining unit 63C. The optical combining unit 63C optically combines the residual excitation light from the first wavelength conversion unit 14A, and outputs the residual excitation light to the optical amplification fiber 63B. Furthermore, the optical amplification fiber 63B uses the residual excitation light from the optical combining unit 63C for optical amplification, and outputs the residual excitation light that is transmitted light used for the optical amplification to the optical filter 63A.

The optical filter 63A transmits the L-band second multiplexed light, of the L-band second multiplexed light from the first wavelength conversion unit 14A and the residual excitation light used for optical amplification from the optical amplification fiber 63B, and outputs the L-band second multiplexed light to the optical amplification fiber 63B. Furthermore, the optical amplification fiber 63B propagates the L-band second multiplexed light transmitted through the optical filter and the optically combined residual excitation light from the optical combining unit 63C to optically amplify the L-band second multiplexed light, and outputs the L-band second multiplexed light after optical amplification to the optical combining unit 63C. The optical combining unit 63C combines the L-band second multiplexed light and the residual excitation light that is transmitted light used for wavelength conversion of the first wavelength conversion unit 14A, and outputs the L-band second multiplexed light.

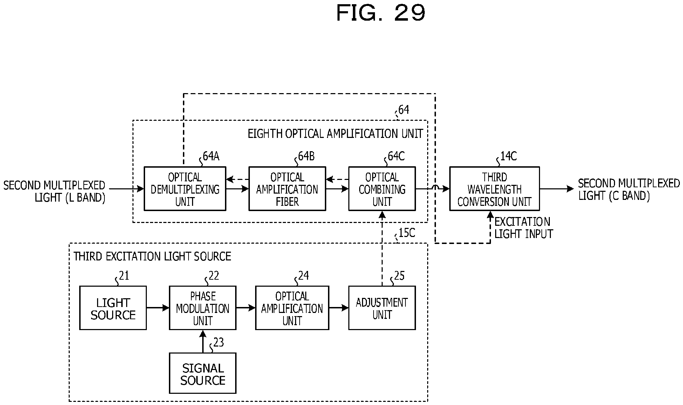

FIG. 29 is an explanatory diagram illustrating an example of the eighth optical amplification unit 64. The eighth optical amplification unit 64 illustrated in FIG. 29 includes an optical demultiplexing unit 64A, an optical amplification fiber 64B, and an optical combining unit 64C. An adjustment unit 25 of the third excitation light source 15C outputs the excitation light to the optical combining unit 64C in the eighth optical amplification unit 64. The optical combining unit 64C optically combines the excitation light from the third excitation light source 15C, and outputs the excitation light to the optical amplification fiber 64B. The optical amplification fiber 64B outputs the residual excitation light that is transmitted light used for optical amplification to the optical demultiplexing unit 64A. Further, the optical demultiplexing unit 64A outputs the residual excitation light that is transmitted light used for optical amplification to the third wavelength conversion unit 14C.

The optical demultiplexing unit 64A demultiplexes the L-band second multiplexed light and the residual excitation light from the optical amplification fiber 64B, and outputs the L-band second multiplexed light to the optical amplification fiber 64B. The optical amplification fiber 64B propagates the L-band second multiplexed light and the excitation light from the optical combining unit 64C to optically amplify the L-band second multiplexed light, and outputs the L-band second multiplexed light after optical amplification to the optical combining unit 64C. The optical combining unit 64C combines the L-band second multiplexed light after optical amplification and the excitation light from the third excitation light source 15C, and outputs the L-band second multiplexed light to the third wavelength conversion unit 14C.

The third wavelength conversion unit 14C causes a nonlinear optical medium 33 to propagate the L-band second multiplexed light from the optical combining unit 64C and the residual excitation light from the optical demultiplexing unit 64A to convert the L-band second multiplexed light into C-band second multiplexed light.

The first transmission device 2A reuses, for the seventh optical amplification unit 63 at the subsequent stage of the first wavelength conversion unit 14A, the excitation light of the first excitation light source 15A used for wavelength conversion of the first wavelength conversion unit 14A. Therefore, an excitation light source to be used for the seventh optical amplification unit 63 can be eliminated. Furthermore, the seventh optical amplification unit 63 is backwardly excited from the optical combining unit 63C to the optical filter 63A by the residual excitation light from the first wavelength conversion unit 14A. As a result, the optical amplification such as EDFA amplification, lumped Raman amplification, and parametric amplification can be realized for a signal on a path between the optical combining unit 63C and the optical filter 63A, for example.

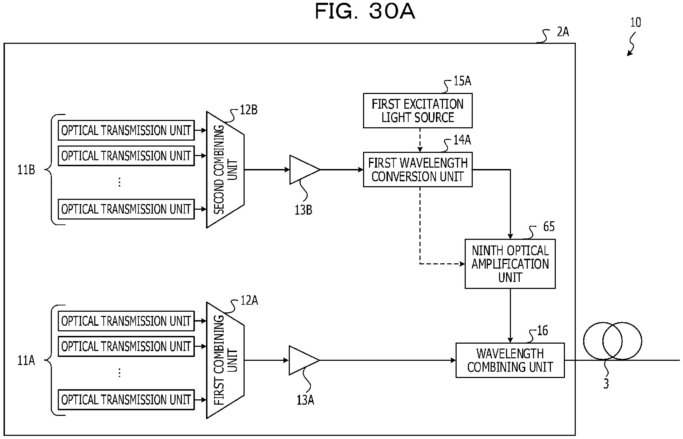

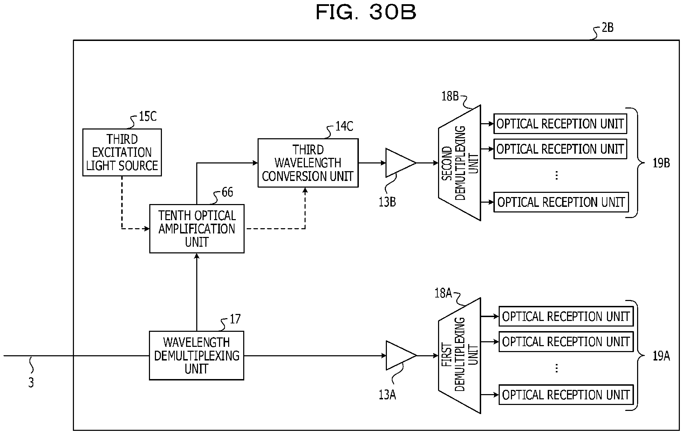

The second transmission device 2B reuses, for the third wavelength conversion unit 14C in the subsequent stage of the eighth optical amplification unit 64, the excitation light of the third excitation light source 15C used for the eighth optical amplification unit 64. Therefore, an excitation light source to be used for the third wavelength conversion unit 14C can be eliminated. Furthermore, in the eighth optical amplification unit 64, the excitation light from the third excitation light source 15C is backwardly excited from the optical combining unit 64C to the optical demultiplexing unit 64A. Therefore, optical amplification such as EDFA amplification, lumped Raman amplification, and parametric amplification can be realized for a signal on a path between the optical combining unit 64C and the optical demultiplexing unit 64A, for example. FIGs. 30A and 30B are explanatory diagrams illustrating an example of a transmission system 1O according to a seventeenth embodiment. Note that, for the sake of convenience of description, description of overlapping configurations and operations is omitted by providing the same reference numerals to the same configurations as those of the transmission system 1M illustrated in FIGs. 24A and 24B.

### [Seventeenth Embodiment]

A ninth optical amplification unit 65 is arranged instead of a fifth optical amplification unit 61 between a first wavelength conversion unit 14A and a wavelength combining unit 16 in a first transmission device 2A illustrated in FIGs. 30A and 30B. The first excitation light source 15A supplies excitation light to the first wavelength conversion unit 14A. The first wavelength conversion unit 14A supplies residual excitation light that is transmitted light used for wavelength conversion from the first excitation light source 15A to the ninth optical amplification unit 65.

Furthermore, a tenth optical amplification unit 66 is arranged instead of a sixth optical amplification unit 62 between a wavelength demultiplexing unit 17 and a third wavelength conversion unit 14C in a second transmission device 2B. The third excitation light source 15C supplies excitation light to the tenth optical amplification unit 66. The tenth optical amplification unit 66 supplies residual excitation light that transmitted light used for light amplification from the third excitation light source 15C to the third wavelength conversion unit 14C.

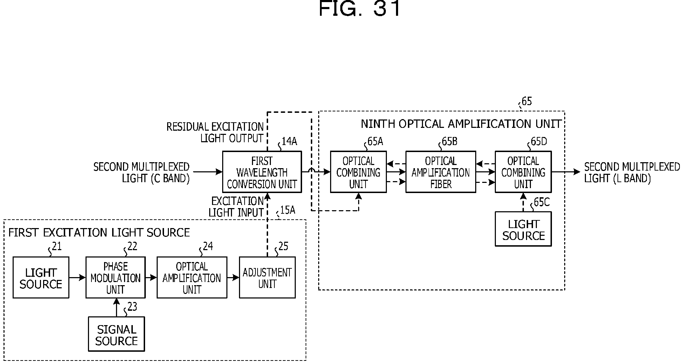

FIG. 31 is an explanatory diagram illustrating an example of the ninth optical amplification unit 65. The ninth optical amplification unit 65 illustrated in FIG. 29 includes an optical combining unit 65A, an optical amplification fiber 65B, an optical combining unit 65D, and a light source 65C. The first wavelength conversion unit 14A supplies residual excitation light that is transmitted light used for wavelength conversion from the first excitation light source 15A to the optical combining unit 65A in the ninth optical amplification unit 65. The optical combining unit 65A optically combines the residual excitation light and outputs the residual excitation light to the optical amplification fiber 65B. The optical amplification fiber 65B outputs the residual excitation light that is transmitted light used for optical amplification to the optical combining unit 65D. Further, the light source 65C supplies the excitation light to the optical combining unit 65D. The optical combining unit 65D outputs the excitation light supplied from the light source 65C to the optical amplification fiber 65B. Furthermore, the optical amplification fiber 65B outputs the residual excitation light that is transmitted light used for optical amplification to the optical combining unit 65A.

The optical combining unit 65A combines L-band second multiplexed light from the first wavelength conversion unit 14A and the residual excitation light from the first wavelength conversion unit 14A and the optical amplification fiber 65B, and outputs the L-band second multiplexed light and the residual excitation light from the first wavelength conversion unit 14A to the optical amplification fiber 65B. The optical amplification fiber 65B propagates the L-band second multiplexed light and the excitation light from the optical combining unit 65A and the optical combining unit 65D to optically amplify the L-band second multiplexed light, and outputs the L-band second multiplexed light after optical amplification to the optical combining unit 65D.

Furthermore, the optical combining unit 65D combines the L-band second multiplexed light, the excitation light from the light source 65C, and the residual excitation light from the optical amplification fiber 65B, and outputs the L-band second multiplexed light.

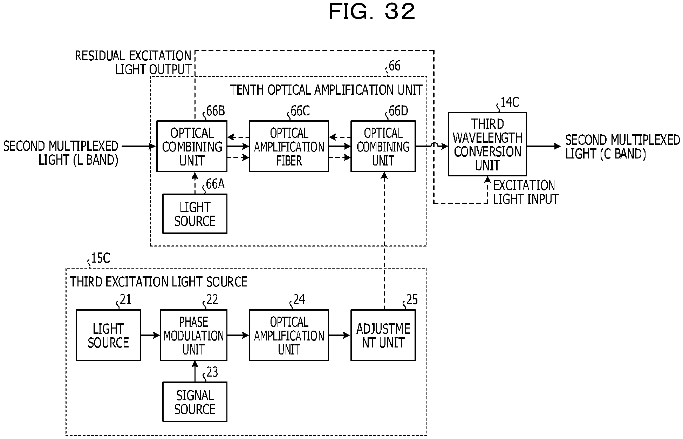

FIG. 32 is an explanatory diagram illustrating an example of the tenth optical amplification unit 66. The tenth optical amplification unit 66 illustrated in FIG. 32 includes a light source 66A, an optical combining unit 66B, an optical amplification fiber 66C, and an optical combining unit 66D. The wavelength demultiplexing unit 17 outputs the L-band second multiplexed light to the optical combining unit 66B in the tenth optical amplification unit 66.

An adjustment unit 25 in the third excitation light source 15C outputs the excitation light to the optical combining unit 66D in the tenth optical amplification unit 66. The optical combining unit 66D optically combines the excitation light supplied from the third excitation light source 15C, and outputs the excitation light to the optical amplification fiber 66C. Furthermore, the optical amplification fiber 66C outputs the residual excitation light of the third excitation light source 15C, which is transmitted light used for optical amplification, to the optical combining unit 66B. The light source 66A supplies the excitation light to the optical combining unit 66B. Furthermore, the optical combining unit 66B outputs the excitation light of the light source 66A to the optical amplification fiber 66C. The optical amplification fiber 66C outputs the residual excitation light of the light source 66A, which is transmitted light used for optical amplification, to the optical combining unit 66D. The optical combining unit 66B supplies the residual excitation light of the third excitation light source 15C to the third wavelength conversion unit 14C.

The optical combining unit 66B combines the L-band second multiplexed light from the wavelength demultiplexing unit 17, the excitation light from the light source 66A, and the residual excitation light from the third excitation light source 15C, and outputs the L-band second multiplexed light and the excitation light from the light source 66A to the optical amplification fiber 66C. The optical amplification fiber 66C propagates the L-band second multiplexed light and the excitation light from the optical combining unit 66B and the optical combining unit 66D to optically amplify the L-band second multiplexed light, and outputs the L-band second multiplexed light after optical amplification to the optical combining unit 66D. Furthermore, the optical combining unit 66D combines the L-band second multiplexed light, the excitation light from the third excitation light source 15C, and the residual excitation light from the optical amplification fiber 66C, and outputs the L-band second multiplexed light to the third wavelength conversion unit 14C.

The third wavelength conversion unit 14C causes a nonlinear optical medium 33 to propagate the L-band second multiplexed light from the optical combining unit 66D and the residual excitation light from the optical combining unit 66B to convert the L-band second multiplexed light into C-band second multiplexed light, and outputs the C-band second multiplexed light.

The first transmission device 2A reuses, for the ninth optical amplification unit 65 at the subsequent stage of the first wavelength conversion unit 14A, the excitation light of the first excitation light source 15A used for wavelength conversion of the first wavelength conversion unit 14. Therefore, an excitation light source to be used for the ninth optical amplification unit 65 can be eliminated. Further, the ninth optical amplification unit 65 bidirectionally excites the optical combining unit 65A and the optical combining unit 65D with the residual excitation light of the first wavelength conversion unit 14A and the excitation light of the light source 65C. As a result, the optical amplification such as EDFA amplification, lumped Raman amplification, and parametric amplification can be realized for a signal on a path between the optical combining unit 65A and the optical combining unit 65D, for example.

The second transmission device 2B reuses, for the third wavelength conversion unit 14C in the subsequent stage of the tenth optical amplification unit 66, the excitation light of the third excitation light source 15C used for the tenth optical amplification unit 66. Therefore, an excitation light source to be used for the third wavelength conversion unit 14C can be eliminated. Furthermore, the tenth optical amplification unit 66 bidirectionally excites the optical combining unit 66B and the optical combining unit 66D with the residual excitation light of the third excitation light source 15C and the excitation light of the light source 66A. As a result, the optical amplification such as EDFA amplification, Raman amplification, and parametric amplification can be realized for a signal on a path between the optical combining unit 66B and the optical combining unit 66D, for example.

Note that, in the tenth optical amplification unit 66 illustrated in FIG. 32, the optical combining unit 66D has been connected with the third excitation light source 15C, and the optical combining unit 66B has been connected with the light source 66A. However, the optical combining unit 66D may be connected with the light source 66A and the optical combining unit 66B may be connected with the third excitation light source 15C, and appropriate change can be made.

### [Eighteenth Embodiment]

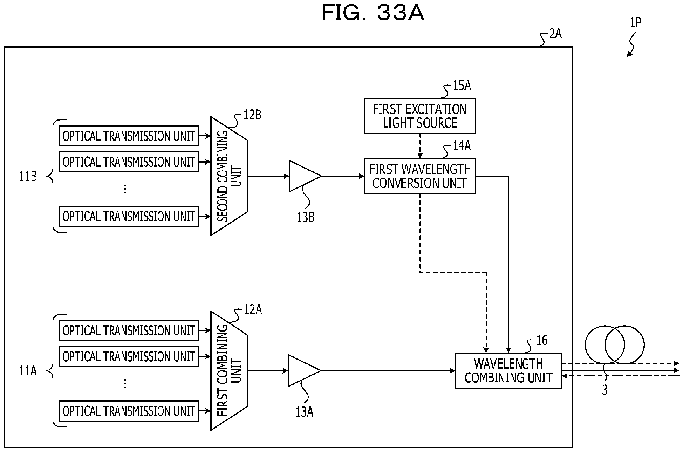

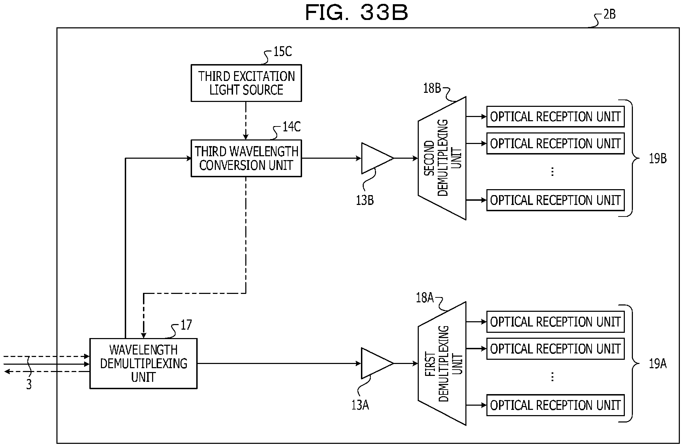

FIGs. 33A and 33B is an explanatory diagram illustrating an example of a transmission system 1P according to an eighteenth embodiment. Note that, for the sake of convenience of description, description of overlapping configurations and operations is omitted by providing the same reference numerals to the same configurations as those of the transmission system 1A illustrated in FIG. 5.

Differences of the transmission system 1P illustrated in FIGs. 33A and 33B from the transmission system 1A illustrated in FIG. 5 is that a fourth optical amplification unit 41A in a first transmission device 2A is deleted and a fourth optical amplification unit 41B in a second transmission device 2B is deleted. Then, the first transmission device 2A illustrated in FIGs. 33A and 33B outputs excitation light of a first excitation light source 15A to be used for a first wavelength conversion unit 14A to a transmission line 3 via a wavelength combining unit 16. Further, the second transmission device 2B outputs excitation light of a third excitation light source 15C to be used for a third wavelength conversion unit 14C to the transmission line 3 via a wavelength demultiplexing unit 17. As a result, the transmission line 3 can be optically amplified with the residual excitation light from the first excitation light source 15A and the residual excitation light from the third excitation light source 15C. Note that the optical amplification is, for example, distributed Raman amplification, parametric amplification, and the like.

The transmission line 3 can realize optical amplification by bidirectional excitation by the residual excitation light from the first excitation light source 15A on the first transmission device 2A side and the residual excitation light of the third excitation light source 15C on the second transmission device 2B side.

In the transmission system 1P according to the eighteenth embodiment, the excitation light from the first excitation light source 15A in the first transmission device 2A has been supplied to the transmission line 3 via the first wavelength conversion unit 14A and the wavelength combining unit 16. Furthermore, in the transmission system 1P, the excitation light from the third excitation light source 15B in the second transmission device 2B has been supplied to the transmission line 3 via the third wavelength conversion unit 14C and the wavelength demultiplexing unit 17. As a result, the transmission line 3 has been excited from both the first transmission device 2A and the second transmission device 2B. Therefore, the wavelength multiplexed light transmitted in the transmission line 3 can be optically amplified. Then, long-distance transmission can be realized between the first transmission device 2A and the second transmission device 2B.

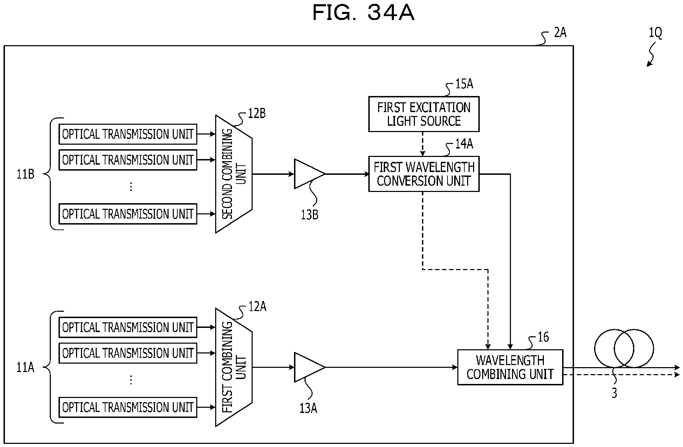

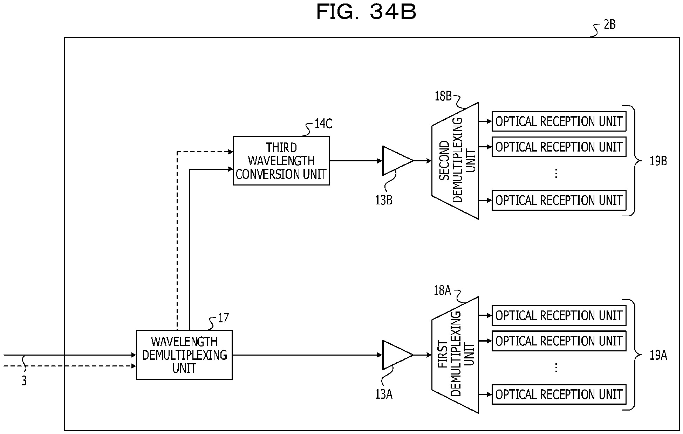

In the transmission system 1P according to the eighteenth embodiment, bidirectional excitation from the first transmission device 2A and the second transmission device 2B has been illustrated. However, an embodiment is not limited to the case and forward excitation from the first transmission device 2A may be adopted, and an embodiment thereof will be described below as a nineteenth embodiment. FIGs. 34A and 34B are explanatory diagrams illustrating an example of a transmission system 1Q according to the nineteenth embodiment. Note that, for the sake of convenience of description, description of overlapping configurations and operations is omitted by providing the same reference numerals to the same configurations as those of the transmission system 1P illustrated in FIGs. 33A and 33B.

### [Nineteenth Embodiment]

A difference of the transmission system 1Q illustrated in FIGs. 34A and 34B from the transmission system 1P illustrated in FIGs. 33A and 33B is that excitation light to be used for a third wavelength conversion unit 14C on a second transmission device 2B side is acquired from a first excitation light source 15A on a first transmission device 2A side.

A first wavelength conversion unit 14A in the first transmission device 2A causes a nonlinear optical medium 33 to propagate excitation light from the first excitation light source 15A and C-band second multiplexed light to convert the C-band second multiplexed light into L-band second multiplexed light.

Further, the first wavelength conversion unit 14A outputs residual excitation light of the first excitation light source 15A to the third wavelength conversion unit 14C via a wavelength combining unit 16, a transmission line 3, and a wavelength demultiplexing unit 17 on the second transmission device 2B side. Further, the wavelength demultiplexing unit 17 demultiplexes and outputs multiplexed light from the transmission line 3 into C-band first multiplexed light and L-band second multiplexed light. The wavelength demultiplexing unit 17 outputs the L-band second multiplexed light to the third wavelength conversion unit 14C.

The third wavelength conversion unit 14C causes the nonlinear optical medium 33 to propagate the residual excitation light from the first excitation light source 15A and the L-band second multiplexed light to convert the L-band second multiplexed light into the C-band second multiplexed light.

Moreover, the residual excitation light of the first excitation light source 15A passes through between the first wavelength conversion unit 14A in the first transmission device 2A and the third wavelength conversion unit 14C in the second transmission device 2B. Therefore, optical amplification in the transmission line 3 can be realized.

In the transmission system 1Q according to the nineteenth embodiment, the excitation light from the first excitation light source 15A in the first transmission device 2A has been supplied to the transmission line 3 via the first wavelength conversion unit 14A and the wavelength combining unit 16. As a result, the transmission line 3 has been forwardly excited from the first transmission device 2A. Therefore, the wavelength multiplexed light transmitted in the transmission line 3 can be optically amplified. Then, long-distance transmission can be realized between the first transmission device 2A and the second transmission device 2B.

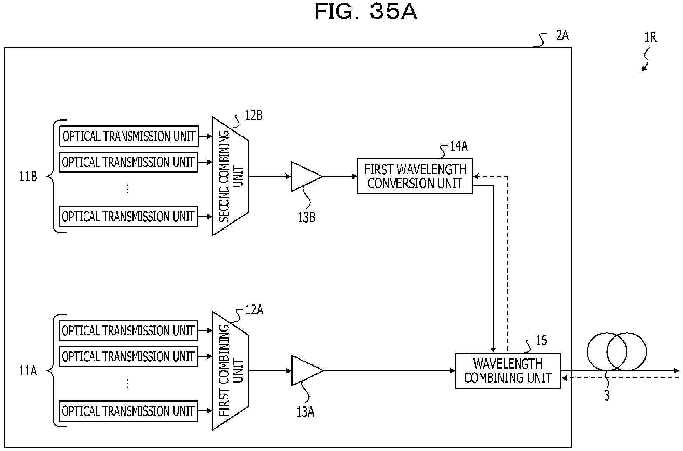

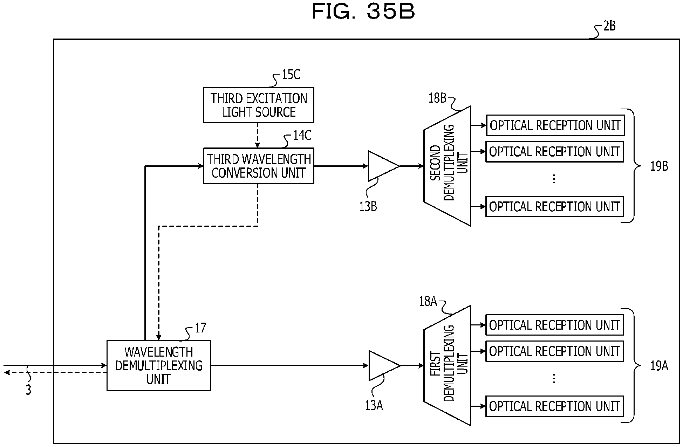

In the transmission system 1P according to the eighteenth embodiment, bidirectional excitation from the first transmission device 2A and the second transmission device 2B has been illustrated. However, an embodiment is not limited to the case and backward excitation from the second transmission device 2B may be adopted, and an embodiment thereof will be described below as a twentieth embodiment. FIGs. 35A and 35B are explanatory diagrams illustrating an example of a transmission system 1R according to the twentieth embodiment. Note that, for the sake of convenience of description, description of overlapping configurations and operations is omitted by providing the same reference numerals to the same configurations as those of the transmission system 1P illustrated in FIGs. 33A and 33B.

### [Twentieth Embodiment]

A difference of the transmission system 1R illustrated in FIGs. 35A and 35B from the transmission system 1P illustrated in FIGs. 33A and 33B is that excitation light to be used for a first wavelength conversion unit 14A on a first transmission device 2A side is acquired from a third excitation light source 15C on a second transmission device 2B side.

The third wavelength conversion unit 14C in the second transmission device 2B causes a nonlinear optical medium 33 to propagate the excitation light from the third excitation light source 15C and L-band second multiplexed light to convert the L-band second multiplexed light into C-band second multiplexed light.

Furthermore, the third wavelength conversion unit 14C outputs residual excitation light from the third excitation light source 15C to the first wavelength conversion unit 14A via a wavelength demultiplexing unit 17, the transmission line 3, and a wavelength combining unit 16 on the first transmission device 2A side. The first wavelength conversion unit 14A causes the nonlinear optical medium 33 to propagate the residual excitation light from the third excitation light source 15C and C-band second multiplexed light from a second optical amplification unit 13B to convert the C-band second multiplexed light into L-band second multiplexed light.

Moreover, the residual excitation light of the third excitation light source 15C passes through between the first wavelength conversion unit 14A in the first transmission device 2A and the third wavelength conversion unit 14C in the second transmission device 2B. Therefore, optical amplification in the transmission line 3 can be realized.

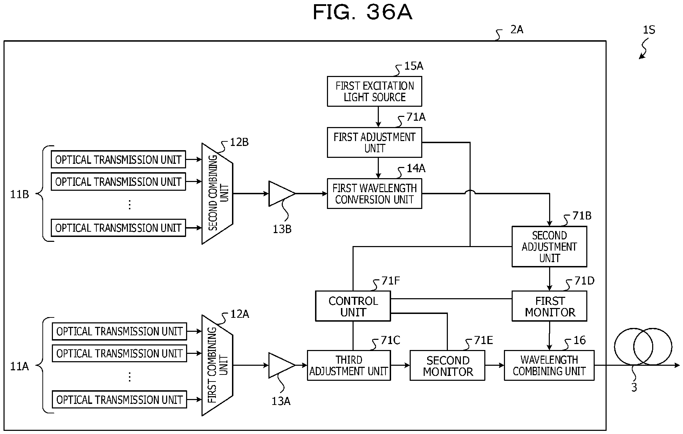

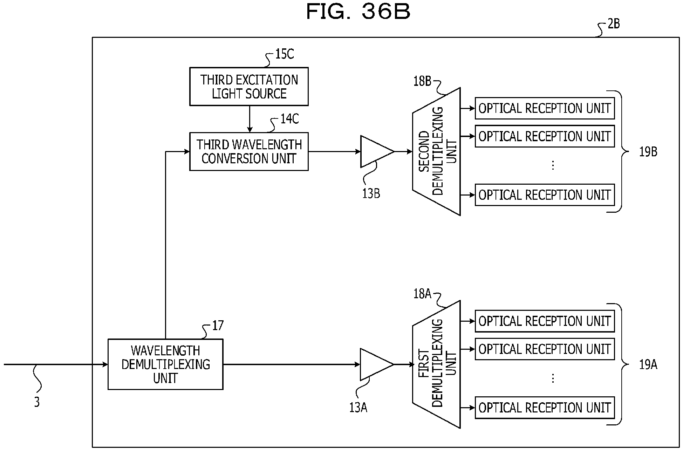

Furthermore, in the transmission system 1R according to the twentieth embodiment, the excitation light from the third excitation light source 15C in the second transmission device 2B has been supplied to the transmission line 3 via the third wavelength conversion unit 14C and the wavelength demultiplexing unit 17. As a result, the transmission line 3 has been backwardly excited from the second transmission device 2B. Therefore, the wavelength multiplexed light transmitted in the transmission line 3 can be optically amplified. Then, long-distance transmission can be realized between the first transmission device 2A and the second transmission device 2B. FIGs. 36A and 36B are explanatory diagrams illustrating an example of a transmission system IS according to a twenty-first embodiment. Note that, for the sake of convenience of description, description of overlapping configurations and operations is omitted by providing the same reference numerals to the same configurations as those of the transmission system 1A illustrated in FIG. 5.

### [Twenty-first Embodiment]

A first transmission device 2A illustrated in FIGs. 36A and 36B has a second adjustment unit 71B and a first monitor 71D arranged instead of a fourth optical amplification unit 41A illustrated in FIG. 5. Furthermore, in a second transmission device 2B illustrated in FIGs. 36A and 36B, a fourth optical amplification unit 41B illustrated in FIG. 5 is deleted. The first transmission device 2A includes a first adjustment unit 71A, a second adjustment unit 71B, a third adjustment unit 71C, a first monitor 71D, a second monitor 71E, and a control unit 71F. The first adjustment unit 71A is arranged between a first wavelength conversion unit 14A and a first excitation light source 15A, and adjusts an output level of excitation light from the first excitation light source 15A. The second adjustment unit 71B is arranged between the first wavelength conversion unit 14A and a wavelength combining unit 16, and adjusts an output level of second multiplexed light after wavelength conversion by the first wavelength conversion unit 14A.

The third adjustment unit 71C is arranged between a first optical amplification unit 13A and the wavelength combining unit 16, and adjusts an output level of first multiplexed light from the first optical amplification unit 13A. The first monitor 71D is, for example, an optical signal to noise ration (OSNR) monitor arranged between the second adjustment unit 71B and the wavelength combining unit 16, and which monitors an output level of second multiplexed light after adjustment by the second adjustment unit 71B. The second monitor 71E is, for example, an OSNR monitor arranged between the third adjustment unit 71C and the wavelength combining unit 16, and which monitors an output level of first multiplexed light after adjustment by the third adjustment unit 71C.

The control unit 71F controls the first adjustment unit 71A and the second adjustment unit 71B on the basis of a monitoring result of the first monitor 71D. That is, the control unit 71F controls the first adjustment unit 71A and the second adjustment unit 71B to adjust the output level of the second multiplexed light such that an OSNR value of L-band second multiplexed light measured in the first monitor 71D reaches allowable reception quality on the second transmission device 2B side. Note that the allowable reception quality is reception quality allowable on an optical reception unit 19 side in consideration of wavelength arrangement of an input of the transmission line 3, stimulated Raman scattering (SRS) on the transmission line 3, a noise index (NF) associated with wavelength conversion, and the like.

Since the first adjustment unit 71A adjusts the output level of the excitation light of the first excitation light source 15A, wavelength conversion efficiency in the first wavelength conversion unit 14A can be enhanced, and optical power after wavelength conversion can be increased. For example, the first adjustment unit 71A is an attenuator (ATT) or an optical amplifier. Since the wavelength of S band has a large power loss due to the influence of SRS, the output level of the excitation light of the first excitation light source 15A is adjusted to become large when a C-band wavelength is converted into an S-band wavelength. The power itself of the first excitation light source 15A may be adjusted instead of by the first adjustment unit 71A.

The second adjustment unit 71B adjusts an output level of L-band second multiplexed light output from the first wavelength conversion unit 14A. Thereby, the reception quality of the L-band second multiplexed light can be secured on the second transmission device 2B side. For example, the second adjustment unit 71B is an ATT or an optical amplifier. Similarly to the first adjustment unit 71A, the second adjustment unit 71B also adjusts the output level of the excitation light of the first excitation light source 15A to become large when converting a C-band wavelength into an S-band wavelength.

Further, the control unit 71F controls the third adjustment unit 71C based on a monitoring result of the second monitor 71E. That is, the control unit 71F adjusts the third adjustment unit 71C to adjust the output level of the first multiplexed light such that an OSNR value of C-band first multiplexed light reaches allowable reception quality on the second transmission device 2B side. The third adjustment unit 71C has adjusted the output level of the C-band first multiplexed light from the first optical amplification unit 13A. Therefore, the second transmission device 2B side can secure reception quality of the C-band first multiplexed light.

The first transmission device 2A according to the twenty-first embodiment adjusts the output level of the excitation light of the first excitation light source 15A by the first adjustment unit 71A on the basis of the monitoring result of the first monitor 71D. As a result, the output levels of the first multiplexed light and the second multiplexed light on the transmission line 3 can be amplified by distributed Raman amplification using the excitation light. Then, long-distance transmission can be realized between the first transmission device 2A and the second transmission device 2B.

The first transmission device 2A has adjusted the output level of the L-band second multiplexed light by the second adjustment unit 71B on the basis of the monitoring result of the first monitor 71D. Therefore, the second transmission device 2B side can secure reception quality of the L-band second multiplexed light.

The first transmission device 2A has adjusted the output level of the C-band first multiplexed light by the third adjustment unit 71C on the basis of the monitoring result of the second monitor 71E. Therefore, the second transmission device 2B side can secure reception quality of the C-band first multiplexed light.

Note that the first transmission device 2A has the first monitor 71D arranged between the first wavelength conversion unit 14A and the wavelength combining unit 16. However, the first monitor 71D may be arranged between the wavelength combining unit 16 and the transmission line 3, in the wavelength combining unit 16, on the transmission line 3, between the second optical amplification unit 13B and the first wavelength conversion unit 14A, or in the first wavelength conversion unit 14A.

Further, the first transmission device 2A has the second monitor 71E arranged between the first optical amplification unit 13A and the wavelength combining unit 16. However, the second monitor 71E may be arranged between the wavelength combining unit 16 and the transmission line 3, in the wavelength combining unit 16, or on the transmission line 3.

### [Twenty-second Embodiment]

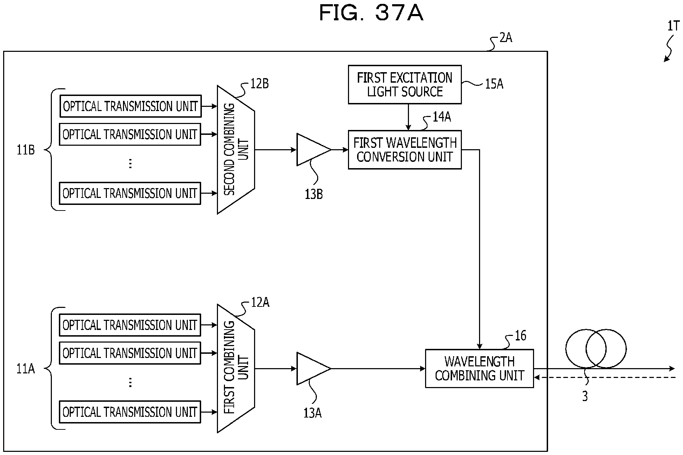

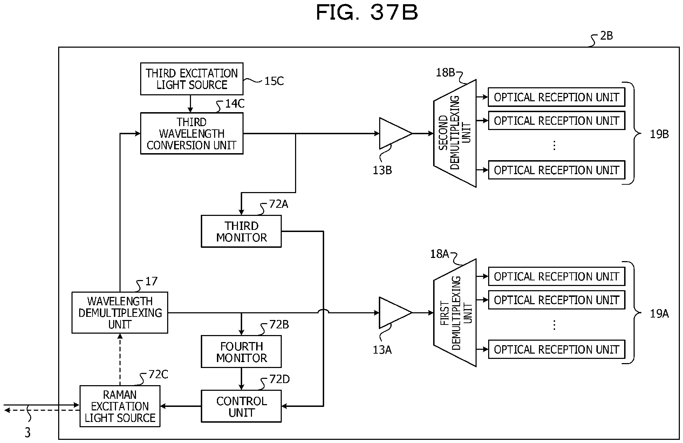

FIGs. 37A and 37B are explanatory diagrams illustrating an example of a transmission system 1T according to a twenty-second embodiment. Note that, for the sake of convenience of description, description of overlapping configurations and operations is omitted by providing the same reference numerals to the same configurations as those of the transmission system 1A illustrated in FIG. 5.

In a first transmission device 2A illustrated in FIGs. 37A and 37B, a fourth optical amplification unit 41A illustrated in FIG. 5 is deleted. Furthermore, in a second transmission device 2B illustrated in FIGs. 37A and 37B, a fourth optical amplification unit 41B illustrated in FIG. 5 is deleted. The second transmission device 2B includes a third monitor 72A, a fourth monitor 72B, a Raman excitation light source 72C, and a control unit 72D. The third monitor 72A is, for example, an OSNR monitor arranged between a third wavelength conversion unit 14C and a second optical amplification unit 13B, and which monitors an output level of second multiplexed light after wavelength conversion by the third wavelength conversion unit 14C. The fourth monitor 72B is, for example, an OSNR monitor arranged between a wavelength demultiplexing unit 17 and a first optical amplification unit 13A, and which monitors an output level of C-band first multiplexed light from the wavelength demultiplexing unit 17. The Raman excitation light source 72C outputs Raman excitation light to a transmission line 3 via the wavelength demultiplexing unit 17. The control unit 72D controls the Raman excitation light source 72C on the basis of monitoring results of the third monitor 72A and the fourth monitor 72B.

The control unit 72D causes the Raman excitation light source 72C to perform distributed Raman amplification for wavelength multiplexed light transmitted in the transmission line 3 such that an OSNR value of the second multiplexed light after wavelength conversion has allowable reception quality in the third wavelength conversion unit 14C on the basis of a monitoring result of the third monitor 72A. Note that the allowable reception quality is, for example, reception quality allowable on an optical reception unit 19 side in consideration of wavelength arrangement of an input of the transmission line 3, stimulated Raman scattering (SRS) on the transmission line 3, a noise index (NF) associated with wavelength conversion, and the like.

As a result, an optical reception unit 19B, which receives and demultiplexes the second multiplexed light, can secure stable reception quality.

The control unit 72D causes the Raman excitation light source 72C to perform distributed Raman amplification for wavelength multiplexed light transmitted in the transmission line 3 such that an OSNR value of the first multiplexed light after wavelength conversion has allowable reception quality in the wavelength demultiplexing unit 17 on the basis of a monitoring result of the fourth monitor 72B. As a result, an optical reception unit 19A, which receives and demultiplexes the first multiplexed light, can secure stable reception quality.

The second transmission device 2B according to the twenty-second embodiment has caused the Raman excitation light source 72C to perform distributed Raman amplification for the wavelength multiplexed light transmitted in the transmission line 3 such that the OSNR value of the second multiplexed light after wavelength conversion has allowable reception quality in the third wavelength conversion unit 14C. As a result, the optical reception unit 19B can secure stable reception quality. Then, long-distance transmission can be realized between the first transmission device 2A and the second transmission device 2B.

The second transmission device 2B has caused the Raman excitation light source 72C to perform distributed Raman amplification for the wavelength multiplexed light transmitted in the transmission line 3 such that the OSNR value of the first multiplexed light after wavelength conversion has allowable reception quality in the wavelength demultiplexing unit 17. As a result, the optical reception unit 19A can secure stable reception quality.

Note that the second transmission device 2B has the third monitor 72A arranged between the third wavelength conversion unit 14C and the second optical amplification unit 13B. However, the third monitor 72A may be arranged, for example, between the wavelength demultiplexing unit 17 and the third wavelength conversion unit 14C, between the second optical amplification unit 13B and the second demultiplexing unit 18B, or in the third wavelength conversion unit 14C or in the wavelength demultiplexing unit 17.

The second transmission device 2B has the fourth monitor 72B arranged between the wavelength demultiplexing unit 17 and the first optical amplification unit 13A. However, the fourth monitor 72B may be arranged between the first optical amplification unit 13A and the first demultiplexing unit 18A, or in the wavelength demultiplexing unit 17.

Note that, in the transmission system 1B according to the third embodiment, a situation in which an unintended nonlinear phenomenon occurs on the transmission line 3 in the case where the residual excitation light of the first wavelength conversion unit 14A flows into the transmission line 3 as it is and the residual excitation light has high power is conceivable. Therefore, an embodiment for coping with such a situation will be described below as a twenty-third embodiment.

### [Twenty-third Embodiment]

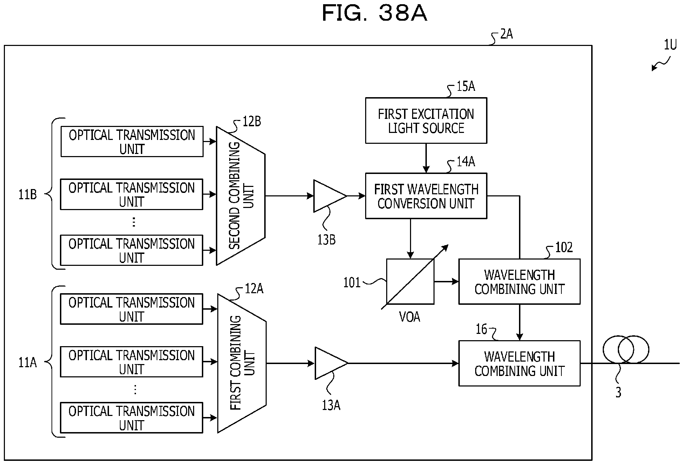

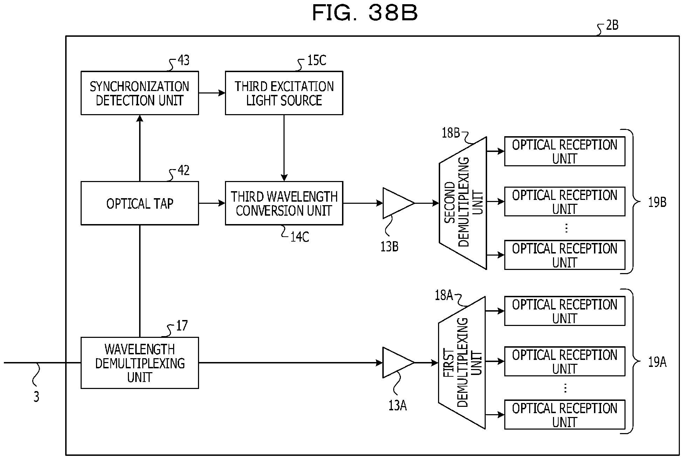

FIGs. 38A and 38B are explanatory diagrams illustrating an example of a transmission system 1U according to the twenty-third embodiment. Note that, for the sake of convenience of description, description of overlapping configurations and operations is omitted by providing the same reference numerals to the same configurations as those of the transmission system 1B of the third embodiment illustrated in FIG. 7.

A first transmission device 2A in the transmission system 1U illustrated in FIGs. 38A and 38B includes a variable optical attenuator (VOA) 101 and a wavelength combining unit 102.

The VOA 101 is a variable optical attenuator that attenuates power of residual excitation light from a first wavelength conversion unit 14A. The VOA 101 attenuates the power of the residual excitation light to such an extent that the nonlinear phenomenon does not affect the transmission line 3. The wavelength combining unit 102 is arranged between the first wavelength conversion unit 14A and a wavelength combining unit 16, and combines second multiplexed light from the first wavelength conversion unit 14A and the residual excitation light after attenuation from the VOA 101 and outputs the combined light to the wavelength combining unit 16.

In the transmission system 1U according to the twenty-third embodiment, the residual excitation light from the first wavelength conversion unit 14A is attenuated by the VOA 101. Therefore, even if the residual excitation light after attenuation flows through the transmission line 3, occurrence of the unintended nonlinear phenomenon on the transmission line 3 can be avoided.

Note that the first transmission device 1A of the transmission system 1C according to the fourth embodiment has used the excitation light from the first excitation light source 15A, for the first wavelength conversion unit 14A on the upstream side, and has further used the residual excitation light that is transmitted light of the first wavelength conversion unit 14A, for the seventh wavelength conversion unit 14G on the downstream side. Similarly, the second transmission device 2B has used the excitation light from the fifth excitation light source 15E, for the fifth wavelength conversion unit 14E on the downstream side, and has further used the residual excitation light that is transmitted light of the fifth wavelength conversion unit 14E, for the third wavelength conversion unit 14C on the upstream side. However, the first wavelength conversion unit 14A on the first transmission device 2A suppresses SBS of the excitation light by using excitation light after FM modulation from the first excitation light source 15A. Then, the third wavelength conversion unit 14C on the second transmission device 2B side needs to output the excitation light of FM modulation from the fifth excitation light source 15E to cancel wavelength variation (frequency variation) of the excitation light after FM modulation from the first excitation light source 15A. Similarly, the fifth wavelength conversion unit 14E on the second transmission device 2B side suppresses SBS of the excitation light by using excitation light after FM modulation from the fifth excitation light source 15E. Then, the seventh wavelength conversion unit 14G on the first transmission device 2A needs to output the excitation light of FM modulation from the fifth excitation light source 15E to cancel wavelength variation (frequency variation) of the excitation light after FM modulation from the fifth excitation light source 15E. However, in the case where the excitation light is shared on the upstream side and the downstream side, the phase of phase modulation (FM modulation) of the excitation light source 15 cannot be independently adjusted on the upstream side and the downstream side. Therefore, an embodiment for coping with such a situation will be described below as a twenty-fourth embodiment.

### [Twenty-fourth Embodiment]

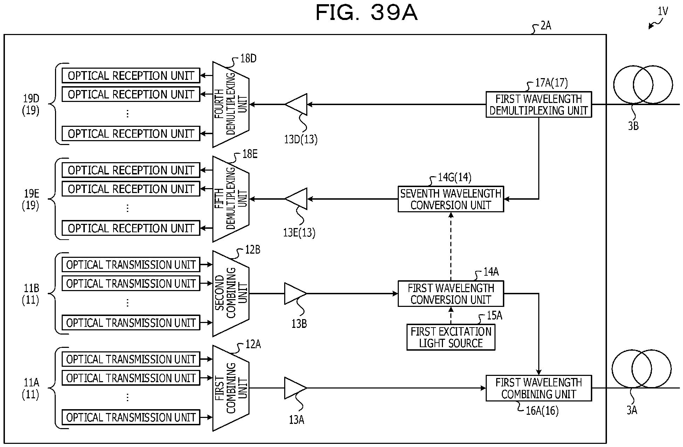

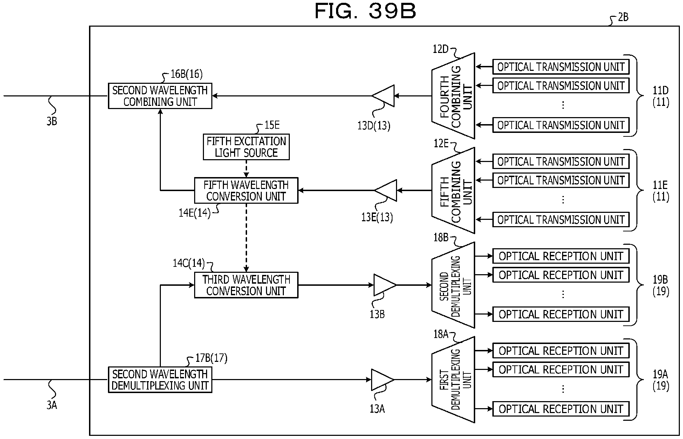

FIGs. 39A and 39B are explanatory diagrams illustrating an example of a transmission system 1V according to the twenty-fourth embodiment. Note that, for the sake of convenience of description, description of overlapping configurations and operations is omitted by providing the same reference numerals to the same configurations as those of the transmission system 1C of the fourth embodiment illustrated in FIGs. 8A and 8B.

The first wavelength conversion unit 14A and the seventh wavelength conversion unit 14G illustrated in FIGs. 39A and 39B are connected by a polarization maintaining fiber, and the residual excitation light that is transmitted light used in the first wavelength conversion unit 14A is input to the seventh wavelength conversion unit 14G.

The fifth wavelength conversion unit 14E and the third wavelength conversion unit 14C are connected by a polarization maintaining fiber, and the residual excitation light that is transmitted light used in the fifth wavelength conversion unit 14E is input to the third wavelength conversion unit 14C.

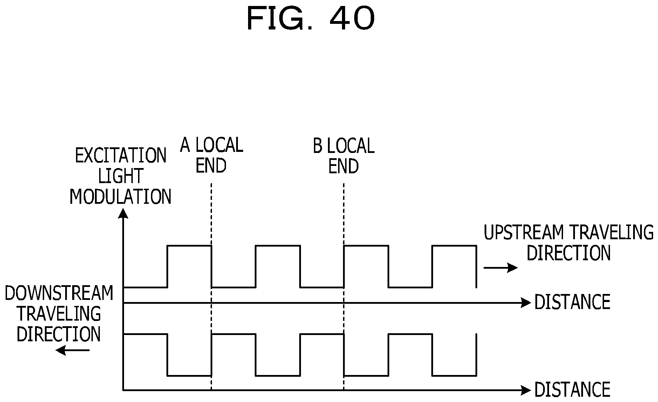

The period of phase modulation (FM modulation) is set to be a value obtained by dividing a delay time of the transmission line 3 by a number of (0.5 x integer multiple). Note that the delay time of the transmission line 3 is calculated from, for example, a delay of information transmission of OSC at the time of start-up. As a result, the output of the excitation light of the excitation light source 14 is as illustrated in FIG. 40. FIG. 40 is an explanatory diagram illustrating an example of the output of the excitation light.

That is, the first excitation light source 15A outputs the excitation light to input the residual excitation light that is transmitted light of the first wavelength conversion unit 14A to the seventh wavelength conversion unit 14G with the period illustrated in FIG. 40 in order to cancel the wavelength variation (frequency variation) of the excitation light after FM modulation from the fifth excitation light source 15E. As a result, the seventh wavelength conversion unit 14G can cancel the wavelength variation of the FM modulation of the fifth wavelength conversion unit 14E with the residual excitation light that is transmitted light reused in the first wavelength conversion unit 14A.

Further, the fifth excitation light source 15E outputs the residual excitation light to input the residual excitation light that is transmitted light of the fifth wavelength conversion unit 14E to the third wavelength conversion unit 14C with the period illustrated in FIG. 40 in order to cancel the wavelength variation (frequency variation) of the excitation light after FM modulation from the first excitation light source 15A. As a result, the third wavelength conversion unit 14C can cancel the wavelength variation of the FM modulation of the first wavelength conversion unit 14A with the residual excitation light that is transmitted light reused in the fifth wavelength conversion unit 14E.

In the above embodiments, the systems to convert the C-band multiplexed light into S-band or L-band light and transmit the converted light to the transmission line 3, using the C-band optical components, have been described. However, the present embodiments are also applicable to a system to convert S-band multiplexed light into C-band or L-band light and transmit the converted light to the transmission line 3, using the S-band optical components, or a system to convert L-band multiplexed light into C-band or S-band light and transmit the converted light to the transmission line 3, using the L-band optical components.

The C-band, S-band, and L-band wavelength ranges have been defined in the above embodiments, but the embodiments are not limited to these wavelength ranges and the ranges can be appropriately set and changed.

The wavelength conversion unit 14 (141, 142, or 143) incorporates the optical amplification unit 35 (90A or 97) for optically amplifying multiplexed light in units of wavelengths, but the optical amplification unit 35 may be provided outside the wavelength conversion unit 14, in other words, at an output stage of the wavelength conversion unit 14. In the example of FIG. 1, the optical amplification unit 35 may be arranged between the first wavelength conversion unit 14A and the wavelength combining unit 16.

Furthermore, although the cases of using the C band, S band, and L band have been illustrated in the above embodiments. However, the wavelength band is not limited to the C band, S band, and L band. For example, the present invention may be applied to an original (O) band (1260 nm to 1360 nm), an extended (E) band (1360 nm to 1460 nm), or a ultralong wavelength (U) band (1625 nm to 1675 nm), and the wavelength band can be appropriately changed.

Further, the example in which the transmission device 2 incorporates the optical transmission unit 11 or the optical reception unit 19 has been illustrated. However, the present invention is applicable to a case where the transmission device is externally connected with the optical transmission unit 11 or the optical reception unit 19. Further, the transmission device 2 has reused the excitation light of the excitation light source 15 as the excitation light of the optical components in the same device. However, the transmission path of the residual excitation light is not limited and is appropriately changeable.

Further, each illustrated configuration element of each unit is not necessarily physically configured as illustrated. That is, specific forms of separation and integration of the respective units are not limited to the illustrated forms, and all or some of the units may be functionally or physically separated and integrated in an arbitrary unit according to various loads, use situations, and the like.

Further, all or some of various processing functions executed in each device may be executed by a central processing unit (CPU) (or a microcomputer such as a micro processing unit (MPU) or a micro controller unit (MCU)). Alternatively, all or some of the various processing functions may of course be executed by a program analyzed and executed by a CPU (or a microcomputer such as an MPU or an MCU) or hardware using wired logic.

### REFERENCE SIGNS LIST

1: Transmission system
2: Transmission device
2A: First transmission device
2B: Second transmission device
3: Transmission line
12A: First combining unit
12B: Second combining unit
16: Wavelength combining unit
17: Wavelength demultiplexing unit
18A: First demultiplexing unit
18B: Second demultiplexing unit
14: Wavelength conversion unit
14A: First wavelength conversion unit
14C: Third wavelength conversion unit
14G: Seventh wavelength conversion unit
15: Excitation light source
15A: First excitation light source
15C: Third excitation light source
15G: Seventh excitation light source
33: Nonlinear optical medium
35: Optical amplification unit
41: Fourth optical amplification unit
61: Fifth optical amplification unit
62: Sixth optical amplification unit
63: Seventh optical amplification unit
64: Eighth optical amplification unit
65: Ninth optical amplification unit
66: Tenth optical amplification unit
90A: Optical amplification unit
97: Optical amplification unit

## Claims

1. A transmission device that transmits wavelength multiplexed light to a transmission line, the transmission device comprising:
a first multiplexing unit configured to multiplex light of a wavelength of a first wavelength band and output first multiplexed light;
a second multiplexing unit configured to multiplex the light of the wavelength of the first wavelength band and output second multiplexed light;
a wavelength conversion unit configured to convert the second multiplexed light into light of a wavelength of a second wavelength band different from the first wavelength band; and
a third multiplexing unit configured to multiplex the second multiplexed light converted to the light of the wavelength of the second wavelength band and the first multiplexed light and output the wavelength multiplexed light.

2. The transmission device according to claim 1, wherein
the wavelength conversion unit causes a nonlinear medium to propagate the second multiplexed light and excitation light to convert the second multiplexed light into the light of the wavelength of the second wavelength band.

3. The transmission device according to claim 1 or 2, further comprising:
an optical amplification unit configured to amplify the second multiplexed light converted to the light of the wavelength of the second wavelength band.

4. The transmission device according to claim 2, further comprising:
an optical amplification unit configured to amplify the second multiplexed light converted to the light of the wavelength of the second wavelength band, wherein
the optical amplification unit amplifies the second multiplexed light converted to the light of the wavelength of the second wavelength band, using the excitation light as an excitation light source.

5. The transmission device according to claim 3 or 4, wherein
the wavelength conversion unit causes the nonlinear medium to propagate the modulated excitation light.

6. The transmission device according to any one of claims 2 to 5, further comprising:
an adjustment unit configured to monitor an optical level of the second multiplexed light output from the wavelength conversion unit and adjust a power level of the excitation light on the basis of a monitoring result.

7. The transmission device according to any one of claims 2 to 5, further comprising:
an adjustment unit configured to monitor an optical level of the second multiplexed light output from the wavelength conversion unit and adjust the optical level of the second multiplexed light output from the wavelength conversion unit on the basis of a monitoring result.

8. The transmission device according to any one of claims 1 to 7, wherein a dispersion compensation unit is provided between the wavelength conversion unit and the third multiplexing unit or at a preceding stage of the wavelength conversion unit.

9. The transmission device according to any one of claims 1 to 8, further comprising:
a first separation unit configured to separate the wavelength multiplexed light received from the transmission line into the light of the wavelength of the first wavelength band and the light of the wavelength of the second wavelength band;
a second separation unit configured to separate the wavelength of the light of the wavelength of the first wavelength band;
a second wavelength conversion unit configured to convert the light of the wavelength of the second wavelength band separated by the first separation unit into the light of the wavelength of the first wavelength band; and
a third separation unit configured to separate the wavelength of the light converted to the light of the wavelength of the first wavelength band.

10. The transmission device according to claim 8, wherein
the second wavelength conversion unit causes the nonlinear medium to propagate the light of the wavelength of the second wavelength band separated by the first separation unit and the excitation light to convert the light of the wavelength of the second wavelength band into the light of the wavelength of the first wavelength band.

11. A transmission method of transmitting wavelength multiplexed light to a transmission line, the transmission method of executing processing of:
multiplexing light of a wavelength of a first wavelength band and outputting first multiplexed light;
multiplexing the light of the wavelength of the first wavelength band and outputting second multiplexed light;
converting the second multiplexed light into light of a wavelength of a second wavelength band different from the first wavelength band; and
multiplexing the second multiplexed light converted to the light of the wavelength of the second wavelength band and the first multiplexed light.

12. A transmission device that transmits wavelength multiplexed light to a transmission line, the transmission device comprising:
a wavelength conversion unit configured to convert first multiplexed light in which light of a wavelength of a first wavelength band is multiplexed into light of a wavelength of a second wavelength band different from the first wavelength band;
an optical amplification unit configured to amplify the first multiplexed light converted to the light of the wavelength of the second wavelength band; and
a multiplexing unit configured to multiplex the second multiplexed light in which the light of the wavelength of the first wavelength band is multiplexed and the amplified first multiplexed light and output the wavelength multiplexed light.

13. A transmission device comprising:
a first wavelength conversion unit configured to cause a nonlinear medium to propagate first multiplexed light in which light of a wavelength of a first wavelength band is multiplexed and excitation light to convert the first multiplexed light into light of a wavelength of a second wavelength band different from the first wavelength band;
a multiplexing unit configured to multiplex second multiplexed light in which the first multiplexed light converted to the light of the wavelength of the second wavelength band and the light of the wavelength of the first wavelength band are multiplexed, and output wavelength multiplexed light to a transmission line;
a separation unit configured to separate the wavelength multiplexed light from the transmission line into the light of the wavelength of the first wavelength band and the light of the wavelength of the second wavelength band; and
a second wavelength conversion unit configured to cause the nonlinear medium to propagate the light of the wavelength of the second wavelength band separated by the separation unit and the excitation light to convert the light of the wavelength of the second wavelength band into the light of the wavelength of the first wavelength band.

14. The transmission device according to claim 13, wherein
the second wavelength conversion unit causes the nonlinear medium to propagate residual excitation light of the excitation light used in the first wavelength conversion unit and the light of the wavelength of the second wavelength band to convert the light of the wavelength of the second wavelength band into the light of the wavelength of the first wavelength band.
